# EUROPEAN PATENT APPLICATION

(11) **EP 4 796 516 A1**
(43) Date of publication of application: **26.08.2026**
(21) Application number: 24878843.2
(22) Date of filing: 30.09.2024
(51) Int. Cl.: C04B 35/82, B32B 1/08

(54) **CARBON/CARBON COMPOSITE MATERIAL AND PREPARATION METHOD THEREFOR AND USE THEREOF**

(30) Priority: 18.10.2023 CN 202311348673; 18.10.2023 CN 202311353293; 18.10.2023 CN 202311353253; 18.10.2023 CN 202311348666
(71) Applicant: China Petroleum & Chemical Corporation, Beijing 100728 (CN); Sinopec (Shanghai) Research Institute of Petrochemical Technology Co., Ltd., Shanghai 201208 (CN)
(72) Inventor: SHEN, Zhigang, Shanghai 201208 (CN); WANG, Hetuan, Shanghai 201208 (CN); MA, Lei, Shanghai 201208 (CN); XIAO, Shijie, Shanghai 201208 (CN); LI, Lei, Shanghai 201208 (CN); CHEN, Liang, Shanghai 201208 (CN); ZHOU, Qinzhuo, Shanghai 201208 (CN); DENG, Mingyu, Shanghai 201208 (CN); WANG, Jianning, Shanghai 201208 (CN)
(74) Representative: karo IP
(86) International application number: PCT/CN2024/122624
(87) International publication number: WO 2025/082199

(57) **Abstract**

The present invention relates to a technical field of new material, disclosing a carbon-carbon composite material and a preparation process and use thereof. The carbon-carbon composite material comprises a carbon fiber, a plurality of graphitized lamellae wrapping the carbon fiber, and non-carbon nanoparticles dispersed between the graphitized lamellae. The carbon-carbon composite material of the present invention comprises, on a microscopic scale, graphitized lamellae having a concentric circle structure. By means of this specific structure, the carbon fiber and the peripheral graphitized lamellae having the non-carbon nanoparticles dispersed therebetween, as well as the graphitized lamellae themselves, can be firmly bound, so that the obtained carbon-carbon composite material has better dimensional stability and electrical conductivity. Meanwhile, the carbon-carbon composite material of the present invention can have improved corrosion resistance, ablation resistance, temperature-resistance and sealing performance and/or electrochemical activity.

## Description

### Technical field

The present invention relates to a technical field of new material, and specifically to a carbon-carbon composite material and a preparation process and use thereof.

### Background art

Carbon fibers are widely used in fields such as aerospace, automotive industry, construction energy, and sports equipment. Carbon fibers can be graphitized at temperatures from 2200°C to 3000°C to obtain graphite fibers. Graphite fibers not only have a high carbon content but also a high tensile modulus. Graphite fibers have a low thermal expansion coefficient, good thermal stability, and dimensional stability, and thus can be used to manufacture composite materials with high stiffness, low thickness, and dimensional stability, and can further be used in the aerospace field based on spacecraft.

Carbon-carbon (C/C) composite materials refer to multiphase structural materials using carbon fibers or their fabrics as a reinforcement phase, and pyrolytic carbon obtained by chemical vapor infiltration or resin carbon/pitch carbon from liquid impregnation-carbonization as a matrix (see CN112125690A); they have extremely high specific strength and specific modulus, can be used above 2000°C in an inert atmosphere, without any degradation in mechanical properties. C/C composite materials do not melt or burn and ablate uniformly, so they can be used in the manufacture of space shuttle components. C/C composite materials are excellent thermally conductive materials, have a low thermal expansion coefficient, and are friction-resistant and wear-resistant, so they can be used in aircraft braking devices. C/C composite materials are prepared by densifying a preform made from carbon fiber filaments or a green body made from chopped carbon fibers composited with a matrix carbon through liquid phase impregnation and carbonization, chemical vapor deposition, or chemical vapor infiltration.

The manufacture of carbon-carbon composite materials employs high-temperature techniques (including high-temperature equipment), wherein the key steps in continuous graphitization are the suppression and control of the graphite heating element, as well as the high-temperature oxidation and high-temperature evaporation (volatilization) of the running fibers. Carbon-carbon composite materials form carbon materials with different macroscopic morphologies due to different forms of stacking/arrangement in three-dimensional space. These carbon materials with different morphologies are composed of microcrystals having different sizes and diversified orientation and stacking states.

CN111807853A discloses a preparation process and use of a carbon-carbon composite material component, which is made by compositing three types of carbons of a carbon fiber, a vapor-deposited carbon, and an impregnated carbon, maintaining good mechanical, thermal, and wear-resistant properties at high temperatures, reducing costs by 50%, and enabling mass production. CN112125690A uses flake graphite and UV silicone to prepare a mixed colloid and fills it between mixed layers of carbon fibers and glass fibers to prepare an intermediate, and further prepares a carbon-carbon composite material by hot-press curing, and drying the intermediate. The composite material has the advantages of high tensile strength and high elasticity. CN112679950A discloses a process for preparing a flexible carbon-carbon composite material, comprising spreading a thermosetting resin film on the surface of a carbon fiber cloth, followed by hot-press lamination and curing, and then carbonization in an inert atmosphere. The process has the advantages of short processing time, simple process, no need for high-pressure equipment, and high production efficiency, and enables industrial production. CN113175565A discloses a thin-walled high-strength carbon-carbon composite material pipe and a preparation process thereof. The pipe comprises a pipe body formed by laminating carbon cloth, a binder, and a CVD layer, and a dense layer located on the inner surface of the pipe body. The pipe has the advantage of reducing wall thickness while maintaining strength. CN113636854A discloses a carbon-carbon composite material with deposited carbon nanotubes, wherein chopped carbon fibers are embedded in a carbon matrix and carbon fibers, and carbon nanotubes are deposited between them. The obtained product can significantly improve the mechanical properties and oxidation resistance of the carbon-carbon composite material. CN113636855A discloses an internal oxidation-resistant carbon-carbon composite material, comprising a carbon matrix and carbon fiber reinforcements, silicon carbide, zirconium oxide, and aluminum oxide distributed within the carbon matrix. The composite material can improve the ablation resistance and service life of the composite material. CN113683437A discloses a carbon-carbon composite material containing refractory metals, comprising a carbon matrix and carbon fiber reinforcements, metal zirconium-fullerene composite nanopowders, and silicon-rich silicon carbide distributed within the carbon matrix. The composite material can improve the ablation resistance, service life, and oxidation resistance of the composite material. CN113636855A and CN113683437A relate to ablation-resistant carbon-carbon composite materials and preparation processs thereof, the processs comprising 7 different operating steps. Thus the preparation process is relatively complicated, the experimental conditions used are relatively harsh, and the process is very time-consuming. CN115180969A discloses a high thermal conductivity carbon-carbon composite material and a preparation process thereof, comprising producing graphene/AIN reinforcements on the surface and interior of a carbon fiber needle-punched preform by electrophoresis, performing impregnation treatment in a benzoxazine resin, thermal curing, and atmospheric pressure carbonization. The obtained carbon-carbon composite material has excellent mechanical properties and good thermal conductivity. CN115231941A relates to a carbon-carbon composite material for use in an ultra-high temperature environment and a preparation process thereof. The carbon-carbon composite material comprises a carbon matrix, carbon fiber reinforcements, ultra-high temperature ceramics, and carbon nanotubes, and has excellent mechanical properties, good high-temperature ablation resistance, and thermal conductivity. CN213628313U discloses a carbon-carbon composite material sheet, which has the advantages of low density, high strength, high thermal conductivity, low expansion coefficient, good frictional properties, good thermal impact resistance, and high dimensional stability.

It can be seen that the research work on most of the current produced C/C composite materials mainly focuses on the improvement and optimization of their preparation processes. However, the morphology of the existing C/C composite material finished products is relatively single, the main constituent element is only carbon, the structure of the C/C composite material is not firm, and the corrosion resistance, ablation resistance, temperature-resistance and sealing performance, and/or electrochemical activity are poor.

### Summary of the invention

An object of the present invention is to provide a carbon-carbon composite material and a preparation process and use thereof, in order to overcome at least one problem existing in the prior art described above.

In a first aspect, the present invention relates to a carbon-carbon composite material, wherein the carbon-carbon composite material comprises a carbon fiber, a plurality of graphitized lamellae wrapping the carbon fiber, and non-carbon nanoparticles dispersed between the graphitized lamellae, wherein the non-carbon nanoparticles comprise one or more non-carbon elements selected from elements of Group IA, Group IIA, Group IIIA, Group IVA, Group VA, Group IVB, Group VB, Group VIB, Group VIII, Group IB and Group IIB of the periodic table, and the total content of the non-carbon elements ranges from 5 wt.% to 60 wt.%, preferably from 5 wt.% to 55 wt.%, and more preferably from 8 wt.% to 50 wt.%, based on the carbon-carbon composite material. In some embodiments, the non-carbon nanoparticle has a particle size ranging from 1 nm to 1000 nm, preferably from 10 nm to 500 nm, more preferably from 30 nm to 250 nm, and even more preferably from 50 nm to 150 nm; and/or the graphitized lamella has a thickness ranging from 1 nm to 1000 nm, preferably from 10 nm to 500 nm, more preferably from 30 nm to 250 nm, and even more preferably from 50 nm to 150 nm.

By means of the above specific structure, the non-carbon nanoparticles can be uniformly or substantially uniformly distributed in the composite carbon material, located between the graphitized lamellae, and the carbon fiber and the peripheral graphitized lamellae having the non-carbon nanoparticles dispersed therebetween, as well as the graphitized lamellae themselves, can be firmly bound, so that the obtained carbon-carbon composite material has better dimensional stability and/or electrical conductivity. In some embodiments, preferably, the carbon-carbon composite material of the present invention has improved corrosion resistance, ablation resistance, temperature-resistance and sealing performance, and/or electrochemical activity.

In a second aspect, the present invention provides a process for preparing a carbon-carbon composite material, preferably a process for preparing the carbon-carbon composite material of the present invention, the process comprising: reacting a carbon fiber, a carbon source, and a non-carbon element source at a temperature ranging from 1500°C to 3500°C under an inert atmosphere; preferably, the volumetric flow of the inert atmosphere ranges from 20 mL/min to 1800 mL/min; and/or preferably, the reaction time ranges from 12 to 720 hours.

The process for preparing a carbon-carbon composite material according to the present invention is simple to operate; the carbon-carbon composite material can be obtained by directly subjecting a carbon fiber, a carbon source, and a non-carbon element source to reaction under the conditions.

In a third aspect, the present invention provides a carbon-carbon composite material prepared according to the process of the second aspect.

The carbon-carbon composite material of the present invention has such a concentric circle structure: with a single carbon fiber as the axis, a plurality of graphitized lamellae wrapping the same, and non-carbon nanoparticles uniformly or substantially uniformly distributed in the composite carbon material and located between the graphitized lamellae. Such a carbon-carbon composite material has a firmly bound internal structure, good dimensional stability, and preferably, has improved corrosion resistance, ablation resistance, temperature-resistance and sealing performance, and/or electrochemical activity.

In a fourth aspect, the present invention provides the use of the carbon-carbon composite material according to the first aspect or the third aspect as an electrically conductive corrosion-resistant material and/or an ablation-resistant material and/or a temperature-resistant and sealing material and/or a graphite electrode material.

### Brief description of the drawings

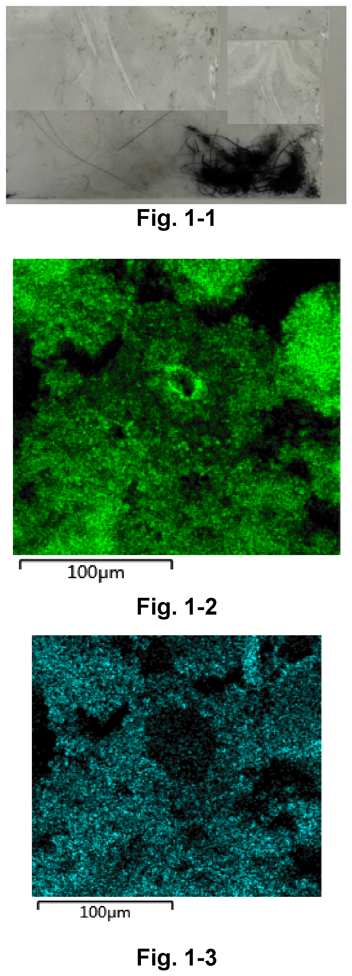

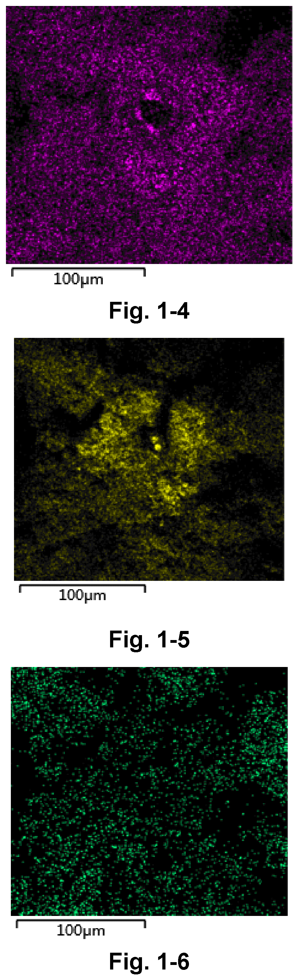

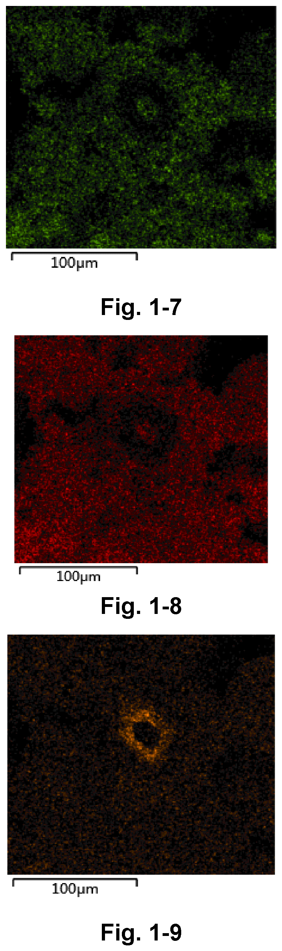

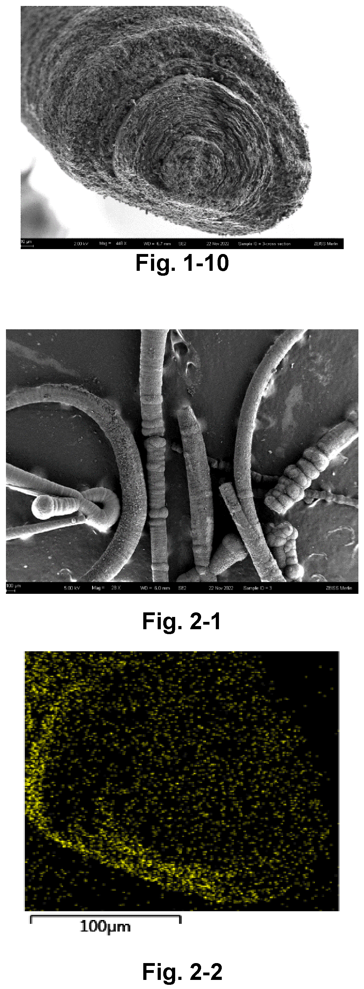

Figure 1-1 is a macroscopic morphology image of the carbon-carbon composite material of Example 1-1.
Figures 1-2 to 1-9 are energy dispersive spectrums of Na, K, Ni, Li, Pt, Fe, Cr, and V elements inside the carbon-carbon composite material of Example 1-1, respectively.
Figure 1-10 is a cross-sectional morphology image of the carbon-carbon composite material of Example 1-1.
Figure 2-1 is a microscopic morphology image of the carbon-carbon composite material of Example 2-1.
Figures 2-2 to 2-5 are elemental energy dispersive spectrums of Cu, Fe, Al, and Ti inside the carbon-carbon composite material of Example 2-1, respectively.

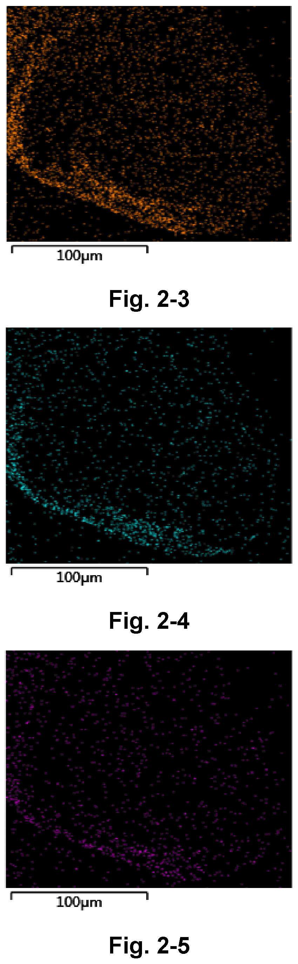

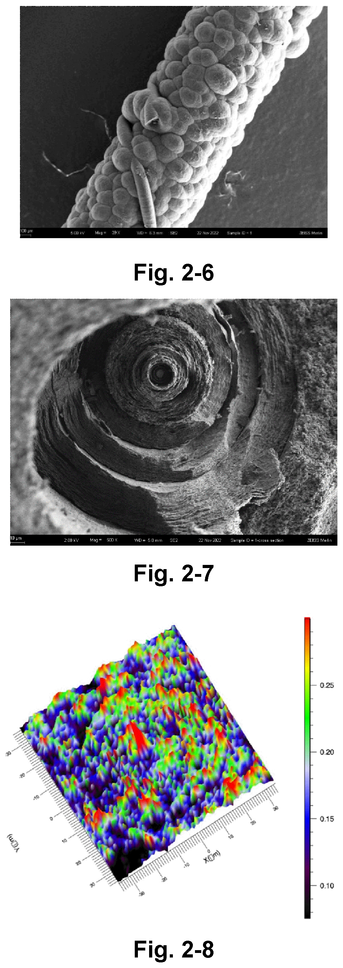

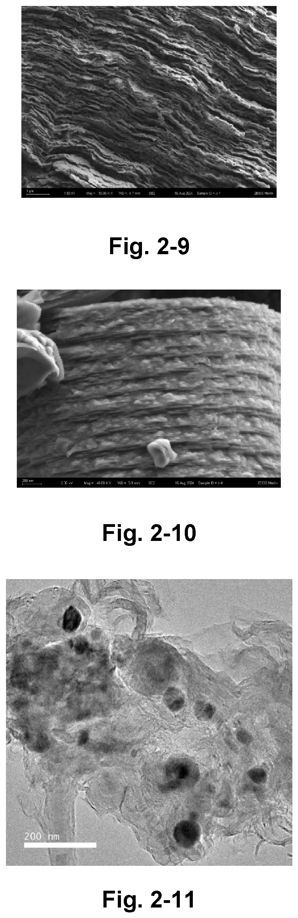

Figure 2-6 is a surface morphology image of the carbon-carbon composite material of Example 2-1.
Figure 2-7 is a cross-sectional morphology image of the carbon-carbon composite material of Example 2-1.
Figure 2-8 is a 3D Raman spectrum of the cross-section of the carbon-carbon composite material of Example 2-1 (where the Z direction is the intensity ratio of the D band to the G band).
Figure 2-9 is a partially enlarged image of the cross-section of the carbon-carbon composite material of Example 2-1.
Figure 2-10 is a stacking image of graphitized lamellae on the cross-section of the carbon-carbon composite material of Example 2-1.
Figure 2-11 is a distribution image of graphitized lamellae and non-carbon nanoparticles of the carbon-carbon composite material of Example 2-1.

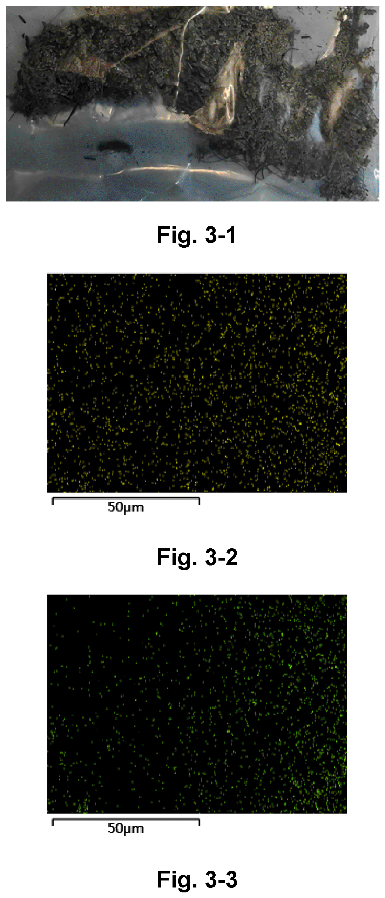

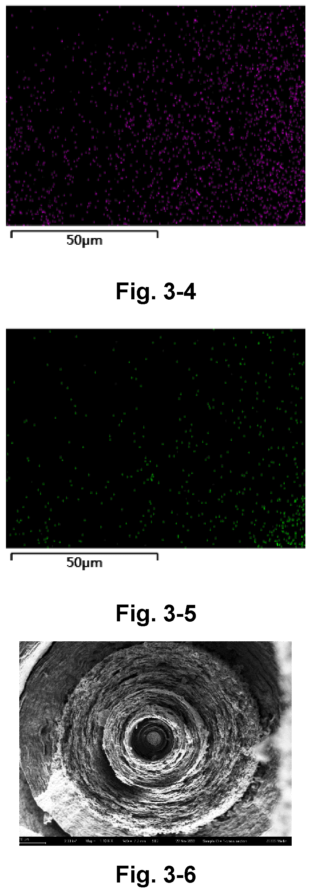

Figure 3-1 is a macroscopic morphology image of the carbon-carbon composite material prepared in Example 3-1.
Figures 3-2 to 3-5 are elemental energy dispersive spectrums of Si, Zr, Mg, and Ni inside the carbon-carbon composite material prepared in Example 3-1, respectively.
Figure 3-6 is a cross-sectional morphology image of the carbon-carbon composite material prepared in Example 3-1.

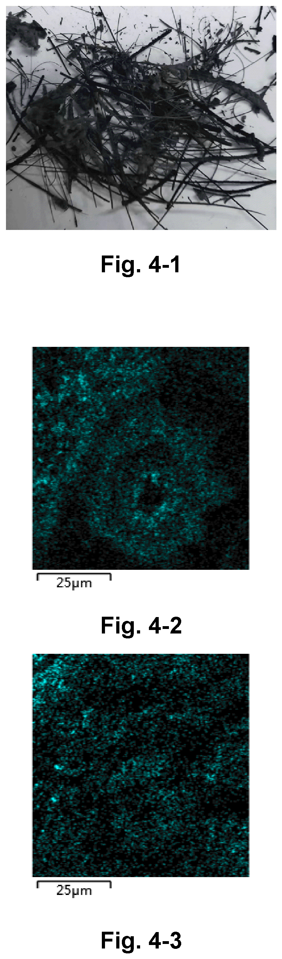

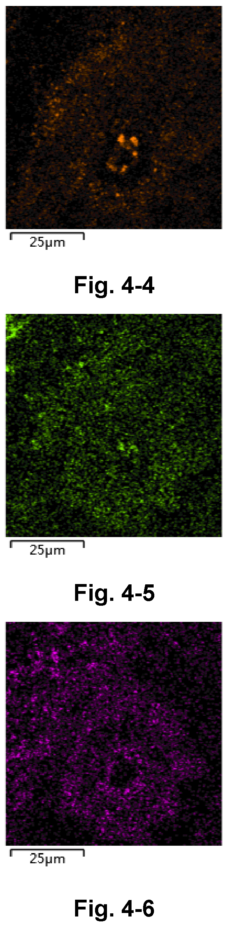

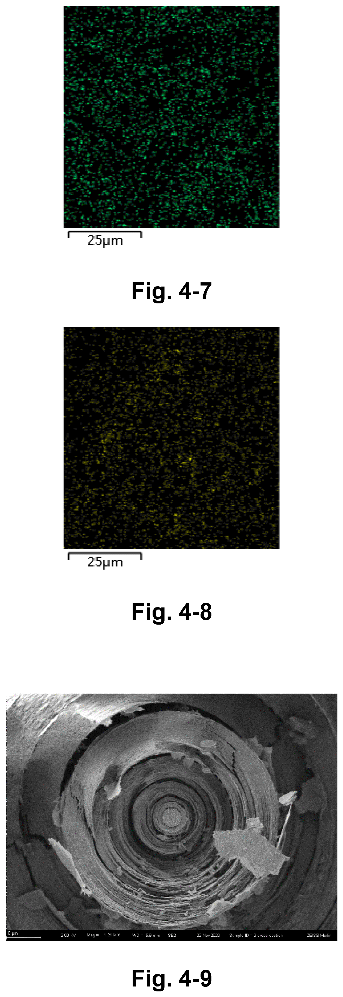

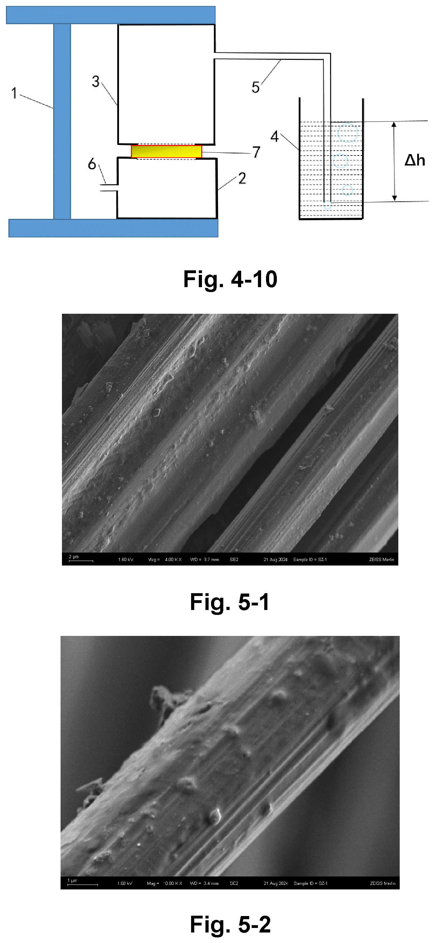

Figure 4-1 is a macroscopic morphology image of the carbon-carbon composite material of Example 4-1.
Figures 4-2 to 4-8 are elemental energy dispersive spectrums of Fe, Al, P, Pb, Co, Ca, and In inside the carbon-carbon composite material of Example 4-1, respectively.
Figure 4-9 is a cross-sectional morphology image of the carbon-carbon composite material of Example 4-1.
Figure 4-10 is a diagram of the device for testing sealing performance according to the present invention.

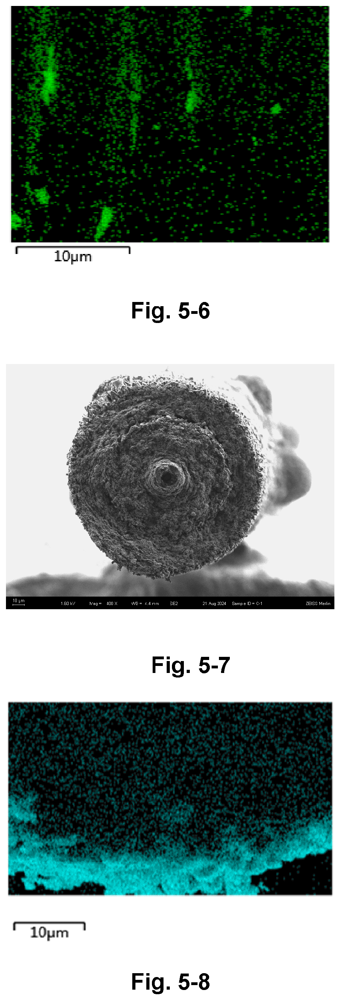

Figure 5-1 is a surface morphology image of carbon fiber tow A wrapped with epoxy resin containing non-carbon elements in Comparative Example 5-1, at 4000x magnification.
Figure 5-2 is a surface morphology image of carbon fiber tow A wrapped with epoxy resin containing non-carbon elements in Comparative Example 5-1, at 10000x magnification.

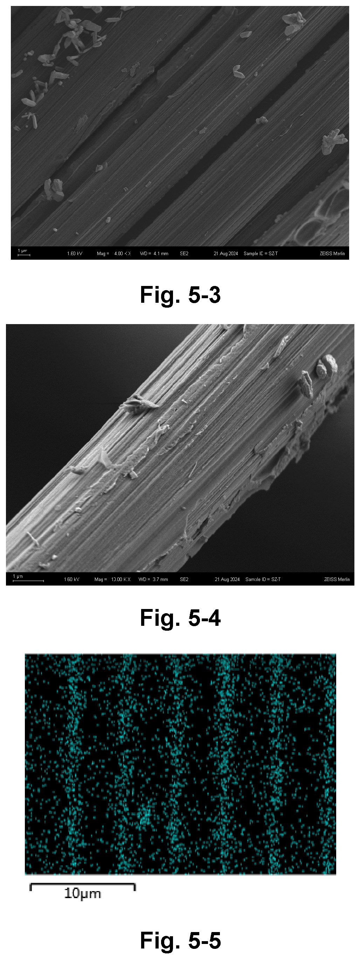

Figure 5-3 is a surface morphology image of carbon fiber tow B obtained after high-temperature graphitization treatment of carbon fiber tow A in Comparative Example 5-1, at 4000x magnification.
Figure 5-4 is a surface morphology image of carbon fiber tow B obtained after high-temperature graphitization treatment of carbon fiber tow A in Comparative Example 5-1, at 10000x magnification.
Figure 5-5 is an elemental energy dispersive spectrum of Zn on the surface of carbon fiber tow A wrapped with epoxy resin containing non-carbon elements in Comparative Example 5-1.
Figure 5-6 is an elemental energy dispersive spectrum of Zn on the surface of carbon fiber tow B obtained after high-temperature graphitization treatment of carbon fiber tow A in Comparative Example 5-1.
Figure 5-7 is a cross-sectional morphology image of carbon fiber tow B obtained after high-temperature graphitization treatment of carbon fiber tow A in Comparative Example 5-2, at 400x magnification.
Figure 5-8 is an elemental energy dispersive spectrum of Zn on the outermost part of the cross-section of carbon fiber tow B obtained after high-temperature graphitization treatment of carbon fiber tow A in Comparative Example 5-2.

### Detailed Description

The present application will be further described in detail below through specific embodiments. It should be understood that the specific embodiments described herein are only used to illustrate and explain the present application, but do not limit the present invention in any way.

The articles "a" and "an", as used herein, mean one or more when applied to any feature in embodiments of the present invention described in the specification and claims. The use of "a" and "an" does not limit the meaning to a single feature unless such a limit is specifically stated.

Any specific value (including the endpoints of a numerical range) disclosed herein is not limited to the exact value, but should be understood as also encompassing values close to the exact value, for example, all possible values within the range of ±5% of the exact value. Furthermore, for a disclosed numerical range, one or more new numerical ranges can be obtained by arbitrarily combination between the endpoints of the range, between the endpoints and specific point values within the range, and between the specific point values, and these new numerical ranges should also be considered as specifically disclosed herein.

Unless expressly stated otherwise, throughout the description and claims, the term "comprising" or its variations such as "including" or "containing" shall be understood to include the stated elements or components, but not exclude other elements or components. In addition, the term "comprising" or its variations such as "including" or "containing" may also exclude other elements or components, i.e., the case of "consisting of..." or "consisting essentially of...".

Unless otherwise defined, every term used herein has the same meaning as commonly understood by a person skilled in the art. If a term is defined herein and the definition differs from the common understanding in the art, the definition herein shall prevail.

According to the present invention, the term "nanoparticle" means that the particle is nano-sized, specifically, the largest dimension of the particle ranges from about 1 nm to about 1000 nm.

According to the present invention, the term "carbon fiber" has the meaning commonly known in the art and refers to a high-temperature resistant fiber with high strength and high modulus, whose carbon content is 85% or more, or 90% or more, or even composed substantially entirely of carbon atoms. Preferably, the carbon fiber is a fiber with a tensile strength of more than 3.0 GPa, a tensile modulus of more than 230 GPa, and an elongation at break of more than 1.0%.

According to the present invention, the term "single carbon fiber" refers to a carbon fiber in one single item.

According to the present invention, the term "graphitized lamellae" refers to layered graphite sheets wrapping a carbon fiber, wherein each graphitized lamella can have a thickness ranging from 1 nm to 1000 nm, preferably from 5 nm to 800 nm, and more preferably from 5 nm to 500 nm.

According to the present invention, the term "carbonized resin" refers to a product obtained by treating a resin product at a high temperature under an inert gas flow or under vacuum. Under appropriate heat treatment conditions, a carbide with a completely graphitic structure can be obtained. The resin for preparing the carbonized resin can be a thermoplastic resin or a thermosetting resin.

According to the present invention, the term "chopped carbon fiber" refers to a chopped fiber obtained by chopping a carbon fiber filament.

In a first aspect, the present invention provides a carbon-carbon composite material, wherein the carbon-carbon composite material comprises a carbon fiber, a plurality of graphitized lamellae wrapping the carbon fiber, and non-carbon nanoparticles dispersed between the graphitized lamellae. According to the present invention, the non-carbon nanoparticles may comprise one or more non-carbon elements selected from elements of Group IA, Group IIA, Group IIIA, Group IVA, Group VA, Group IVB, Group VB, Group VIB, Group VIII, Group IB and Group IIB of the periodic table. According to the present invention, the total content of the non-carbon elements can range from 5 wt.% to 60 wt.%, preferably from 5 wt.% to 55 wt.%, and more preferably from 8 wt.% to 50 wt.%, based on the carbon-carbon composite material. In some embodiments, the total content of the non-carbon elements can be 5 wt.%, 6 wt.%, 7 wt.%, 8 wt.%, 9 wt.%, 10 wt.%, 11 wt.%, 12 wt.%, 13 wt.%, 14 wt.%, 15 wt.%, 20 wt.%, 25 wt.%, 30 wt.%, 35 wt.%, 40 wt.%, 45 wt.%, 50 wt.%, 55 wt.%, 60 wt.%, or a range consisting of any two of the above values.

According to the present invention, the total content of carbon element can range from 40 wt.% to 95 wt.%, preferably from 45 wt.% to 92 wt.%, more preferably from 50 wt.% to 90 wt.%, and even more preferably from 55 wt.% to 90 wt.%, based on the carbon-carbon composite material. In some embodiments, the total content of carbon element can be 40 wt.%, 45 wt.%, 50 wt.%, 51 wt.%, 52 wt.%, 53 wt.%, 54 wt.%, 55 wt.%, 56 wt.%, 58 wt.%, 60 wt.%, 65 wt.%, 70 wt.%, 72 wt.%, 74 wt.%, 76 wt.%, 78 wt.%, 80 wt.%, 82 wt.%, 84 wt.%, 86 wt.%, 88 wt.%, 90 wt.%, 91 wt.%, 92 wt.%, 93 wt.%, 94 wt.%, 95 wt.%, or a range consisting of any two of the above values.

In the present invention, the total content of non-carbon elements refers to the sum of the weights of all said non-carbon elements, based on the carbon-carbon composite material, calculated as elements. In the present invention, the types and contents of non-carbon elements in the carbon-carbon composite material are determined by inductively coupled plasma optical emission spectrometry.

Due to the small size of the nano-sized non-carbon particles and the comparable weight ratio between the non-carbon particles and the graphitized lamellae, the non-carbon nanoparticles are uniformly or substantially uniformly dispersed in the carbon-carbon composite material, located between adjacent graphitized lamellae.

According to the present invention, said "dispersed" means that the non-carbon nanoparticles are uniformly or substantially uniformly distributed in the carbon-carbon composite material, located between adjacent graphitized lamellae.

Said "uniformly distributed" means that non-carbon nanoparticles are present between 80% or more, preferably 85% or more, preferably 90% or more, and more preferably 95% or more of the graphitized lamellae, and the number and total area of non-carbon nanoparticles present per square micrometer of the graphitized lamella surface are substantially the same. Said "substantially the same" means a difference of not more than 20%, preferably not more than 15%, preferably not more than 10%, preferably not more than 5%, and more preferably not more than 1%.

By means of the above specific structure, the carbon fiber and the peripheral graphitized lamellae having the non-carbon nanoparticles dispersed therebetween, as well as the graphitized lamellae themselves, can be firmly bound, so that the obtained carbon-carbon composite material has better dimensional stability and/or electrical conductivity. Preferably, the carbon-carbon composite material of the present invention has improved corrosion resistance, ablation resistance, temperature-resistance and sealing performance, and/or electrochemical activity.

In the present invention, in some embodiments, non-carbon nanoparticles are also present between the graphitized lamellae and the carbon fiber.

In the present invention, preferably, the non-carbon nanoparticle has a particle size ranging from 1 nm to 1000 nm, preferably from 5 nm to 300 nm, and more preferably from 10 nm to 100 nm. In some embodiments, the non-carbon nanoparticle can have a particle size of 1 nm, 2 nm, 3 nm, 4 nm, 5 nm, 6 nm, 7 nm, 8 nm, 9 nm, 10 nm, 11 nm, 12 nm, 13 nm, 14 nm, 15 nm, 20 nm, 25 nm, 30 nm, 35 nm, 40 nm, 50 nm, 60 nm, 70 nm, 80 nm, 90 nm, 100 nm, 150 nm, 200 nm, 250 nm, 300 nm, 350 nm, 400 nm, 500 nm, or a range consisting of any two of the above values.

In the present invention, preferably, the graphitized lamella has a thickness ranging from 1 nm to 1000 nm, preferably from 3 nm to 300 nm, and more preferably from 5 nm to 100 nm. In some embodiments, each graphitized lamella can have a thickness of 3 nm, 4 nm, 5 nm, 6 nm, 7 nm, 8 nm, 9 nm, 10 nm, 15 nm, 20 nm, 25 nm, 30 nm, 35 nm, 40 nm, 45 nm, 50 nm, 55 nm, 60 nm, 65 nm, 70 nm, 80 nm, 90 nm, 100 nm, 150 nm, 200 nm, 250 nm, 300 nm, 400 nm, 500 nm, or a range consisting of any two of the above values.

In the present invention, preferably, in the Raman spectrum of the carbon-carbon composite material, the intensity ratio of the D band at 1350±2 cm⁻¹ to the G band at 1580±2 cm⁻¹ is in the range of (0.07-0.3) : 1. When the intensity ratio of the D band to the G band is within this range, the lattice defects of carbon atoms in the graphitized lamellae are fewer, and the electrical conductivity of the carbon-carbon composite material is higher.

In the present invention, preferably, in the Raman spectrum of the carbon-carbon composite material, the intensity ratio of the 2D band at 2699±2 cm⁻¹ to the G band at 1580±2 cm⁻¹ is in the range of (0.2-1) : 1, preferably (0.2-0.9) : 1. When the intensity ratio of the 2D band to the G band is within this range, the lattice defects of carbon atoms in the graphitized lamellae are fewer, each graphitized lamella has a perfect and regular structure, and the formed carbon-carbon composite material has good electrical conductivity.

According to the present invention, the diameter of the carbon fiber can be a conventional choice in the art. Preferably, the carbon fiber can have a diameter ranging from 4 µm to 8 µm, preferably from 4.5 µm to 7.5 µm. The carbon fiber can have a length ranging from 2 mm to 10 mm, preferably from 3 mm to 9 mm.

The length of the carbon fiber is comparable to the length of the carbon-carbon composite material.

In some embodiments, the carbon-carbon composite material can have a diameter ranging from 0.02 mm to 1 mm, preferably from 0.05 mm to 1 mm, more preferably from 0.1 mm to 0.3 mm; and/or a length ranging from 2 mm to 10 mm, preferably from 3 mm to 9 mm. In some embodiments, the carbon-carbon composite material can have a diameter of 0.02 mm, 0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.25 mm, 0.3 mm, 0.35 mm, 0.4 mm, 0.5 mm, 0.6 mm, 0.7 mm, 0.8 mm, 0.9 mm, 1 mm, or a range consisting of any two of the above values.

The volume ratio of the carbon fiber to the graphitized lamellae in the carbon-carbon composite material can be obtained from the ratio of the total thickness of the graphitized lamellae to the diameter of the core carbon fiber. In some embodiments, preferably, the ratio of the total thickness of the graphitized lamellae to the diameter of the core carbon fiber can be in a range of (1-100) : 1, preferably (5-100) : 1, more preferably (9-100) : 1, for example, the ratio of the total thickness of the graphitized lamellae to the diameter of the core carbon fiber can be 1:1, 2:1, 3:1, 4:1, 5:1, 6:1, 7:1, 8:1, 9:1, 10:1, 11:1, 12:1, 13:1, 14:1, 15:1, 20:1, 25:1, 30:1, 40:1, 50:1, 60:1, 70:1, 80:1, 85:1, 90:1, 95:1, 98:1, 100:1, or a range consisting of any two of the above values. When the ratio of the total thickness of the graphitized lamellae to the diameter of the core carbon fiber is limited within this range, the non-carbon nanoparticles can be uniformly distributed in the carbon-carbon composite material, located between adjacent graphitized lamellae, and the carbon fiber and the peripheral graphitized lamellae having the non-carbon nanoparticles dispersed therebetween, as well as the graphitized lamellae themselves, can be firmly bound, so that the obtained carbon-carbon composite material has better dimensional stability and/or electrical conductivity, and preferably has improved corrosion resistance, ablation resistance, temperature-resistance and sealing performance, and/or electrochemical activity.

In some embodiments, preferably, the graphitized lamellae of the present invention can further constitute layer regions with greater thickness. The thickness of such layer regions with greater thickness can range from 1 µm to 100 µm, preferably 5 µm to 50 µm. The "layer region with greater thickness" means that under a scanning electron microscope, there is a boundary/gap between two such layer regions with greater thickness.

In some embodiments, more preferably, the number of said layer regions with greater thickness ranges from 3 to 20 layers, preferably from 5 to 18 layers. Within such a range, the corrosion resistance, ablation resistance, temperature-resistance and sealing performance, and/or electrochemical activity of the carbon-carbon composite material can be improved. If it is less than 3 layers, the corrosion resistance, ablation resistance, temperature-resistance and sealing performance, and electrochemical activity of the carbon-carbon composite material may be poor.

In some embodiments, even more preferably, the thickness of the layer regions with greater thickness gradually increases from the inside to the outside, thereby improving the stability of the concentric circle structure of the carbon-carbon composite material.

According to the present invention, the appearance morphology of the carbon-carbon composite material is not limited and can present various forms, such as fibrous or rod-shaped. Specifically, the carbon-carbon composite material is substantially straight, or has a certain degree of curvature, presenting a curved shape. Preferably, the carbon-carbon composite material is straight and fibrous or curved and fibrous.

According to the present invention, in some embodiments, the carbon-carbon composite material further comprises carbon particles. In some preferred embodiments, carbon particles may also be present on the surface of the outermost graphitized lamella of the carbon-carbon composite material. Preferably, the carbon particle has a particle size ranging from 0.02 mm to 2.00 mm. The carbon particle can have a diameter of 0.02 mm, 0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.25 mm, 0.3 mm, 0.35 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, or a range consisting of any two of the above values.

In the present invention, "carbon particles" refer to particles consisting of or consisting essentially of carbon. The carbon particle can have a carbon content of at least 90 wt.%, at least 95 wt.%, at least 96 wt.%, at least 97 wt.%, at least 98 wt.%, at least 99 wt.%, or at least 99.9 wt.%, and at most 100 wt.%.

In the present invention, "non-carbon nanoparticles" refer to nanoparticles other than carbon particles. In the present invention, the non-carbon nanoparticles comprise compounds of said non-carbon elements.

According to the present invention, due to the presence of non-carbon nanoparticles and/or said carbon particles, the diameters of different parts of the carbon-carbon composite material may be unequal. In some embodiments, for example, at least a portion of the surface of the carbon-carbon composite material has a bamboo-like shape and/or a protruding shape.

Further, the carbon-carbon composite material according to the present invention may be gray or black.

In order to further enhance the properties of the carbon-carbon composite material, such as electrical conductivity and electrochemical activity, the type and the content of each element in the carbon-carbon composite material can be selected and limited.

In some preferred instances, the carbon-carbon composite material comprises elements from at least two groups, preferably at least three groups, more preferably four groups of Group IA, Group VB, Group VIB and Group VIII. Preferably, based on the weight of the carbon-carbon composite material, the carbon-carbon composite material comprises 40 wt.% to 95 wt.%, preferably 45 wt.% to 92 wt.%, and more preferably 50 wt.% to 87 wt.% of carbon element. Preferably, based on the weight of the carbon-carbon composite material, the carbon-carbon composite material comprises 1.6 wt.% to 52 wt.%, preferably 3 wt.% to 45 wt.%, and more preferably 5.2 wt.% to 30.6 wt.% of a Group IA element. Preferably, based on the weight of the carbon-carbon composite material, the carbon-carbon composite material comprises 0.05 wt.% to 5 wt.%, preferably 0.1 wt.% to 1 wt.%, and more preferably 0.1 wt.% to 0.4 wt.% of a Group VB element. Preferably, based on the weight of the carbon-carbon composite material, the carbon-carbon composite material comprises 0.05 wt.% to 5 wt.%, preferably 0.05 wt.% to 3 wt.%, and more preferably 0.1 wt.% to 0.7 wt.% of a Group VIB element. Preferably, based on the weight of the carbon-carbon composite material, the carbon-carbon composite material comprises 1 wt.% to 33 wt.%, preferably 2.2 wt.% to 25 wt.%, and more preferably 3.9 wt.% to 14.1 wt.% of a Group VIII element. More preferably, the carbon-carbon composite material, in addition to carbon element, further comprises at least one of sodium element, potassium element and lithium element; at least one of nickel element, platinum element and iron element; chromium element; and vanadium element. Even more preferably, the carbon-carbon composite material, in addition to carbon element, further comprises sodium element, potassium element, lithium element, nickel element, platinum element, iron element, chromium element and vanadium element.

In this case, preferably, based on the weight of the carbon-carbon composite material, the carbon-carbon composite material comprises 40 wt.% to 95 wt.%, preferably 45 wt.% to 92 wt.%, and more preferably 50 wt.% to 87 wt.% of carbon element. Preferably, based on the weight of the carbon-carbon composite material, the carbon-carbon composite material comprises 0.7 wt.% to 18 wt.%, preferably 1 wt.% to 15 wt.%, and more preferably 2.2 wt.% to 12.2 wt.% of sodium element. Preferably, based on the weight of the carbon-carbon composite material, the carbon-carbon composite material comprises 0.5 wt.% to 18 wt.%, 1 wt.% to 15 wt.%, and more preferably 1.5 wt.% to 10.7 wt.% of potassium element. Preferably, based on the weight of the carbon-carbon composite material, the carbon-carbon composite material comprises 0.5 wt.% to 15 wt.%, preferably 1 wt.% to 10 wt.%, and more preferably 1.2 wt.% to 6.3 wt.% of nickel element. Preferably, based on the weight of the carbon-carbon composite material, the carbon-carbon composite material comprises 0.4 wt.% to 13 wt.%, preferably 1 wt.% to 10 wt.%, and more preferably 1.5 wt.% to 8.1 wt.% of lithium element. Preferably, based on the weight of the carbon-carbon composite material, the carbon-carbon composite material comprises 1 wt.% to 10 wt.%, preferably 1 wt.% to 5 wt.%, and more preferably 1 wt.% to 4.7 wt.% of platinum element. Preferably, based on the weight of the carbon-carbon composite material, the carbon-carbon composite material comprises 0.7 wt.% to 8 wt.%, preferably 1 wt.% to 5 wt.%, and more preferably 1.1 wt.% to 4.2 wt.% of iron element. Preferably, based on the weight of the carbon-carbon composite material, the carbon-carbon composite material comprises 0.05 wt.% to 3 wt.%, preferably 0.1 wt.% to 1 wt.%, and more preferably 0.1 wt.% to 0.7 wt.% of chromium element. Preferably, based on the weight of the carbon-carbon composite material, the carbon-carbon composite material comprises 0.1 wt.% to 1 wt.%, preferably 0.1 wt.% to 0.5 wt.%, and more preferably 0.1 wt.% to 0.4 wt.% of vanadium element.

When the carbon-carbon composite material, in addition to carbon element, further comprises sodium element, potassium element, nickel element, lithium element, platinum element, iron element, chromium element and vanadium element, especially when the contents of these elements are within the above ranges, the electrode material comprising the carbon-carbon composite material can have excellent electrical conductivity and improved electrochemical activity, and facilitate the electrocatalytic reaction of the electrode.

The carbon-carbon composite material according to the present invention may also contain small amounts of other non-carbon elements, such as zinc, manganese, silver, barium, copper, magnesium, lead and strontium, the content of each metal element being less than 0.001 wt.%.

The carbon-carbon composite material of the present invention may contain, in addition to the aforementioned elements, elements such as oxygen, nitrogen, sulfur, halogens, etc. The metal elements in the carbon-carbon composite material exist in the form of compounds, preferably in the forms of oxides, peroxides, hydroxides, nitrides, oxynitrides, sulfides, oxysulfides, halides, or salts with the metals as the cations.

In some preferred instances, the carbon-carbon composite material comprises elements from at least two groups, preferably at least three groups, more preferably four groups of Group IIIA, Group IVB, Group VIII and Group IB. Preferably, the carbon-carbon composite material comprises elements of Group IIIA, Group VIII and Group IB and optionally a Group IVB element. More preferably, the carbon-carbon composite material, in addition to carbon element, further comprises copper element, iron element, aluminum element and optionally a Group IVB element, wherein the Group IVB element is preferably titanium and/or zirconium.

By combining these specific non-carbon elements, the corrosion resistance of the carbon-carbon composite material can be improved. Furthermore, when the non-carbon nanoparticles simultaneously contain copper element, iron element, aluminum element, and titanium element, the corrosion resistance of the carbon-carbon composite material can be further improved.

In order to ensure that the carbon-carbon composite material has both excellent electrical conductivity and excellent corrosion resistance, the type and proportion of each element in the carbon-carbon composite material can be appropriately controlled. Preferably, based on the weight of the carbon-carbon composite material, the carbon-carbon composite material comprises 40 wt.% to 95 wt.%, preferably 50 wt.% to 90 wt.%, more preferably 60 wt.% to 71 wt.% of carbon element. Preferably, based on the weight of the carbon-carbon composite material, the carbon-carbon composite material comprises 1 wt.% to 15 wt.%, preferably 5 wt.% to 9.5 wt.%, and more preferably 6.8 wt.% to 9 wt.% of copper element. Preferably, based on the weight of the carbon-carbon composite material, the carbon-carbon composite material comprises 0.5 wt.% to 10 wt.%, preferably 1 wt.% to 7.7 wt.%, and more preferably 4.1 wt.% to 6 wt.% of iron element. Preferably, based on the weight of the carbon-carbon composite material, the carbon-carbon composite material comprises 0.1 wt.% to 5 wt.%, preferably 0.1 wt.% to 2.5 wt.%, and more preferably 2.2 wt.% to 4.1 wt.% of aluminum element. Preferably, based on the weight of the carbon-carbon composite material, the carbon-carbon composite material comprises 0 wt.% to 1 wt.%, preferably 0.05 wt.% to 0.5 wt.%, and more preferably 0.2 wt.% to 1.2 wt.% of a Group IVB metal element.

In addition, the carbon-carbon composite material according to the present invention may also contain small amounts of other non-carbon elements, such as zinc, manganese, silver, barium, lithium, magnesium, lead and strontium, the content of each metal element being less than 0.001 wt.%.

The carbon-carbon composite material of the present invention may contain, in addition to the aforementioned elements, elements such as oxygen, nitrogen, sulfur, halogens, etc. The metal elements in the carbon-carbon composite material exist in the form of compounds, preferably in the forms of oxides, peroxides, hydroxides, nitrides, oxynitrides, sulfides, oxysulfides, halides, or salts with the metals as the cations.

In some preferred instances, the carbon-carbon composite material comprises elements from at least two groups, preferably at least three groups, more preferably four groups of Group IIA, Group IVA, Group IIB, Group IVB, and Group VIII. Preferably, the carbon-carbon composite material comprises elements of Group IIA, Group IVA, Group IVB, optionally Group VIII and optionally Group IIB. More preferably, the carbon-carbon composite material, in addition to carbon element, further comprises silicon element, zirconium element, magnesium element, optionally a Group VIII element and optionally a Group IIB element, wherein the Group VIII element is preferably nickel and/or cobalt, preferably nickel, and the Group IIB element is zinc.

By combining these specific non-carbon elements, the ablation resistance of the carbon-carbon composite material can be improved.

Furthermore, when the non-carbon nanoparticles contain a silicon element, a zirconium element, a magnesium element, optionally a Group VIII element and optionally a Group IIB element, the ablation resistance of the carbon-carbon composite material can be further improved.

In order to ensure that the carbon-carbon composite material has both excellent electrical conductivity and excellent ablation resistance, the type and proportion of each element in the carbon-carbon composite material can be appropriately controlled. Preferably, based on the weight of the carbon-carbon composite material, the carbon-carbon composite material comprises 40 wt.% to 90 wt.%, preferably 50 wt.% to 83 wt.%, and more preferably 55 wt.% to 74 wt.% of carbon element. Preferably, based on the weight of the carbon-carbon composite material, the carbon-carbon composite material comprises 1 wt.% to 10 wt.%, preferably 3 wt.% to 10 wt.%, and more preferably 6 wt.% to 9.3 wt.% of silicon element. Preferably, based on the weight of the carbon-carbon composite material, the carbon-carbon composite material comprises 1 wt.% to 10 wt.%, preferably 2.2 wt.% to 8 wt.%, and more preferably 5 wt.% to 7.2 wt.% of zirconium element. Preferably, based on the weight of the carbon-carbon composite material, the carbon-carbon composite material comprises 0.5 wt.% to 5 wt.%, preferably 1 wt.% to 4.5 wt.%, and more preferably 1.3 wt.% to 3 wt.% of magnesium element. Preferably, based on the weight of the carbon-carbon composite material, the carbon-carbon composite material comprises 0 wt.% to 1 wt.%, preferably 0.2 wt.% to 1 wt.%, and more preferably 0.3 wt.% to 0.8 wt.% of a Group VIII element.

In addition, the carbon-carbon composite material according to the present invention may also contain small amounts of other non-carbon elements, such as zinc, manganese, silver, barium, copper, lithium, lead and strontium, the content of each metal element being less than 0.001 wt.%.

The carbon-carbon composite material of the present invention may contain, in addition to the aforementioned elements, elements such as oxygen, nitrogen, sulfur, halogens, etc. The metal elements in the carbon-carbon composite material exist in the form of compounds, preferably in the forms of oxides, peroxides, hydroxides, nitrides, oxynitrides, sulfides, oxysulfides, halides, or salts with the metals as the cations.

In some preferred instances, the carbon-carbon composite material comprises elements from at least two groups, preferably at least three groups, more preferably at least four groups, even more preferably five groups of Group IIA, Group IIIA, Group IVA, Group VA and Group VIII. Preferably, the carbon-carbon composite material comprises elements of Group IIIA, Group IVA, Group VA, Group VIII and optionally Group IIA. More preferably, the carbon-carbon composite material, in addition to carbon element, further comprises iron element, aluminum element, phosphorus element, lead element, cobalt element, optionally a Group IIA element and optionally indium element, wherein the Group IIA element is selected from one or more of calcium, strontium and barium, preferably calcium.

By combining these specific non-carbon elements, the high-temperature resistance and sealing performance of the carbon-carbon composite material can be improved.

Furthermore, when the non-carbon nanoparticles contain elements of Group IIIA, Group IVA, Group VA, Group VIII and optionally Group IIA, the high-temperature resistance and sealing performance of the carbon-carbon composite material can be further improved.

In order to ensure that the carbon-carbon composite material has both excellent electrical conductivity and excellent high-temperature resistance and sealing performance, the type and proportion of each element in the carbon-carbon composite material can be appropriately controlled. Preferably, based on the weight of the carbon-carbon composite material, the carbon-carbon composite material comprises 40 wt.% to 95 wt.%, preferably 50 wt.% to 90 wt.%, and more preferably 56 wt.% to 80 wt.% of carbon element. Preferably, based on the weight of the carbon-carbon composite material, the carbon-carbon composite material comprises 0.5 wt.% to 10 wt.%, preferably 3 wt.% to 9 wt.%, and more preferably 5 wt.% to 8 wt.% of iron element. Preferably, based on the weight of the carbon-carbon composite material, the carbon-carbon composite material comprises 0.5 wt.% to 10 wt.%, preferably 3.2 wt.% to 8 wt.%, and more preferably 4 wt.% to 7.2 wt.% of aluminum element. Preferably, based on the weight of the carbon-carbon composite material, the carbon-carbon composite material comprises 0.2 wt.% to 5 wt.%, preferably 0.8 wt.% to 4.7 wt.%, and more preferably 1 wt.% to 3.5 wt.% of a phosphorus element. Preferably, based on the weight of the carbon-carbon composite material, the carbon-carbon composite material comprises 0.1 wt.% to 5 wt.%, preferably 0.2 wt.% to 4.4 wt.%, and more preferably 1 wt.% to 3.5 wt.% of lead element. Preferably, based on the weight of the carbon-carbon composite material, the carbon-carbon composite material comprises 0.2 wt.% to 5 wt.%, preferably 0.5 wt.% to 3.5 wt.%, and more preferably 0.6 wt.% to 4.6 wt.% of cobalt element. Preferably, based on the weight of the carbon-carbon composite material, the carbon-carbon composite material comprises 0 wt.% to 1 wt.%, preferably 0.1 wt.% to 0.9 wt.%, and more preferably 0.2 wt.% to 0.8 wt.% of a Group IIA element. Preferably, based on the weight of the carbon-carbon composite material, the carbon-carbon composite material comprises 0 wt.% to 1 wt.%, preferably 0.1 wt.% to 0.9 wt.%, and more preferably 0.2 wt.% to 0.8 wt.% of indium element.

In addition, the carbon-carbon composite material according to the present invention may also contain small amounts of other non-carbon elements, such as zinc, manganese, silver, barium, copper, lithium, magnesium, lead and strontium, the total content of each metal element being less than 0.001 wt.%.

The carbon-carbon composite material of the present invention may contain, in addition to the aforementioned elements, elements such as oxygen, nitrogen, sulfur, halogens, etc. The metal elements in the carbon-carbon composite material exist in the form of compounds, preferably in the forms of oxides, peroxides, hydroxides, nitrides, oxynitrides, sulfides, oxysulfides, halides, or salts with the metals as the cations.

In a second aspect, the present invention provides a process for preparing a carbon-carbon composite material, preferably provides a process for preparing the carbon-carbon composite material of the present invention, the process comprising: reacting a carbon fiber (preferably a chopped carbon fiber), a carbon source, and a non-carbon element source at a temperature ranging from 1500°C to 3500°C under an inert atmosphere. In some embodiments, preferably, the volumetric flow of the inert atmosphere can range from 20 mL/min to 1800 mL/min.

In the process according to the present invention, the carbon source is used to form graphitized lamellae wrapping the carbon fiber, and the non-carbon element source is used to generate the aforementioned non-carbon nanoparticles.

The process according to the present invention is simple to operate, as long as the carbon fiber, the carbon source, and the non-carbon element source are placed under the above conditions for reaction.

According to the present invention, in some preferred embodiments, the non-carbon element source, the carbon source, and the carbon fiber are placed separately (i.e., not mixed or in contact with each other) under the above conditions to obtain the carbon-carbon composite material of the present invention. In some embodiments, the non-carbon element source, the carbon source, and the carbon fiber can be placed separately in a reactor, where an inert atmosphere is applied, and the temperature is raised as required to perform reaction for a desirable period of time to obtain the carbon-carbon composite material. When more than one non-carbon element source is used, the different non-carbon element sources are also placed separately from each other.

According to the present invention, the reaction is carried out at a temperature above the melting point and/or volatilization point of the carbon source and the non-carbon element sources.

Preferably, the reaction temperature ranges from 1500°C to 3000°C, preferably from 1500°C to 2800°C.

In some embodiments, the reaction temperature can be 1500°C, 1800°C, 2000°C, 2200°C, 2500°C, 2800°C, 3000°C, 3200°C, 3500°C, or a range consisting of any two of the above values.

According to the present invention, if the reaction temperature is too low, it is impossible to form graphitized lamellae with a concentric circle structure outside the carbon fiber, so that the non-carbon nanoparticles are unable to adhere in large quantities and uniformly to the surface of the graphitized lamellae and disperse between the graphitized lamellae. For example, it can lead to poor corrosion resistance, ablation resistance, temperature-resistance and sealing performance, and/or electrochemical activity of the prepared carbon-carbon composite material. If the reaction temperature is too high, the growth rate of the graphitized lamellae is much greater than the adhesion rate of the non-carbon nanoparticles, leading to uneven distribution of non-carbon nanoparticles between the graphitized lamellae, and also poor corrosion resistance, ablation resistance, temperature-resistance and sealing performance, and/or electrochemical activity of the prepared carbon-carbon composite material.

In the present invention, the inert atmosphere is flowing. In the present invention, preferably, the volumetric flow of the inert atmosphere of the reaction can range from 20 mL/min to 1800 mL/min, for example from 50 mL/min to 500 mL/min, preferably from 100 mL/min to 300 mL/min. In the present invention, the flow rate of the inert atmosphere (inert gas) (i.e., the ratio of volumetric flow to the internal volume of the reactor) can range from 0.35 h⁻¹ to 32 h⁻¹, preferably from 0.89 h⁻¹ to 8.9 h⁻¹, more preferably from 1.78 h⁻¹ to 5.3 h⁻¹. For example, in some embodiments, the flow rate of the inert atmosphere can be 0.3 h⁻¹, 0.4 h⁻¹, 0.5 h⁻¹, 0.6 h⁻¹, 0.7 h⁻¹, 0.8 h⁻¹, 0.9 h⁻¹, 1 h⁻¹, 1.1 h⁻¹, 1.2 h⁻¹, 1.3 h⁻¹, 1.4 h⁻¹, 1.5 h⁻¹, 1.6 h⁻¹, 1.7 h⁻¹, 1.8 h⁻¹, 1.9 h⁻¹, 2 h⁻¹, 2.5 h⁻¹, 3 h⁻¹, 3.5 h⁻¹, 4 h⁻¹, 4.5 h⁻¹, 5 h⁻¹, 5.1 h⁻¹, 5.2 h⁻¹, 5.3 h⁻¹, 5.4 h⁻¹, 5.5 h⁻¹, 6 h⁻¹, 6.5 h⁻¹, 7 h⁻¹, 7.5 h⁻¹, 8 h⁻¹, 8.5 h⁻¹, 9 h⁻¹, 9.5 h⁻¹, 10 h⁻¹, 15 h⁻¹, 20 h⁻¹, 25 h⁻¹, 30 h⁻¹, or a range consisting of any two of the above values. In the present invention, the ratio of the volumetric flow of the inert atmosphere (inert gas) to the total weight of the carbon fiber, the carbon source and the non-carbon element source can range from 0.04 L/(g·h) to 3.6 L/(g·h), preferably from 0.1 L/(g·h) to 1 L/(g·h), more preferably from 0.2 L/(g·h) to 0.6 L/(g·h). For example, in some embodiments, the ratio of the volumetric flow of the inert atmosphere (inert gas) to the total weight of the carbon fiber, the carbon source and the non-carbon element source can be 0.03 L/(g·h), 0.04 L/(g·h), 0.05 L/(g·h), 0.06 L/(g·h), 0.07 L/(g·h), 0.08 L/(g·h), 0.09 L/(g·h), 0.1 L/(g·h), 0.15 L/(g·h), 0.2 L/(g·h), 0.25 L/(g·h), 0.3 L/(g·h), 0.35 L/(g·h), 0.4 L/(g·h), 0.45 L/(g·h), 0.5 L/(g·h), 0.55 L/(g·h), 0.6 L/(g·h), 0.65 L/(g·h), 0.7 L/(g·h), 0.75 L/(g·h), 0.8 L/(g·h), 0.85 L/(g·h), 0.9 L/(g·h), 0.95 L/(g·h), 1.0 L/(g·h), 1.1 L/(g·h), 1.2 L/(g·h), 1.3 L/(g·h), 1.4 L/(g·h), 1.5 L/(g·h), 1.6 L/(g·h), 1.7 L/(g·h), 1.8 L/(g·h), 1.9 L/(g·h), 2.0 L/(g·h), 2.2 L/(g·h), 2.4 L/(g·h), 2.6 L/(g·h), 2.8 L/(g·h), 3.0 L/(g·h), 3.3 L/(g·h), 3.6 L/(g·h), or a range consisting of any two of the above values.

If the volumetric flow of the inert atmosphere is too high, a microenvironment for the stable growth of graphitized lamellae cannot be obtained, the non-carbon nanoparticles cannot adhere to the surface of the carbon fiber or graphite lamellae, and the non-carbon nanoparticles cannot be uniformly distributed in the composite carbon material, located between the graphitized lamellae.

In the present invention, preferably, the inert atmosphere can be nitrogen and/or a noble gas; wherein the purity of nitrogen and noble gas is preferably greater than 99.9 vol%. The noble gas can be selected from helium (He), neon (Ne), argon (Ar), krypton (Kr), xenon (Xe), or any combination thereof. The oxygen content in the inert atmosphere is preferably less than 50 ppm. In the present invention, the reaction is carried out under a slight positive pressure (i.e., slightly higher than ambient pressure). In some embodiments, preferably, during the reaction, the pressure of the inert atmosphere can be 10 Pa to 20 Pa higher than ambient pressure.

In the present invention, if there is no inert atmosphere for protection during the reaction, a carbon-carbon composite material comprising a carbon fiber and a plurality of graphitized lamellae wrapping the carbon fiber, and non-carbon nanoparticles dispersed therebetween cannot be obtained.

In the present invention, preferably, the reaction time can range from12 to 720 hours, preferably from 24 to 120 hours. For example, the reaction time can be 24 hours, 48 hours, 72 hours, 80 hours, 100 hours, 120 hours, 240 hours, 480 hours, 720 hours, or a range consisting of any two of the above values.

In the present invention, the carbon source can be a carbonized resin and/or graphite, preferably graphite. More preferably, the carbon source is amorphous graphite. The carbon source can have a carbon content of 80 wt.% or higher, preferably 85 wt.% or higher, more preferably 90 wt.% or higher, for example, it can be in a range from 80 wt.% to 100 wt.%, or from 85 wt.% to 99.9 wt.%. According to the present invention, the carbon source can be commercially available or prepared by conventional methods in the art.

The carbonized resin is preferably a resin-type carbide with a rich pore structure formed after high-temperature carbonization of a resin. The carbonized resin can have a carbon content of 80 wt.% or higher, preferably 85 wt.% or higher, more preferably 90 wt.% or higher, for example, it can be in a range from 80 wt.% to 100 wt.%, or from 85 wt.% to 99.9 wt.%. The carbonized resin can have a carbon content of at least 90 wt.%, at least 95 wt.%, at least 96 wt.%, at least 97 wt.%, at least 98 wt.%, at least 99 wt.%, or at least 99.9 wt.%, and at most 100 wt.%. The carbonized resin can be formed by high-temperature carbonization of a thermoplastic resin or a thermosetting resin. Thermoplastic resins are preferably subjected to infusibilization treatment by processes such as heating, and irradiation with high-energy rays. Most thermosetting resins do not require infusibilization treatment. The resins can be used alone or as a mixture.

According to the present invention, in some embodiments, the carbonized resin can be derived from, for example, polyphenylene ether, polyvinyl alcohol, polyacrylonitrile, phenolic resin, fully aromatic polyester, furan resin, polyester resin, alkyd resin, melamine resin, ureaformaldehyde resin, polyimide resin, diallyl phthalate resin, lignin resin, and/or polyurethane resin, etc.

According to the present invention, the carbon fiber can be a chopped carbon fiber. According to the present invention, preferably, the chopped carbon fiber can have a length ranging from 0.1 mm to 10 mm, and their carbon content preferably range from 85 wt.% to 95 wt.%.

According to the present invention, the non-carbon element source is a compound containing a non-carbon element, and the compound can be, for example, an oxide, a peroxide, a hydroxide, a nitride, an oxynitride, a sulfide, an oxysulfide, a halide, or a salt with the metal as the cation, etc.

According to the present invention, preferably, the chopped carbon fiber has a specification ranging from 12 K to 320 K, preferably from 12 K to 48 K. The "K" number here represents the number of filaments contained in one carbon fiber tow. For example, 1K means that one carbon fiber tow contains 1000 filaments.

According to the present invention, the reaction can be carried out in a conventionally used high-temperature furnace. In some embodiments, specifically, isostatic pressing graphite or highly oriented graphite is used as the heating element inside the high-temperature furnace.

Preferably, the high-temperature furnace is connected to an exhaust gas recovery system through a pipeline, and a valve is provided on the pipeline connecting the high-temperature furnace and the exhaust gas recovery system. In some embodiments, the pipeline can have an inner diameter rangring from 5 mm to 20 mm. Along the gas flow direction, a filter screen is provided prior to the valve. The selection of the pipeline, the filter screen and the valve meets temperature resistance requirements. In some embodiments, preferably, the weight ratio of the non-carbon element source, the carbon source, and the carbon fiber can be in a range of (20-100) : (30-200) : 1, preferably (30-70) : (50-150) : 1.

In some embodiments, preferably, the non-carbon element source comprises a Group IA element source, a Group VB element source, a Group VIB element source, and a Group VIII element source. Preferably, the weight ratio of the Group IA element source, the Group VB element source, the Group VIB element source, and the Group VIII element source is in a range of (50-500) : 1 : (3-10) : (30-350). More preferably, the non-carbon element source comprises a sodium source, a potassium source, a nickel source, a lithium source, a platinum source, an iron source, a chromium source, and a vanadium source. Preferably, the weight ratio of the sodium source, the potassium source, the nickel source, the lithium source, the platinum source, the iron source, the chromium source, and the vanadium source is in a range of (20-180) : (20-180) : (20-150) : (10-100) : (10-100) : (5-80) : (3-10) : 1. Even more preferably, the sodium source is selected from one or more of Na₂CO₃, NaHCO₃, NaNO₃, NaCl and NaF. Even more preferably, the potassium source is selected from one or more of KCl, K₂CO₃, KF and KOH. Even more preferably, the nickel source is selected from one or more of NiO, Ni(OH)₂, NiF₂ and NiCl₂. Even more preferably, the lithium source is selected from one or more of LiF, Li₂O, LiOH and LiCl. Even more preferably, the platinum source is selected from one or more of PtO, PtO₂ and Pt(OH)₂. Even more preferably, the iron source is selected from one or more of FeO, Fe₂O₃, Fe₃O₄, Fe(OH)₂, Fe(OH)₃, FeCl₂, FeCl₃ and FePO₄. Even more preferably, the chromium source is selected from one or more of CrO₃, Li₂CrO₄, K₂CrO₄ and BaCrO₄. Even more preferably, the vanadium source is selected from one or more of VO, V₂O₃, VO₂ and V₂O₅.

When the non-carbon element source simultaneously includes a Group IA element source, a Group VB element source, a Group VIB element source, and a Group VIII element, especially when the non-carbon element source simultaneously includes a sodium source, a potassium source, a nickel source, a lithium source, a platinum source, an iron source, a chromium source, and a vanadium source, it not only provides a carrier for the electrocatalytic reaction and a medium for charge transfer for the electrode material comprising the carbon-carbon composite material, but also the physical space effect caused by the non-carbon element particles facilitates the diffusion of electrochemical reactants and the discharge of products, thereby enabling the electrode material comprising the carbon-carbon composite material to have excellent electrical conductivity, improved electrochemical activity, and facilitating the electrocatalytic reaction of the electrode.

In some embodiments, preferably, the weight ratio of the non-carbon element source, the carbon source, and the carbon fiber can be in a range of (20-100) : (30-200) : 1, preferably (30-70) : (50-150) : 1. By appropriately controlling the weight ratio of the chopped carbon fiber, the carbon source, and the non-carbon element source, an appropriate ratio of carbon element content to non-carbon element content can be obtained, thereby forming a relatively large number of graphitized lamellae with a firm structure on the periphery of the carbon fiber, and obtaining a carbon-carbon composite material with excellent electrical conductivity and corrosion resistance. Preferably, the non-carbon element source comprises a copper source, an iron source, an aluminum source, and optionally a Group IVB element source, wherein the Group IVB element source is a titanium source and/or a zirconium source. More preferably, the weight ratio of the copper source, the iron source, the aluminum source, and the Group IVB element source is in a range of (10-100) : (5-10) : 1 : (0-50). Even more preferably, the copper source is selected from one or more of CuSO₄, CuO, CuCl₂ and Cu(OH)₂. Even more preferably, the iron source is selected from one or more of FeO, Fe₂O₃, Fe₃O₄, Fe(OH)₂, Fe(OH)₃, FeCl₂, FeCl₃ and FePO₄. Even more preferably, the aluminum source is selected from one or more of Al₂O₃, AlCl₃, Al₂(SO₄)₃, Al(OH)₃ and AlPO₄. Even more preferably, the titanium source is selected from one or more of TiF₄, TiF₃, TiCl₄, TiSO₄ and TiO₂. By controlling the types and proportions of each non-carbon element source, the carbon-carbon composite material can have both excellent electrical conductivity and excellent corrosion resistance.

In some embodiments, preferably, the weight ratio of the non-carbon element source, the carbon source, and the carbon fiber can be in a range of (20-100) : (40-200) : 1, preferably (30-70) : (50-150) : 1. Preferably, the non-carbon element source comprises a silicon source, a zirconium source, a magnesium source, optionally a Group VIII element and optionally a Group IIB element, wherein the Group VIII element is preferably nickel and/or cobalt, more preferably nickel, and the Group IIB element is zinc. More preferably, the weight ratio of the silicon source, the zirconium source, the magnesium source, the Group VIII element source, and the zinc source is in a range of (2-20) : (1-10) : 1 : (0-0.5) : (0-0.5). Even more preferably, the silicon source is selected from one or more of SiO₂, Na₂SiO₃, SiF₄ and SiCl₄. Even more preferably, the zirconium source is selected from one or more of Na₂ZrF₆, K₂ZrF₆ and ZrO₂. Even more preferably, the magnesium source is selected from one or more of MgSO₄, Mg(OH)₂ and MgCl₂. Even more preferably, the nickel source is selected from one or more of NiO, Ni(OH)₂, NiF₂ and NiCl₂. By controlling the type and the proportion of each non-carbon element source, the carbon-carbon composite material can have both excellent electrical conductivity and excellent ablation resistance.

In some embodiments, preferably, the non-carbon element source comprises a phosphorus source and a metal source of an iron source, an aluminum source, a lead source, a cobalt source, optionally a Group IIA element source and optionally an indium source, wherein the Group IIA element is selected from one or more of calcium, strontium and barium, preferably calcium. Preferably, the weight ratio of the metal source, the phosphorus source, the carbon source, and the carbon fiber is in a range of (20-100) : (3-20) : (30-200) : 1, preferably (30-70) : (5-15) : (50-150) : 1. More preferably, the weight ratio of the iron source, the aluminum source, the lead source, the cobalt source, the Group IIA element source, and the indium source is in a range of (0.8-4) : (1-4) : (0.3-1.5) : 1 : (0-1) : (0-0.5). Even more preferably, the iron source is selected from one or more of FeO, Fe₂O₃, Fe₃O₄, Fe(OH)₂, Fe(OH)₃, FeCl₂, FeCl₃ and FePO₄. Even more preferably, the aluminum source is selected from one or more of Al₂O₃, AlCl₃, Al₂(SO₄)₃, Al(OH)₃ and AlPO₄. Even more preferably, the lead source is selected from one or more of PbO, Pb₃O₄, PbO₂ and Pb₂O₃. Even more preferably, the cobalt source is selected from one or more of CoO, Co(OH)₂, CoCl₂ and CoSO₄. Even more preferably, the calcium source is selected from one or more of CaCl₂, CaO, Ca(OH)₂ and CaF₂. Even more preferably, the indium source is selected from one or more of In₂O₃, In(OH)₃ and InCl₃. Even more preferably, the phosphorus source is selected from one or more of FePO₄, AlPO₄, Al(PO₃)₃ and Ca₃(PO₄)₂.

By controlling the type and the proportion of each non-carbon element source, the carbon-carbon composite material can have both excellent electrical conductivity and excellent high-temperature resistance and sealing performance.

In a third aspect, the present invention provides a carbon-carbon composite material according to the first aspect or a carbon-carbon composite material prepared by the process according to the second aspect.

The carbon-carbon composite material has such a concentric circle structure: with a single carbon fiber as the axis, a plurality of graphitized lamellae wrapping the same, and non-carbon nanoparticles uniformly or substantially uniformly distributed in the carbon-carbon composite material, located between adjacent graphitized lamellae. Such a carbon-carbon composite material has a firmly bound internal structure, good dimensional stability, and preferably, has improved corrosion resistance, ablation resistance, temperature-resistance and sealing performance, and/or electrochemical activity.

In a fourth aspect, the present invention provides the use of the carbon-carbon composite material according to the above first aspect or the third aspect as an electrically conductive and corrosion-resistant material and/or an ablation-resistant material and/or a temperature-resistant sealing material and/or a graphite electrode material.

The carbon-carbon composite material according to the present invention can be used as a raw material for further processing. Processing methods include, but are not limited to, blending (extrusion or granulation), slivering, grinding (pulverization), and calcination. A person skilled in the art can select appropriate processing methods and conditions according to the specific circumstances and applications.

The present application relates to the following embodiments:
1-1. A carbon-carbon composite material, characterized in that the carbon-carbon composite material comprises a single carbon fiber and a plurality of graphitized lamellae wrapping the single carbon fiber, with nano-metal particles filled between any two adjacent layers of graphite lamellae,
   wherein the nano-metal particles contain metal elements of Group IA, Group VB, Group VIB, and Group VIII.
1-2. The carbon-carbon composite material according to the preceding item 1-1, characterized in that the carbon-carbon composite material contains 45 wt.% to 92 wt.% of arbon element, 1.6 wt.% to 52 wt.% of a Group IA metal element, 0.1 wt.% to 1 wt.% of a Group VB metal element, 0.05 wt.% to 3 wt.% of a Group VIB metal element, and 2.2 wt.% to 33 wt.% of a Group VIII metal element.
1-3. The carbon-carbon composite material according to the preceding item 1-1 or 1-2, characterized in that the nano-metal particles contain sodium element, potassium element, nickel element, lithium element, platinum element, iron element, chromium element, and vanadium element;
   preferably, the carbon-carbon composite material contains 45 wt.% to 92 wt.% of carbon element, 0.7 wt.% to 18 wt.% of sodium element, 0.5 wt.% to 18 wt.% of potassium element, 0.5 wt.% to 15 wt.% of nickel element, 0.4 wt.% to 13 wt.% lithium element, 1 wt.% to 10 wt.% of platinum element, 0.7 wt.% to 8 wt.% of iron element, 0.05 wt.% to 3 wt.% of chromium element, and 0.1 wt.% to 1 wt.% of vanadium element;
   preferably, the carbon-carbon composite material contains 50 wt.% to 90 wt.% of carbon element, 1 wt.% to 15 wt.% of sodium element, 1 wt.% to 15 wt.% of potassium element, 1 wt.% to 10 wt.% of nickel element, 1 wt.% to 10 wt.% of lithium element, 1 wt.% to 5 wt.% of platinum element, 1 wt.% to 5 wt.% of iron element, 0.1 wt.% to 1 wt.% of chromium element, and 0.1 wt.% to 0.5 wt.% of vanadium element.
1-4. The carbon-carbon composite material according to any one of the preceding items 1-1 to 1-3, characterized in that the number of the layers of the graphite lamellae wrapping the single carbon fiber ranges from 3 to 20 layers, preferably from 8 to 12 layers.
1-5. The carbon-carbon composite material according to any one of the preceding items 1-1 to 1-4, characterized in that the single carbon fiber has a diameter ranging from 4 µm to 8 µm, preferably from 4.5 µm to 7.5 µm;
   preferably, the single carbon fiber has a length ranging from 2 mm to 10 mm, preferably from 3 mm to 9 mm.
1-6. The carbon-carbon composite material according to any one of the preceding items 1-1 to 1-5, characterized in that the thickness of the plurality of graphitized lamellae gradually increases from the inside to the outside;
   preferably, the ratio of the total thickness of the plurality of graphitized lamellae to the diameter of the single carbon fiber is in a range of (1-100) : 1.
1-7. The carbon-carbon composite material according to any one of the preceding items 1-1 to 1-6, characterized in that the carbon-carbon composite material is in a straight or curved shape; preferably, at least a portion of the surface of the carbon-carbon composite material has a bamboo-like and/or protruding shape;
   preferably, the carbon-carbon composite material has a diameter ranging from 0.05 mm to 1 mm, preferably from 0.1 mm to 0.3 mm;
   preferably, the carbon-carbon composite material has a length ranging from 0.1 mm to 10 mm, preferably from 1 mm to 5 mm.
1-8. The carbon-carbon composite material according to any one of the preceding items 1-1 to 1-7, characterized in that in the Raman spectrum of the carbon-carbon composite material, the intensity ratio of the D band to the G band is in a range of (0.07-0.3) : 1;
   preferably, in the Raman spectrum of the carbon-carbon composite material, the intensity ratio of the 2D band to the G band is in a range of (0.2-0.9) : 1.
1-9. A process for preparing a carbon-carbon composite material, characterized in that the process comprises: reacting a chopped carbon fiber, a carbon source, and a metal source at a temperature ranging from 1500°C to 3500°C under an inert atmosphere, wherein the volumetric flow of the inert atmosphere ranges from 50 mL/min to 500 mL/min;
   wherein the metal source contains a Group IA metal source, a Group VB metal source, a Group VIB metal source, and a Group VIII metal source.
1-10. The process according to the preceding item 1-9, characterized in that the weight ratio of the metal source, the carbon source, and the chopped carbon fiber is in a range of (20-100) : (30-200) : 1, preferably (30-70) : (50-150) : 1.
1-11. The process according to the preceding item 1-9 or 1-10, characterized in that the weight ratio of the Group IA metal source, the Group VB metal source, the Group VIB metal source, and the Group VIII metal source is in a range of (50-500) : 1 : (3-10) : (30-350).
1-12. The process according to any one of the preceding items 1-9 to 1-11, characterized in that the metal source contains a sodium source, a potassium source, a nickel source, a lithium source, a platinum source, an iron source, a chromium source, and a vanadium source; preferably, the weight ratio of the sodium source, the potassium source, the nickel source, the lithium source, the platinum source, the iron source, the chromium source, and the vanadium source is in a range of (20-180) : (20-180) : (20-150) : (10-100) : (10-100) : (5-80) : (3-10) : 1.
1-13. The process according to the preceding item 1-12, characterized in that the sodium source is selected from one or more of Na₂CO₃, NaHCO₃, NaNO₃, NaCl, and NaF;
   preferably, the potassium source is selected from one or more of KCl, K₂CO₃, KF, and KOH;
   preferably, the nickel source is selected from one or more of NiO, Ni(OH)₂, NiF₂, and NiCl₂;
   preferably, the lithium source is selected from one or more of LiF, Li₂O, LiOH, and LiCl;
   preferably, the platinum source is selected from one or more of PtO, PtO₂, and Pt(OH)₂;
   preferably, the iron source is selected from one or more of FeO, Fe₂O₃, Fe₃O₄, Fe(OH)₂, Fe(OH)₃, FeCl₂, FeCl₃, and FePO₄;
   preferably, the chromium source is selected from one or more of CrO₃, Li₂CrO₄, K₂CrO₄, and BaCrO₄;
   preferably, the vanadium source is selected from one or more of VO, V₂O₃, VO₂, and V₂O₅.
1-14. The process according to the preceding item 1-9, characterized in that the carbon source is carbonized resin and/or graphite;
   preferably, the graphite is amorphous graphite.
1-15. The process according to the preceding item 1-9, characterized in that the reaction temperature ranges from 1500°C to 3000°C;
   preferably, the reaction time ranges from 12 to 720 hours, more preferably from 24 to 120 hours;
   preferably, the volumetric flow of the inert atmosphere ranges from 100 mL/min to 300 mL/min.
1-16. The process according to any one of the preceding items 1-9 and 1-13 to 1-15, characterized in that the chopped carbon fiber has a length ranging from 0.1 mm to 10 mm,
   preferably from 1 mm to 5 mm;
   preferably, the chopped carbon fiber has a specification ranging from 12 K to 320 K,
   preferably 12 K to 48 K;
   preferably, the chopped carbon fiber has a carbon content ranging from 85 wt.% to 95 wt.%.
1-17. A carbon-carbon composite material prepared by the process according to any one of the preceding items 1-9 to 1-16.
1-18. Use of the carbon-carbon composite material according to any one of the preceding items 1-1 to 1-8 or the carbon-carbon composite material according to the preceding item 1-17 in a graphite electrode material.
2-1. An electrically conductive and corrosion-resistant carbon-carbon composite material, characterized in that the carbon-carbon composite material comprises a single carbon fiber and a plurality of graphitized lamellae wrapping the single carbon fiber, with nano-metal particles filled between any two adjacent layers of graphite lamellae,
   wherein the nano-metal particles contain copper element, iron element, aluminum element, and optionally a Group IVB metal element.
2-2. The carbon-carbon composite material according to the preceding item 2-1, characterized in that the carbon-carbon composite material contains 50 wt.% to 90 wt.% of carbon element, 1 wt.% to 15 wt.% of copper element, 0.5 wt.% to 10 wt.% of iron element, 0.1 wt.% to 5 wt.% of aluminum element, and 0 wt.% to 1 wt.% of a Group IVB metal element;
   preferably, the carbon-carbon composite material contains 60 wt.% to 70 wt.% of carbon element, 5 wt.% to 9 wt.% of copper element, 1 wt.% to 6 wt.% of iron element, 0.1 wt.% to 2.5 wt.% of aluminum element, and 0.05 wt.% to 0.5 wt.% of a Group IVB metal element.
2-3. The carbon-carbon composite material according to the preceding item 2-1 or 2-2, characterized in that the Group IVB metal element is titanium and/or zirconium.
2-4. The carbon-carbon composite material according to any one of the preceding items 2-1 to 2-3, characterized in that the nano-metal particles contain copper element, iron element, aluminum element, and titanium element.
2-5. The carbon-carbon composite material according to any one of the preceding items 2-1 to 2-4, characterized in that the number of the layers of the graphite lamellae wrapping the single carbon fiber ranges from 3 to 20 layers, more preferably from 5 to 18 layers.
2-6. The carbon-carbon composite material according to any one of the preceding items 2-1 to 2-5, characterized in that the single carbon fiber has a diameter ranging from 4 µm to 8 µm, preferably from 4.5 µm to 7.5 µm; and a length ranging from 2 mm to 10 mm, preferably from 3 mm to 9 mm.
2-7. The carbon-carbon composite material according to any one of the preceding items 2-1 to 2-6, characterized in that the thickness of the plurality of graphitized lamellae gradually increases from the inside to the outside;
   preferably, the ratio of the total thickness of the plurality of graphitized lamellae to the diameter of the single carbon fiber is in a range of (1-100) : 1.
2-8. The carbon-carbon composite material according to any one of the preceding items 2-1 to 2-7, characterized in that the carbon-carbon composite material is in a straight or curved shape; preferably, at least a portion of the surface of the carbon-carbon composite material has a bamboo-like and/or protruding shape;
   preferably, the carbon-carbon composite material has a diameter ranging from 0.02 mm to 1 mm, preferably from 0.1 mm to 0.3 mm; and a length ranging from 0.1 mm to 10 mm, preferably from 1 mm to 5 mm.
2-9. The carbon-carbon composite material according to any one of the preceding items 2-1 to 2-8, characterized in that in the Raman spectrum of the carbon-carbon composite material, the intensity ratio of the D band to the G band is in a range of (0.07-0.3) : 1;
   preferably, in the Raman spectrum of the carbon-carbon composite material, the intensity ratio of the 2D band to the G band is in a range of (0.2-1) : 1.
2-10. A process for preparing an electrically conductive and corrosion-resistant carbon-carbon composite material, characterized in that the process comprises: reacting a chopped carbon fiber, a carbon source, and a metal source at a temperature ranging from 1500°C to 3500°C under an inert atmosphere, wherein the volumetric flow of the inert atmosphere ranges from 20 mL/min to 1800 mL/min;
   wherein the metal source contains a copper source, an iron source, an aluminum source, and optionally a Group IVB metal source.
2-11. The process according to the preceding item 2-10, characterized in that the weight ratio of the metal source, the carbon source, and the chopped carbon fiber is in a range of (20-100) : (30-200) : 1, preferably (30-70) : (50-150) : 1;
   the weight ratio of the copper source, the iron source, the aluminum source, and the Group IVB metal source is in a range of (10-100) : (5-10) : 1: (0-50).
2-12. The process according to the preceding item 2-10 or 2-11, characterized in that the Group IVB metal source is a titanium source and/or a zirconium source.
2-13. The process according to any one of the preceding items 2-10 to 2-12, characterized in that the metal source contains a copper source, an iron source, an aluminum source, and a titanium source;
   preferably, the copper source is selected from one or more of CuSO₄, CuO, CuCl₂, and Cu(OH)₂;
   preferably, the iron source is selected from one or more of FeO, Fe₂O₃, Fe₃O₄, Fe(OH)₂, Fe(OH)₃, FeCl₂, FeCl₃, and FePO₄;
   preferably, the aluminum source is selected from one or more of Al₂O₃, AlCl₃, Al₂(SO₄)₃, Al(OH)₃, and AlPO₄;
   preferably, the titanium source is selected from one or more of TiF₄, TiF₃, TiCl₄, TiSO₄, and TiO₂.
2-14. The process according to any one of the preceding items 2-10 to 2-13, characterized in that the carbon source is carbonized resin and/or graphite;
   preferably, the graphite is amorphous graphite.
2-15. The process according to any one of the preceding items 2-10 to 2-14, characterized in that the reaction temperature ranges from 1500°C to 2800°C; the reaction time ranges from 12 to 720 hours, preferably from 24 to 120 hours; the volumetric flow of the inert atmosphere ranges from 50 mL/min to 500 mL/min, preferably from 100 to 300 mL/min.
2-16. The process according to any one of the preceding items 2-10 to 2-15, characterized in that the chopped carbon fiber has a length ranging from 0.1 mm to 10 mm, preferably from 1 mm to 5 mm; a specification ranging from 12 K to 320 K, preferably from 12 K to 48 K; and a carbon content ranging from 85 wt.% to 95 wt.%.
2-17. An electrically conductive and corrosion-resistant carbon-carbon composite material prepared by the process according to any one of the preceding items 2-10 to 2-16.
2-18. Use of the electrically conductive and corrosion-resistant carbon-carbon composite material according to any one of the preceding items 2-1 to 2-9 or the electrically conductive and corrosion-resistant carbon-carbon composite material according to the preceding item 2-17 as an electrically conductive and corrosion-resistant material.
3-1. An ablation-resistant carbon-carbon composite material, characterized in that the ablation-resistant carbon-carbon composite material comprises a single carbon fiber and a plurality of graphitized lamellae wrapping the single carbon fiber, wherein non-carbon nanoparticles are attached to the surface of the single carbon fiber and each layer of graphite lamella,
   wherein the non-carbon nanoparticles contain silicon element, zirconium element, magnesium element, and optionally a Group VIII element.
3-2. The carbon-carbon composite material according to the preceding item 3-1, characterized in that the carbon-carbon composite material contains 50 wt.% to 90 wt.% of carbon element, 1 wt.% to 10 wt.% of silicon element, 1 wt.% to 10 wt.% of zirconium element, 0.5 wt.% to 5 wt.% of magnesium element, and 0 wt.% to 1 wt.% of a Group VIII element;
   preferably, the carbon-carbon composite material contains 55 wt.% to 74 wt.% of carbon element, 6 wt.% to 10 wt.% of silicon element, 5 wt.% to 8 wt.% of zirconium element, 1 wt.% to 3 wt.% of magnesium element, and 0.3 wt.% to 0.8 wt.% of a Group VIII element.
3-3. The carbon-carbon composite material according to the preceding item 3-1 or 3-2, characterized in that the Group VIII element is selected from one or more of nickel element, cobalt element, and zinc element.
3-4. The carbon-carbon composite material according to any one of the preceding items 3-1 to 3-3, characterized in that the non-carbon nanoparticles contain silicon element, zirconium element, magnesium element, and nickel element.
3-5. The carbon-carbon composite material according to any one of the preceding items 3-1 to 3-4, characterized in that the number of the layers of the graphite lamellae wrapping the single carbon fiber ranges from 3 to 20 layers, more preferably from 8 to 16 layers.
3-6. The carbon-carbon composite material according to any one of the preceding items 3-1 to 3-5, characterized in that the single carbon fiber has a diameter ranging from 4 µm to 8 µm, preferably 4.5 µm to 7.5 µm; and a length ranging from 2 mm to 10 mm, preferably 3 mm to 9 mm.
3-7. The carbon-carbon composite material according to any one of the preceding items 3-1 to 3-6, characterized in that the thickness of the plurality of graphitized lamellae gradually increases from the inside to the outside;
   preferably, the ratio of the total thickness of the plurality of graphitized lamellae to the diameter of the single carbon fiber is in a range of (1-100) : 1.
3-8. The carbon-carbon composite material according to any one of the preceding items 3-1 to 3-7, characterized in that the carbon-carbon composite material is in a straight and/or curved shape;
   preferably, at least a portion of the surface of the carbon-carbon composite material has a bamboo-like and/or protruding shape;
   preferably, the carbon-carbon composite material has a diameter ranging from 0.02 mm to 1 mm, preferably from 0.1 mm to 0.3 mm; and a length ranging from 0.1 mm to 10 mm, preferably from 1 mm to 5 mm.
3-9. The carbon-carbon composite material according to any one of the preceding items 3-1 to 3-8, characterized in that in the Raman spectrum of the carbon-carbon composite material, the intensity ratio of the D band to the G band is in a range of (0.07-0.3) : 1;
   preferably, in the Raman spectrum of the carbon-carbon composite material, the intensity ratio of the 2D band to the G band is in a range of (0.2-1) : 1.
3-10. A process for preparing an ablation-resistant carbon-carbon composite material, characterized in that the process comprises: reacting a chopped carbon fiber, a carbon source, and a non-carbon element source at a temperature ranging from 1500°C to 3500°C under an inert atmosphere, wherein the volumetric flow of the inert atmosphere ranges from 20 mL/min to 1800 mL/min;
   wherein the non-carbon element source contains a silicon source, a zirconium source, a magnesium source, and optionally a Group VIII element source.
3-11. The process according to the preceding item 3-10, characterized in that the weight ratio of the non-carbon element source, the carbon source, and the chopped carbon fiber is in a range of (20-100) : (40-200) : 1, preferably (30-70) : (50-150) : 1;
   the weight ratio of the silicon source, the zirconium source, the magnesium source, and the Group VIII element source is in a range of (2-20) : (1-10) : 1 : (0-0.5).
3-12. The process according to the preceding item 3-10 or 3-11, characterized in that the Group VIII element source is selected from one or more of a nickel source, a cobalt source, and a zinc source.
3-13. The process according to any one of the preceding items 3-10 to 3-12, characterized in that the non-carbon element source contains a silicon source, a zirconium source, a magnesium source, and a nickel source;
   preferably, the silicon source is selected from one or more of SiO₂, Na₂SiO₃, SiF₄, and SiCl₄;
   preferably, the zirconium source is selected from one or more of Na₂ZrF₆, K₂ZrF₆, and ZrO₂;
   preferably, the magnesium source is selected from one or more of MgSO₄, Mg(OH)₂, and MgCl₂;
   preferably, the nickel source is selected from one or more of NiO, Ni(OH)₂, NiF₂, and NiCl₂.
3-14. The process according to any one of the preceding items 3-10 to 3-13, characterized in that the carbon source is carbonized resin and/or graphite;
   preferably, the graphite is amorphous graphite.
3-15. The process according to any one of the preceding items 3-10 to 3-14, characterized in that the reaction temperature ranges from 1500°C to 3000°C; the reaction time ranges from 12 to 720 hours, preferably from 24 to 120 hours;
   preferably, the volumetric flow of the inert atmosphere ranges from 50 mL/min to 500 mL/min, preferably from 100 mL/min to 300 mL/min.
3-16. The process according to any one of the preceding items 3-10 to 3-15, characterized in that the chopped carbon fiber has a length ranging from 0.1 mm to 10 mm, preferably from 1 mm to 5 mm; a specification ranging from 12 K to 320 K, preferably from 12 K to 48 K; and a carbon content ranging from 85 wt.% to 95 wt.%.
3-17. An ablation-resistant carbon-carbon composite material prepared by the process according to any one of the preceding items 3-10 to 3-16.
3-18. Use of the ablation-resistant carbon-carbon composite material according to any one of the preceding items 3-1 to 3-9 or the ablation-resistant carbon-carbon composite material according to the preceding item 3-17 as an ablation-resistant material.
4-1. A carbon-carbon composite material with temperature-resistance and sealing performance, characterized in that the carbon-carbon composite material comprises a single carbon fiber and a plurality of graphitized lamellae wrapping the single carbon fiber, wherein non-carbon nanoparticles are attached to the surface of the single carbon fiber and each layer of graphite lamella,
   wherein the non-carbon nanoparticles contain iron element, aluminum element, phosphorus element, lead element, cobalt element, optionally a Group IIA element, and optionally indium element.
4-2. The carbon-carbon composite material according to the preceding item 4-1, characterized in that the carbon-carbon composite material contains 50- wt.% to 90 wt.% of carbon element, 0.5 wt.% to 10 wt.% of iron element, 0.5 wt.% to 10 wt.% of aluminum element, 0.2 wt.% to 5 wt.% of phosphorus element, 0.2 wt.% to 5 wt.% of lead element, 0.2 wt.% to 5 wt.% of cobalt element, 0 wt.% to 1 wt.% of a Group IIA element, and 0 wt.% to 1 wt.% of indium element; preferably, the carbon-carbon composite material contains 56 wt.% to 80 wt.% of carbon element, 5 wt.% to 8 wt.% of iron element, 4 wt.% to 8 wt.% of aluminum element, 1 wt.% to 3.5 wt.% of phosphorus element, 1 wt.% to 3.5 wt.% of lead element, 0.5 wt.% to 3.5 wt.% of cobalt element, 0.2 wt.% to 0.8 wt.% of a Group IIA element, and 0.2 wt.% to 0.8 wt.% of indium element.
4-3. The carbon-carbon composite material according to the preceding item 4-1 or 4-2, characterized in that the Group IIA elementis selected from one or more of calcium element, strontium element, and barium element.
4-4. The carbon-carbon composite material according to any one of the preceding items 4-1 to 4-3, characterized in that the non-carbon nano-particles contain iron element, aluminum element, phosphorus element, lead element, cobalt element, calcium element, and indium element.
4-5. The carbon-carbon composite material according to any one of the preceding item 4-1 to 4-4, characterized in that the number of the layers of the graphite lamellae wrapping the single carbon fiber ranges from 3 to 20 layers, more preferably from 6 to 12 layers.
4-6. The carbon-carbon composite material according to any one of the preceding item 4-1 to 4-5, characterized in that the single carbon fiber has a diameter ranging from 4 µm to 8 µm, preferably 4.5 µm to 7.5 µm; and a length ranging from 2 mm to 10 mm, preferably from 3 mm to 9 mm.
4-7. The carbon-carbon composite material according to any one of the preceding item 4-1 to 4-6, characterized in that the thickness of the plurality of graphitized lamellae gradually increases from the inside to the outside;
   preferably, the ratio of the total thickness of the plurality of graphitized lamellae to the diameter of the single carbon fiber is in a range of (1-100) : 1.
4-8. The carbon-carbon composite material according to any one of the preceding item 4-1 to 4-7, characterized in that the carbon-carbon composite material is in a straight and/or curved shape;
   preferably, at least a portion of the surface of the carbon-carbon composite material has a bamboo-like and/or protruding shape;
   preferably, the carbon-carbon composite material has a diameter ranging from 0.05 mm to 1 mm, preferably from 0.1 mm to 0.3 mm; and a length ranging from 0.1 mm to 10 mm, preferably from 1 mm to 5 mm.
4-9. The carbon-carbon composite material according to any one of the preceding item 4-1 to 4-8, characterized in that in the Raman spectrum of the carbon-carbon composite material, the intensity ratio of the D band to the G band is in a range of (0.07-0.3) : 1;
   preferably, in the Raman spectrum of the carbon-carbon composite material, the intensity ratio of the 2D band to the G band is in a range of (0.2-0.9) : 1.
4-10. A process for preparing a carbon-carbon composite material with temperature-resistance and sealing performance, characterized in that the process comprises: reacting a chopped carbon fiber, a carbon source, a metal source, and a phosphorus source at a temperature ranging from 1500°C to 3500°C under an inert atmosphere, wherein the volumetric flow of the inert atmosphere ranges from 20 mL/min to 1800 mL/min;
   wherein the metal source contains an iron source, an aluminum source, a lead source, a cobalt source, optionally a Group IIA element source, and optionally an indium source.
4-11. The process according to the preceding item 4-10, characterized in that the weight ratio of the metal source, the phosphorus source, the carbon source, and the chopped carbon fiber is in a range of (20-100) : (3-20) : (30-200) : 1, preferably (30-70) : (5-15) : (50-150) : 1;
   the weight ratio of the iron source, the aluminum source, the lead source, the cobalt source, the Group IIA element source, and the indium source is in a range of (0.8-4) : (1-4) : (0.3-1.5) : 1 : (0-1) : (0-0.5).
4-12. The process according to the preceding item 4-10 or 4-11, characterized in that the Group IIA element source is selected from one or more of a calcium source, a strontium source, and a barium source.
4-13. The process according to any one of the preceding items 4-10 to 4-12, characterized in that the metal source contains an iron source, an aluminum source, a lead source, a cobalt source, a calcium source, and an indium source;
   preferably, the iron source is selected from one or more of FeO, Fe₂O₃, Fe₃O₄, Fe(OH)₂, Fe(OH)₃, FeCl₂, FeCl₃, and FePO₄;
   preferably, the aluminum source is selected from one or more of Al₂O₃, AlCl₃, Al₂(SO₄)₃, Al(OH)₃, and AlPO₄;
   preferably, the lead source is selected from one or more of PbO, Pb₃O₄, PbO₂, and Pb₂O₃; preferably, the cobalt source is selected from one or more of CoO, Co(OH)₂, CoCl₂, and CoSO₄;
   preferably, the calcium source is selected from one or more of CaCl₂, CaO, Ca(OH)₂, and CaF₂; preferably, the indium source is selected from one or more of In₂O₃, In(OH)₃, and InCl₃.
4-15. The process according to any one of the preceding items 4-10 to 4-14, characterized in that the phosphorus source is selected from one or more of FePO₄, AlPO₄, Al(PO₃)₃, and Ca₃(PO₄)₂.
4-16. The process according to any one of the preceding items 4-10 to 4-15, characterized in that the carbon source is carbonized resin and/or graphite;
   preferably, the graphite is amorphous graphite.
4-17. The process according to any one of the preceding items 4-10 to 4-16, characterized in that the reaction temperature ranges from 1500°C to 3000°C; the reaction time ranges from 12 to 720 hours, preferably from 24 to 120 hours;
   preferably, the volumetric flow of the inert atmosphere ranges from 50 mL/min to 500 mL/min,
   preferably from 100 mL/min to 300 mL/min.
4-18. The process according to any one of the preceding items 4-10 to 4-17, characterized in that the chopped carbon fiber has a length ranging from 0.1 mm to 10 mm, preferably from 1 mm to 5 mm; a specification ranging from 12 K to 320 K, preferably from 12 K to 48 K; and a carbon content ranging from 85 wt.% to 95 wt.%.
4-19. A carbon-carbon composite material with temperature-resistance and sealing performance prepared by the process according to any one of the preceding items 4-10 to 4-18.
4-20. Use of the carbon-carbon composite material with temperature-resistance and sealing performance according to any one of the preceding items 4-1 to 4-9 or the carbon-carbon composite material with temperature-resistance and sealing performance according to the preceding item 4-19 as a temperature-resistant sealing material.

The present invention will be described in detail below through examples, but the protection scope of the present invention is not limited thereto. In the following examples and comparative examples, unless otherwise specified, all reagents used are commercially available.

In the following examples and comparative examples, the carbonized resin powder is YKD-508 hemoperfusion carbonized resin (carbon skeleton spherical porous adsorption resin) produced by Henan Yinkai New Materials Co., Ltd.

The test methods adopted in the present invention include:
1. A ZEISS Merlin field emission scanning electron microscope was used to observe the surface and cross-sectional morphology of the carbon-carbon composite materials prepared in the examples and comparative examples, wherein the test conditions included: acceleration voltage 20 kV to 30 kV, electron beam current 10 pA to 40/100/300 nA.
2. An X-ray energy dispersive spectrometer equipped with the German ZEISS Merlin field emission scanning electron microscope was used to analyze the element types, distribution state, and particle size of the carbon-carbon composite materials prepared in the examples and comparative examples, wherein the test conditions for the mapping mode included: acceleration voltage 20 kV to 30 kV, probe effective working area 150 mm², element range Be to U, detection limit ≈ 0.1 wt.%.
3. Raman spectrum analysis of the cross-section of the carbon-carbon composite material: a laser micro-Raman spectrometer (micro-Raman spectroscopy analysis, RENISHAW, inVia Raman Microscope QONTOR, UK, 532 nm line, helium-neon laser radiation model: QONTOR) was used to observe the cross-sectional morphology of the carbon-carbon composite materials prepared in the examples and comparative examples, and Raman spectrum analysis on the cross-sectional morphology was performed. The specific method included: directly breaking the carbon-carbon composite material, and observing the morphology of the fracture surface after the fracture surface appears; achieving real-time focus by means of Live Track^{™} technology; during the test, each point was collected in a focus state, and the coordinate of each point in the Z-axis direction was recorded, thereby forming a height image of the surface, wherein the Raman spectrum result could be superimposed on the height map; in-situ Raman spectrum area: 70 µm × 70 µm, step size 1 µm, Raman spectrum recording range 400 cm⁻¹ to 3100 cm⁻¹; integration time for each spectrum was 100 s; observing the cross-sectional morphology of the fibrous composite material under a 20x objective lens, and collecting Raman spectrum at any point within a 1 µm × 1 µm region, wherein the spectrum had a D band near 1350 cm⁻¹, a G band near 1580 cm⁻¹, and a 2D band near 2699 cm⁻¹; at the same time, the intensity distribution of the D band at different points could be seen by means of Raman spectrum.
4. An inductively coupled plasma optical emission spectrometer was used to test the types and the contents of the non-carbon elements in the carbon-carbon composite materials prepared in the examples and comparative examples.

The main instruments and reagent materials were shown as follows:
(1) Varian 725-ES Inductively Coupled Plasma Optical Emission Spectrometer;
(2) Haoyue HMF1600-40 box furnace;
(3) LabTech Digiblock ST36 electric heating digestion apparatus;
(4) Multi-element standard solution: 1000 µg/mL (NCS Testing Technology Co., Ltd.); Praseodymium standard stock solution: 1000 µg/mL (Guobiao (Beijing) Testing & Certification Co., Ltd. (GBTC)); Vanadium standard stock solution: 1000 µg/mL (Guobiao (Beijing) Testing & Certification Co., Ltd. (GBTC)); The ultrapure water used in the experiment was prepared by the RephiLe Genie Purist purification water system (resistivity = 18.2 MΩ cm, 25 °C); Hydrogen peroxide (30 wt.%), hydrochloric acid, nitric acid, hydrofluoric acid were all guaranteed grade; Sulfuric acid is ultrapure (Sinopharm Chemical Reagent Co., Ltd.); Liquid argon (Chart Cryogenic Engineering Systems (Changzhou) Co., Ltd.).

The working conditions of the instrument were shown as follows:
Instrument operating parameters: High frequency power: 1100 W; Plasma gas flow: 15 L min⁻¹; Auxiliary gas flow: 1.5 L min⁻¹; Atomized gas flow: 0.75 L min⁻¹; Sample pumping speed: 15 rpm; Observation height: 10 mm.

The experimental method was performed as follows:
(1) Weighing 0.1 g of a sample and placing it in a clean quartz crucible; placing this quartz crucible in a box furnace, then heating it up to 930 °C for ashing treatment, thereby obtaining ash. The weight percentage reduction of the sample during the calcination process was the carbon content of the fibrous carbon-carbon composite material;
(2) Transferring all the ash to a PFA test tube by means of a small amount of ultrapure water, sequentially adding aqua regia, hydrogen peroxide, sulfuric acid, and hydrofluoric acid, capping and placing it in an electric heating digestion apparatus for heating until the sample was completely digested;
(3) Removing the test tube and cooling it to room temperature, then using ultrapure water to transfer the product in the test tube to a 50 mL volumetric flask, diluting to volume and setting it aside for testing;
(4) Preparing a mixed standard solution of the elements, drawing the test spectral lines, and using an inductively coupled plasma optical emission spectrometer to detect the solution to be tested, and calculating the content of each element according to the drawn test spectral lines. Selection of elemental spectral lines: Inductively coupled plasma optical emission spectrometry could simultaneously select multiple characteristic spectral lines for each element and use the synchronous background correction function. Specifically, in the experiment, 4 spectral lines were selected for each element to be tested. By comprehensively analyzing the intensity, the interference situation, and the stability, the analysis line with less spectral line interference and high precision was selected.

In the following examples and comparative examples, the total weight of the non-carbon element source, the carbonized resin powder (or amorphous graphite), and the chopped carbon fiber was 30 g, and the volume of the high-temperature furnace was 15 cm × 15 cm × 15 cm.

### Example 1-1

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders, and the chopped carbon fiber was 50: 100: 1, the non-carbon element sources were sodium source (NaCl), potassium source (KCl), nickel source (NiF₂), lithium source (LiF), platinum source (Pt(OH)₂), iron source (FeCl₃), chromium source (Li₂CrO₄), and vanadium source (V₂O₃), and the weight ratio of the sodium source, the potassium source, the nickel source, the lithium source, the platinum source, the iron source, the chromium source, and the vanadium source was 55:35:20:15:15:20:3:1, i.e., the weight ratio of the Group IA element sources, the Group VB element sources, the Group VIB element sources, and the Group VIII element sources was 105:1:3:55.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example (its macroscopic morphology image is shown as Figure 1-1, from which it can be seen that the carbon-carbon composite material is black and fibrous) has the following characteristics:
(1) The cross-sectional morphology of the carbon-carbon composite material was measured using a scanning electron microscope, as shown in Figure 1-10. The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 25:1. Non-carbon nanoparticles are uniformly distributed between adjacent graphitized lamellae and between the graphitized lamellae and the carbon fiber. The carbon-carbon composite material has a diameter of 0.25 mm, and a length of 3 mm.
(2) The carbon-carbon composite material is black. Independent carbon particles are also distributed on the surface of the outermost graphitized lamellae, with a particle size of 0.07 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.162:1, and the average value of the intensity ratio of the 2D band to the G band is 0.483:1.
(3) The main elements contained in the carbon-carbon composite material include: carbon content 50 wt.%; sodium content 10.2 wt.%; potassium content 6.3 wt.%; nickel content 3.3 wt.%; lithium content 2.9 wt.%; platinum content 2.7 wt.%; iron content 3.1 wt.%; chromium content 0.1 wt.%; vanadium content 0.2 wt.%; i.e., the carbon-carbon composite material contains 50 wt.% carbon element, 19.4 wt.% Group IA metal elements, 0.2 wt.% Group VB metal elements, 0.1 wt.% Group VIB metal elements, and 9.1 wt.% Group VIII metal elements. It also contains elements with content below 0.001 wt.%, including: zinc, manganese, silver, barium, copper, magnesium, lead, and strontium.

The above characteristics (1) and (2) were analyzed using a ZEISS Merlin field emission scanning electron microscope and an X-ray energy dispersive spectrometer equipped with the German ZEISS Merlin field emission scanning electron microscope.

From the elemental energy dispersive spectrums in Figures 1-2 to 1-9, it can be seen that Na (Figure 1-2), K (Figure 1-3), Ni (Figure 1-4), Li (Figure 1-5), Pt (Figure 1-6), Fe (Figure 1-7), Cr (Figure 1-8), and V (Figure 1-9) in the carbon-carbon composite material prepared in this example are uniformly distributed and are all nanoparticles.

### Example 1-2

A carbon-carbon composite material was prepared according to the following process: reacting a chopped carbon fiber (specification 24 K, length 6 mm, carbon content 95 wt.%), amorphous graphite, and non-carbon element sources in a high-temperature furnace for 100 hours under a nitrogen atmosphere (gas flow of 200 mL/min),
wherein the weight ratio of the non-carbon element sources, the amorphous graphite, and the chopped carbon fiber was 36 : 70 : 1, the non-carbon element sources were sodium source (NaF), potassium source (KF), nickel source (NiCl₂), lithium source (LiOH), platinum source (PtO₂), iron source (Fe₂O₃), chromium source (K₂CrO₄), and vanadium source (VO₂), and the weight ratio of the sodium source, the potassium source, the nickel source, the lithium source, the platinum source, the iron source, the chromium source, and the vanadium source was 70 : 95 : 55 : 32 : 50 : 40 : 3 : 1, i.e., the weight ratio of the Group IA element sources, the Group VB element sources, the Group VIB element sources, and the Group VIII element sources was 197 : 1 : 3 : 145.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 5 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 59 : 1. Non-carbon nanoparticles are uniformly distributed between adjacent graphitized lamellae and between the graphitized lamellae and the carbon fiber. The carbon-carbon composite material has a diameter of 0.6 mm and a length of 6 mm.
(2) The carbon-carbon composite material is grey. Independent carbon particles are also distributed on the surface of the outermost graphitized lamellae, with a particle size of 1.6 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.161 : 1, and the average value of the intensity ratio of the 2D band to the G band is 0.479 : 1.
(3) The main elements contained in the carbon-carbon composite material include: carbon content 53 wt.%; sodium content 6.9 wt.%; lithium content 9.3 wt.%; nickel content 5.2 wt.%; lithium content 3.1 wt.%; platinum content 4.7 wt.%; iron content 4.2 wt.%; chromium content 0.3 wt.%; vanadium content 0.1 wt.%; i.e., the carbon-carbon composite material contains 53 wt.% carbon element, 19.3 wt.% Group IA metal elements, 0.1 wt.% Group VB metal elements, 0.3 wt.% Group VIB metal elements, and 14.1 wt.% Group VIII metal elements. It also contains elements with content below 0.001 wt.%, including: zinc, manganese, silver, barium, copper, magnesium, lead, and strontium.

### Example 1-3

A carbon-carbon composite material was prepared according to the following process: reacting a chopped carbon fiber (specification 50 K, length 9 mm, carbon content 90 wt.%), carbonized resin powders, and non-carbon element sources in a high-temperature furnace for 80 hours under a nitrogen atmosphere (gas flow of 300 mL/min),
wherein the weight ratio of the non-carbon element sources, the carbonized resin powders, and the chopped carbon fiber was 35 : 50 : 1, the non-carbon element sources were sodium source (NaCl), potassium source (KCl), nickel source (NiF₂), lithium source (LiF), platinum source (Pt(OH)₂), iron source (FeCl₃), chromium source (Li₂CrO₄), and vanadium source (V₂O₃), and the weight ratio of the sodium source, the potassium source, the nickel source, the lithium source, the platinum source, the iron source, the chromium source, and the vanadium source was 40 : 30 : 25 : 30 : 20 : 15 : 3 : 1, i.e., the weight ratio of the Group IA element sources, the Group VB element sources, the Group VIB element sources, and the Group VIII element sources was 100 : 1 : 3 : 60.

The high-temperature furnace used isostatic graphite as the heating element. The central operating temperature of the high-temperature furnace was 2800 °C. The purity of the nitrogen atmosphere was 99.99 vol%, with an oxygen content of 30 ppm.

A valve was installed on the pipeline connecting the high-temperature furnace and the tail gas recovery system, wherein the valve was fully open, and the inner diameter of the pipeline was 15 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 9 mm. The single carbon fiber is wrapped by graphitized lamellae with a concentric circle structure. The ratio of the total thickness of the graphitized lamellae to the diameter of the single carbon fiber is 39 : 1. Non-carbon nanoparticles are uniformly distributed between adjacent graphitized lamellae and between the graphitized lamellae and the carbon fiber. The carbon-carbon composite material has a diameter of 0.4 mm and a length of 9 mm.
(2) The carbon-carbon composite material is grey. Independent carbon particles are also distributed on the surface of the outermost graphitized lamellae, with a particle size of 0.08 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.182 : 1, and the average value of the intensity ratio of the 2D band to the G band is 0.540 : 1.
(3) The main elements contained in the carbon-carbon composite material include: carbon content 65 wt.%; sodium content 7.2 wt.%; lithium content 5.3 wt.%; nickel content 4.1 wt.%; lithium content 6.2 wt.%; platinum content 3.5 wt.%; iron content 3.1 wt.%; chromium content 0.5 wt.%; vanadium content 0.2 wt.%; i.e., the carbon-carbon composite material contains 65 wt.% carbon element, 18.7 wt.% Group IA metal elements, 0.2 wt.% Group VB metal elements, 0.5 wt.% Group VIB metal elements, and 10.7 wt.% Group VIII metal elements. It also contains elements with content below 0.001 wt.%, including: zinc, manganese, silver, barium, copper, magnesium, lead, and strontium.

### Example 1-4

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 120 hours under a nitrogen atmosphere (gas flow of 300 mL/min), wherein the weight ratio of the non-carbon element sources, the amorphous graphite, and the chopped carbon fiber was 32 : 65 : 1, the non-carbon element sources were sodium source (NaF), potassium source (KF), nickel source (NiCl₂), lithium source (LiOH), platinum source (PtO₂), iron source (Fe₂O₃), chromium source (K₂CrO₄), and vanadium source (VO₂), and the weight ratio of the sodium source, the potassium source, the nickel source, the lithium source, the platinum source, the iron source, the chromium source, and the vanadium source was 25 : 20 : 20 : 20 : 10 : 10 : 3 : 1, i.e., the weight ratio of the Group IA element sources, the Group VB element sources, the Group VIB element sources, and the Group VIII element sources was 65 : 1 : 3 : 40.

The high-temperature furnace used isostatic graphite as the heating element. The central operating temperature of the high-temperature furnace was 2800 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 20 mm. Furthermore, along the gas flow direction, a filter screen was installed in front of the valve.

The carbon-carbon composite material prepared in this example has the following characteristics:
(1) The core is a single carbon fiber, with a diameter of 7 µm and a length of 6 mm. The single carbon fiber is wrapped by graphitized lamellae with a concentric circle structure. The ratio of the total thickness of the graphitized lamellae to the diameter of the single carbon fiber is 43 : 1. Non-carbon nanoparticles are uniformly distributed between adjacent graphitized lamellae and between the graphitized lamellae and the carbon fiber. The carbon-carbon composite material has a diameter of 0.6 mm and a length of 6 mm.
(2) The carbon-carbon composite material is grey. Independent carbon particles are also distributed on the surface of the outermost graphitized lamellae, with a particle size of 1.3 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.180 : 1, and the average value of the intensity ratio of the 2D band to the G band is 0.551 : 1.
(3) The main elements contained in the carbon-carbon composite material include: carbon content 58 wt.%; sodium content 7.0 wt.%; lithium content 5.1 wt.%; nickel content 3.9 wt.%; lithium content 6.0 wt.%; platinum content 3.2 wt.%; iron content 2.8 wt.%; chromium content 0.7 wt.%; vanadium content 0.3 wt.%; i.e., the carbon-carbon composite material contains 58 wt.% carbon element, 18.1 wt.% Group IA metal elements, 0.3 wt.% Group VB metal elements, 0.7 wt.% Group VIB metal elements, and 9.9 wt.% Group VIII metal elements. It also contains elements with content below 0.001 wt.%, including: zinc, manganese, silver, barium, copper, magnesium, lead, and strontium.

### Example 1-5

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 36 hours under a nitrogen atmosphere (gas flow of 300 mL/min), wherein the weight ratio of the non-carbon element sources, the amorphous graphite, and the chopped carbon fiber was 35 : 50 : 1, the non-carbon element sources were sodium source (NaF), potassium source (KF), nickel source (NiCl₂), lithium source (LiOH), platinum source (PtO₂), iron source (Fe₂O₃), chromium source (K₂CrO₄), and vanadium source (VO₂), and the weight ratio of the sodium source, potassium source, nickel source, lithium source, platinum source, iron source, chromium source, and vanadium source was 180 : 180 : 120 : 100 : 85 : 35 : 10 : 1, i.e., the weight ratio of the Group IA element sources, the Group VB element sources, the Group VIB element sources, and the Group VIII element sources was 460 : 1 : 10 : 240.

The high-temperature furnace used isostatic graphite as the heating element. The central operating temperature of the high-temperature furnace was 2800 °C. The purity of the nitrogen atmosphere was 99.99 vol%, with an oxygen content of 30 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 7 µm and a length of 6 mm. The single carbon fiber is wrapped by graphitized lamellae with a concentric circle structure. The ratio of the total thickness of the graphitized lamellae to the diameter of the single carbon fiber is 57 : 1. Non-carbon nanoparticles are uniformly distributed between adjacent graphitized lamellae and between the graphitized lamellae and the carbon fiber. The carbon-carbon composite material has a diameter of 0.8 mm and a length of 6 mm.
(2) The carbon-carbon composite material is grey. Independent carbon particles are also distributed on the surface of the outermost graphitized lamellae, with a particle size of 1.3 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.187 : 1, and the average value of the intensity ratio of the 2D band to the G band is 0.555 : 1.
(3) The main elements contained in the carbon-carbon composite material include: carbon content 73 wt.%; sodium content 9.2 wt.%; lithium content 6.2 wt.%; nickel content 2.3 wt.%; lithium content 2.1 wt.%; platinum content 1.7 wt.%; iron content 1.7 wt.%; chromium content 0.3 wt.%; vanadium content 0.2 wt.%; i.e., the carbon-carbon composite material contains 73 wt.% carbon element, 17.5 wt.% Group IA metal elements, 0.2 wt.% Group VB metal elements, 0.3 wt.% Group VIB metal elements, and 5.7 wt.% Group VIII metal elements. It also contains elements with content below 0.001 wt.%, including: zinc, manganese, silver, barium, copper, magnesium, lead, and strontium.

### Example 1-6

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 120 hours under a nitrogen atmosphere (gas flow of 100 mL/min),
wherein the weight ratio of the non-carbon element sources, the amorphous graphite, and the chopped carbon fiber was 31 : 65 : 1, the non-carbon element sources were sodium source (NaF), potassium source (KF), nickel source (NiCl₂), lithium source (LiOH), platinum source (PtO₂), iron source (Fe₂O₃), chromium source (K₂CrO₄), and vanadium source (VO₂), and the weight ratio of the sodium source, the potassium source, the nickel source, the lithium source, the platinum source, the iron source, the chromium source, and the vanadium source was 180 : 170 : 110 : 100 : 40 : 20 : 10 : 1, i.e., the weight ratio of the Group IA element sources, the Group VB element sources, the Group VIB element sources, and the Group VIII element sources was 450 : 1 : 10 : 170.

The high-temperature furnace used isostatic graphite as the heating element. The central operating temperature of the high-temperature furnace was 2800 °C. The purity of the nitrogen atmosphere was 99.99 vol%, with an oxygen content of 20 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 98 : 1. Non-carbon nanoparticles are uniformly distributed between adjacent graphitized lamellae and between the graphitized lamellae and the carbon fiber. The carbon-carbon composite material has a diameter of 1.0 mm and a length of 6 mm.
(2) The carbon-carbon composite material is grey. Independent carbon particles are also distributed on the surface of the outermost graphitized lamellae, with a particle size of 1.5 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.187 : 1, and the average value of the intensity ratio of the 2D band to the G band is 0.553 : 1.
(3) The main elements contained in the carbon-carbon composite material include: carbon content 55 wt.%; sodium content 11.2 wt.%; lithium content 8.3 wt.%; nickel content 5.3 wt.%; lithium content 7.1 wt.%; platinum content 2.2 wt.%; iron content 1.1 wt.%; chromium content 0.5 wt.%; vanadium content 0.15 wt.%; i.e., the carbon-carbon composite material contains 55 wt.% carbon element, 26.6 wt.% Group IA metal elements, 0.15 wt.% Group VB metal elements, 0.5 wt.% Group VIB metal elements, and 8.6 wt.% Group VIII metal elements. It also contains elements with content below 0.001 wt.%, including: zinc, manganese, silver, barium, copper, magnesium, lead, and strontium.

### Example 1-7

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 120 hours under a nitrogen atmosphere (gas flow of 200 mL/min),
wherein the weight ratio of the non-carbon element sources, the amorphous graphite, and the chopped carbon fiber was 32 : 66 : 1, the non-carbon element sources were sodium source (NaF), potassium source (KF), nickel source (NiCl₂), lithium source (LiOH), platinum source (PtO₂), iron source (Fe₂O₃), chromium source (K₂CrO₄), and vanadium source (VO₂), and the weight ratio of the sodium source, the potassium source, the nickel source, the lithium source, the platinum source, the iron source, the chromium source, and the vanadium source was 180 : 180 : 150 : 100 : 60 : 40 : 10 : 1, i.e., the weight ratio of the Group IA element sources, the Group VB element sources, the Group VIB element sources, and the Group VIII element sources was 460 : 1 : 10 : 250.

The high-temperature furnace used isostatic graphite as the heating element. The central operating temperature of the high-temperature furnace was 2800 °C. The purity of the nitrogen atmosphere was 99.99 vol%, with an oxygen content of 20 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 39 : 1. Non-carbon nanoparticles are uniformly distributed between adjacent graphitized lamellae and between the graphitized lamellae and the carbon fiber. The carbon-carbon composite material has a diameter of 0.4 mm and a length of 6 mm.
(2) The carbon-carbon composite material is grey. Independent carbon particles are also distributed on the surface of the outermost graphitized lamellae, with a particle size of 0.6 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.182 : 1, and the average value of the intensity ratio of the 2D band to the G band is 0.553 : 1.
(3) The main elements contained in the carbon-carbon composite material include: carbon content 54 wt.%; sodium content 12.2 wt.%; lithium content 10.3 wt.%; nickel content 6.3 wt.%; lithium content 8.1 wt.%; platinum content 1.8 wt.%; iron content 1.2 wt.%; chromium content 0.7 wt.%; vanadium content 0.3 wt.%; i.e., the carbon-carbon composite material contains 54 wt.% carbon element, 30.6 wt.% Group IA metal elements, 0.3 wt.% Group VB metal elements, 0.7 wt.% Group VIB metal elements, and 9.3 wt.% Group VIII metal elements. It also contains elements with content below 0.001 wt.%, including: zinc, manganese, silver, barium, copper, magnesium, lead, and strontium.

### Example 1-8

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 72 hours under a nitrogen atmosphere (gas flow of 300 mL/min),
wherein the weight ratio of the non-carbon element sources, the amorphous graphite, and the chopped carbon fiber was 58 : 115 : 1, the non-carbon element sources were sodium source (NaF), potassium source (KF), nickel source (NiCl₂), lithium source (LiOH), platinum source (PtO₂), iron source (Fe₂O₃), chromium source (K₂CrO₄), and vanadium source (VO₂), and the weight ratio of the sodium source, the potassium source, the nickel source, the lithium source, the platinum source, the iron source, the chromium source, and the vanadium source was 110 : 80 : 50 : 30 : 20 : 10 : 6 : 1, i.e., the weight ratio of the Group IA element sources, the Group VB element sources, the Group VIB element sources, and the Group VIII element sources was 220 : 1 : 6 : 80.

The high-temperature furnace used isostatic graphite as the heating element. The central operating temperature of the high-temperature furnace was 2800 °C. The purity of the nitrogen atmosphere was 99.99 vol%, with an oxygen content of 20 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 50 : 1. Non-carbon nanoparticles are uniformly distributed between adjacent graphitized lamellae and between the graphitized lamellae and the carbon fiber. The carbon-carbon composite material has a diameter of 0.5 mm and a length of 6 mm.
(2) The carbon-carbon composite material is grey. Independent carbon particles are also distributed on the surface of the outermost graphitized lamellae, with a particle size of 1.0 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.182 : 1, and the average value of the intensity ratio of the 2D band to the G band is 0.554 : 1.
(3) The main elements contained in the carbon-carbon composite material include: carbon content 69 wt.%; sodium content 7.2 wt.%; lithium content 5.3 wt.%; nickel content 3.2 wt.%; lithium content 2.2 wt.%; platinum content 1.2 wt.%; iron content 2.7 wt.%; chromium content 0.4 wt.%; vanadium content 0.37 wt.%; i.e., the carbon-carbon composite material contains 69 wt.% carbon element, 14.7 wt.% Group IA metal elements, 0.37 wt.% Group VB metal elements, 0.4 wt.% Group VIB metal elements, and 7.1 wt.% Group VIII metal elements. It also contains elements with content below 0.001 wt.%, including: zinc, manganese, silver, barium, copper, magnesium, lead, and strontium.

### Example 1-9

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 48 hours under a nitrogen atmosphere (gas flow of 300 mL/min),
wherein the weight ratio of the non-carbon element sources, the amorphous graphite, and the chopped carbon fiber was 70 : 140 : 1, the non-carbon element sources were sodium source (NaF), potassium source (KF), nickel source (NiCl₂), lithium source (LiOH), platinum source (PtO₂), iron source (Fe₂O₃), chromium source (K₂CrO₄), and vanadium source (VO₂), and the weight ratio of the sodium source, the potassium source, the nickel source, the lithium source, the platinum source, the iron source, the chromium source, and the vanadium source was 45 : 30 : 25 : 10 : 20 : 15 : 3 : 1, i.e., the weight ratio of the Group IA element sources, the Group VB element sources, the Group VIB element sources, and the Group VIII element sources was 85 : 1 : 3 : 60.

The high-temperature furnace used isostatic graphite as the heating element. The central operating temperature of the high-temperature furnace was 2800 °C. The purity of the nitrogen atmosphere was 99.99 vol%, with an oxygen content of 20 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 89 : 1. Non-carbon nanoparticles are uniformly distributed between adjacent graphitized lamellae and between the graphitized lamellae and the carbon fiber. The carbon-carbon composite material has a diameter of 0.9 mm and a length of 6 mm.
(2) The carbon-carbon composite material is grey. Independent carbon particles are also distributed on the surface of the outermost graphitized lamellae, with a particle size of 1.2 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.180 : 1, and the average value of the intensity ratio of the 2D band to the G band is 0.555 : 1.
(3) The main elements contained in the carbon-carbon composite material include: carbon content 87 wt.%; sodium content 2.2 wt.%; lithium content 1.5 wt.%; nickel content 1.2 wt.%; lithium content 1.5 wt.%; platinum content 1.0 wt.%; iron content 1.7 wt.%; chromium content 0.1 wt.%; vanadium content 0.35 wt.%; i.e., the carbon-carbon composite material contains 87 wt.% carbon element, 5.2 wt.% Group IA metal elements, 0.35 wt.% Group VB metal elements, 0.1 wt.% Group VIB metal elements, and 3.9 wt.% Group VIII metal elements. It also contains elements with content below 0.001 wt.%, including: zinc, manganese, silver, barium, copper, magnesium, lead, and strontium.

### Example 1-10

It was implemented according to the process of Example 1-1, except that the non-carbon element sources were potassium source, nickel source, lithium source, platinum source, iron source, chromium source and vanadium source, not including sodium source.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders, and the chopped carbon fiber was 50 : 100 : 1, the non-carbon element sources were potassium source (KCl), nickel source (NiF₂), lithium source (LiF), platinum source (Pt(OH)₂), iron source (FeCl₃), chromium source (Li₂CrO₄), and vanadium source (V₂O₃), and the weight ratio of the potassium source, the nickel source, the lithium source, the platinum source, the iron source, the chromium source, and the vanadium source was 35 : 20 : 15 : 15 : 20 : 3 : 1, i.e., the weight ratio of the Group IA element sources, the Group VB element sources, the Group VIB element sources, and the Group VIII element sources was 50 : 1 : 3 : 55.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 25 : 1. Non-carbon nanoparticles are uniformly distributed between adjacent graphitized lamellae and between the graphitized lamellae and the carbon fiber. The carbon-carbon composite material has a diameter of 0.25 mm and a length of 3 mm.
(2) The carbon-carbon composite material is grey. Independent carbon particles are also distributed on the surface of the outermost graphitized lamellae, with a particle size of 0.07 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.162 : 1, and the average value of the intensity ratio of the 2D band to the G band is 0.483 : 1.
(3) The main elements contained in the carbon-carbon composite material include: carbon content 50 wt.%; lithium content 6.4 wt.%; nickel content 3.1 wt.%; lithium content 2.7 wt.%; platinum content 2.9 wt.%; iron content 3.5 wt.%; chromium content 0.3 wt.%; vanadium content 0.3 wt.%; i.e., the carbon-carbon composite material contains 50 wt.% carbon element, 9.1 wt.% Group IA metal elements, 0.3 wt.% Group VB metal elements, 0.3 wt.% Group VIB metal elements, and 9.5 wt.% Group VIII metal elements. It also contains elements with content below 0.001 wt.%, including: zinc, manganese, silver, barium, copper, magnesium, lead, and strontium.

### Example 1-11

It was implemented according to the process of Example 1-1, except that the non-carbon element sources were sodium source, nickel source, lithium source, platinum source, iron source, chromium source and vanadium source, not including potassium source.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders, and the chopped carbon fiber was 50 : 100 : 1, the non-carbon element sources were sodium source (NaCl), nickel source (NiF₂), lithium source (LiF), platinum source (Pt(OH)₂), iron source (FeCl₃), chromium source (Li₂CrO₄), and vanadium source (V₂O₃), and the weight ratio of the sodium source, the nickel source, the lithium source, the platinum source, the iron source, the chromium source, and the vanadium source was 55 : 20 : 15 : 15 : 20 : 3 : 1, i.e., the weight ratio of the Group IA element sources, the Group VB element sources, the Group VIB element sources, and the Group VIII element sources was 70 : 1 : 3 : 55.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 25 : 1. Non-carbon nanoparticles are uniformly distributed between adjacent graphitized lamellae and between the graphitized lamellae and the carbon fiber. The carbon-carbon composite material has a diameter of 0.25 mm and a length of 3 mm.
(2) The carbon-carbon composite material is grey. Independent carbon particles are also distributed on the surface of the outermost graphitized lamellae, with a particle size of 0.07 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.162 : 1, and the average value of the intensity ratio of the 2D band to the G band is 0.483 : 1.
(3) The main elements contained in the carbon-carbon composite material include: carbon content 50 wt.%; sodium content 10.5 wt.%; nickel content 3.2 wt.%; lithium content 2.6 wt.%; platinum content 2.6 wt.%; iron content 3.3 wt.%; chromium content 0.1 wt.%; vanadium content 0.4 wt.%; i.e., the carbon-carbon composite material contains 50 wt.% carbon element, 13.1 wt.% Group IA metal elements, 0.4 wt.% Group VB metal elements, 0.1 wt.% Group VIB metal elements, and 9.1 wt.% Group VIII metal elements. It also contains elements with content below 0.001 wt.%, including: zinc, manganese, silver, barium, copper, magnesium, lead, and strontium.

### Example 1-12

It was implemented according to the process of Example 1-1, except that the non-carbon element sources were sodium source, potassium source, lithium source, platinum source, iron source, chromium source and vanadium source, not including nickel source.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders, and the chopped carbon fiber was 50 : 100 : 1, the non-carbon element sources were sodium source (NaCl), potassium source (KCl), lithium source (LiF), platinum source (Pt(OH)₂), iron source (FeCl₃), chromium source (Li₂CrO₄), and vanadium source (V₂O₃), and the weight ratio of the sodium source, the potassium source, the lithium source, the platinum source, the iron source, the chromium source and the vanadium source was 55 : 35 : 15 : 15 : 20 : 3 : 1, i.e., the weight ratio of the Group IA element sources, the Group VB element sources, the Group VIB element sources, and the Group VIII element sources was 105 : 1 : 3 : 35.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 25 : 1. Non-carbon nanoparticles are uniformly distributed between adjacent graphitized lamellae and between the graphitized lamellae and the carbon fiber. The carbon-carbon composite material has a diameter of 0.25 mm and a length of 3 mm.
(2) The carbon-carbon composite material is grey. Independent carbon particles are also distributed on the surface of the outermost graphitized lamellae, with a particle size of 0.07 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.162 : 1, and the average value of the intensity ratio of the 2D band to the G band is 0.483 : 1.
(3) The main elements contained in the carbon-carbon composite material include: carbon content 50 wt.%; sodium content 10.7 wt.%; lithium content 6.7 wt.%; lithium content 2.8 wt.%; platinum content 2.8 wt.%; iron content 3.4 wt.%; chromium content 0.2 wt.%; vanadium content 0.1 wt.%; i.e., the carbon-carbon composite material contains 50 wt.% carbon element, 20.2 wt.% Group IA metal elements, 0.1 wt.% Group VB metal elements, 0.2 wt.% Group VIB metal elements, and 6.2 wt.% Group VIII metal elements. It also contains elements with content below 0.001 wt.%, including: zinc, manganese, silver, barium, copper, magnesium, lead, and strontium.

### Example 1-13

It was implemented according to the process of Example 1-1, except that the non-carbon element sources were sodium source, potassium source, nickel source, platinum source, iron source, chromium source and vanadium source, not including lithium source.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders, and the chopped carbon fiber was 50 : 100 : 1, the non-carbon element sources were sodium source (NaCl), potassium source (KCl), nickel source (NiF₂), platinum source (Pt(OH)₂), iron source (FeCl₃), chromium source (Li₂CrO₄), and vanadium source (V₂O₃), and the weight ratio of the sodium source, the potassium source, the nickel source, the platinum source, the iron source, the chromium source and the vanadium source was 55 : 35 : 20 : 15 : 20 : 3 : 1, i.e., the weight ratio of the Group IA element sources, the Group VB element sources, the Group VIB element sources, and the Group VIII element sources was 90 : 1 : 3 : 55.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 25 : 1. Non-carbon nanoparticles are uniformly distributed between adjacent graphitized lamellae and between the graphitized lamellae and the carbon fiber. The carbon-carbon composite material has a diameter of 0.25 mm and a length of 3 mm.
(2) The carbon-carbon composite material is grey. Independent carbon particles are also distributed on the surface of the outermost graphitized lamellae, with a particle size of 0.07 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.162 : 1, and the average value of the intensity ratio of the 2D band to the G band is 0.483 : 1.
(3) The main elements contained in the carbon-carbon composite material include: carbon content 50 wt.%; sodium content 10.4 wt.%; lithium content 6.5 wt.%; nickel content 3.5 wt.%; platinum content 2.5 wt.%; iron content 3.6 wt.%; chromium content 0.2 wt.%; vanadium content 0.1 wt.%; i.e., the carbon-carbon composite material contains 50 wt.% carbon element, 16.9 wt.% Group IA metal elements, 0.1 wt.% Group VB metal elements, 0.2 wt.% Group VIB metal elements, and 9.6 wt.% Group VIII metal elements. It also contains elements with content below 0.001 wt.%, including: zinc, manganese, silver, barium, copper, magnesium, lead, and strontium.

### Example 1-14

It was implemented according to the process of Example 1-1, except that the non-carbon element sources were sodium source, potassium source, nickel source, lithium source, iron source, chromium source and vanadium source, not including platinum source.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders, and the chopped carbon fiber was 50 : 100 : 1, the non-carbon element sources were sodium source (NaCl), potassium source (KCl), nickel source (NiF₂), lithium source (LiF), iron source (FeCl₃), chromium source (Li₂CrO₄), and vanadium source (V₂O₃), and the weight ratio of the sodium source, the potassium source, the nickel source, the lithium source, the iron source, the chromium source and the vanadium source was 55 : 35 : 20 : 15 : 20 : 3 : 1, i.e., the weight ratio of the Group IA element sources, the Group VB element sources, the Group VIB element sources, and the Group VIII element sources was 105 : 1 : 3 : 40.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 25 : 1. Non-carbon nanoparticles are uniformly distributed between adjacent graphitized lamellae and between the graphitized lamellae and the carbon fiber. The carbon-carbon composite material has a diameter of 0.25 mm and a length of 3 mm.
(2) The carbon-carbon composite material is grey. Independent carbon particles are also distributed on the surface of the outermost graphitized lamellae, with a particle size of 0.07 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.162 : 1, and the average value of the intensity ratio of the 2D band to the G band is 0.483 : 1.
(3) The main elements contained in the carbon-carbon composite material include: carbon content 50 wt.%; sodium content 10.6 wt.%; lithium content 6.5 wt.%; nickel content 3.4 wt.%; lithium content 2.5 wt.%; iron content 3.2 wt.%; chromium content 0.3 wt.%; vanadium content 0.3 wt.%; i.e., the carbon-carbon composite material contains 50 wt.% carbon element, 19.6 wt.% Group IA metal elements, 0.3 wt.% Group VB metal elements, 0.3 wt.% Group VIB metal elements, and 6.6 wt.% Group VIII metal elements. It also contains elements with content below 0.001 wt.%, including: zinc, manganese, silver, barium, copper, magnesium, lead, and strontium.

### Example 1-15

It was implemented according to the process of Example 1-1, except that the non-carbon element sources were sodium source, potassium source, nickel source, lithium source, platinum source, chromium source and vanadium source, not including iron source.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders, and the chopped carbon fiber was 50 : 100 : 1, the non-carbon element sources were sodium source (NaCl), potassium source (KCl), nickel source (NiF₂), lithium source (LiF), platinum source (Pt(OH)₂), chromium source (Li₂CrO₄), and vanadium source (V₂O₃), and the weight ratio of the sodium source, the potassium source, the nickel source, the lithium source, the platinum source, the chromium source and the vanadium source was 55 : 35 : 20 : 15 : 15 : 3 : 1, i.e., the weight ratio of the Group IA element sources, the Group VB element sources, the Group VIB element sources, and the Group VIII element sources was 105 : 1 : 3 : 35.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 25 : 1. Non-carbon nanoparticles are uniformly distributed between adjacent graphitized lamellae and between the graphitized lamellae and the carbon fiber. The carbon-carbon composite material has a diameter of 0.25 mm and a length of 3 mm.
(2) The carbon-carbon composite material is grey. Independent carbon particles are also distributed on the surface of the outermost graphitized lamellae, with a particle size of 0.07 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.162 : 1, and the average value of the intensity ratio of the 2D band to the G band is 0.483 : 1.
(3) The main elements contained in the carbon-carbon composite material include: carbon content 50 wt.%; sodium content 10.4 wt.%; lithium content 6.2 wt.%; nickel content 3.3 wt.%; lithium content 2.7 wt.%; platinum content 2.4 wt.%; chromium content 0.1 wt.%; vanadium content 0.2 wt.%; i.e., the carbon-carbon composite material contains 50 wt.% carbon element, 19.3 wt.% Group IA metal elements, 0.2 wt.% Group VB metal elements, 0.1 wt.% Group VIB metal elements, and 5.7 wt.% Group VIII metal elements. It also contains elements with content below 0.001 wt.%, including: zinc, manganese, silver, barium, copper, magnesium, lead, and strontium.

### Example 1-16

It was implemented according to the process of Example 1-1, except that the non-carbon element sources did not include sodium source, potassium source and lithium source, i.e., not including Group IA elements.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders and the chopped carbon fiber was 50 : 100 : 1, the non-carbon element sources were nickel source (NiF₂), platinum source (Pt(OH)₂), iron source (FeCl₃), chromium source (Li₂CrO₄), and vanadium source (V₂O₃), and the weight ratio of the nickel source, the platinum source, the iron source, the chromium source and the vanadium source was 20 : 15 : 20 : 3 : 1, i.e., the weight ratio of the Group VB element sources, Group VIB element sources, and Group VIII element sources was 1 : 3 : 55.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 18 : 1. Non-carbon nanoparticles are uniformly distributed between adjacent graphitized lamellae and between the graphitized lamellae and the carbon fiber. The carbon-carbon composite material has a diameter of 0.20 mm and a length of 3 mm.
(2) The carbon-carbon composite material is black. Independent carbon particles are also distributed on the surface of the outermost graphitized lamellae, with a particle size of 0.03 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.161 : 1, and the average value of the intensity ratio of the 2D band to the G band is 0.482 : 1.
(3) The main elements contained in the carbon-carbon composite material include: carbon content 50 wt.%; nickel content 3.5 wt.%; platinum content 2.8 wt.%; iron content 3.2 wt.%; chromium content 0.1 wt.%; vanadium content 0.2 wt.%; i.e., the carbon-carbon composite material contains 50 wt.% carbon element, 0.2 wt.% Group VB metal elements, 0.1 wt.% Group VIB metal elements, and 9.5 wt.% Group VIII metal elements. It also contains elements with content below 0.001 wt.%, including: zinc, manganese, silver, barium, magnesium, lead, and strontium.

### Example 1-17

It was implemented according to the process of Example 1-1, except that the non-carbon element sources did not include iron source, platinum source and nickel source, i.e., not including Group VIII element sources.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders and the chopped carbon fiber was 50 : 100 : 1, the non-carbon element sources were sodium source (NaCl), potassium source (KCl), lithium source (LiF), chromium source (Li₂CrO₄), and vanadium source (V₂O₃), and the weight ratio of the sodium source, the potassium source, the lithium source, the chromium source and the vanadium source was 55 : 35 : 15 : 3 : 1, i.e., the weight ratio of the Group IA element sources, the Group VB element sources, and the Group VIB element sources was 105 : 1 : 3.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 18 : 1. Non-carbon nanoparticles are uniformly distributed between adjacent graphitized lamellae and between the graphitized lamellae and the carbon fiber. The carbon-carbon composite material has a diameter of 0.18 mm and a length of 3 mm.
(2) The carbon-carbon composite material is black. Independent carbon particles are also distributed on the surface of the outermost graphitized lamellae, with a particle size of 0.02 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.160 : 1, and the average value of the intensity ratio of the 2D band to the G band is 0.481 : 1.
(3) The main elements contained in the carbon-carbon composite material include: carbon content 50 wt.%; sodium content 10.3 wt.%; lithium content 6.5 wt.%; lithium content 3.1 wt.%; chromium content 0.1 wt.%; vanadium content 0.2 wt.%; i.e., the carbon-carbon composite material contains 50 wt.% carbon element, 19.9 wt.% Group IA metal elements, 0.2 wt.% Group VB metal elements and 0.1 wt.% Group VIB metal elements; It also contains elements with content below 0.001 wt.%, including: zinc, manganese, silver, barium, magnesium, lead, and strontium.

### Example 1-18

It was implemented according to the process of Example 1-1, except that the non-carbon element sources did not include vanadium source, i.e., not including Group VB element sources.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders, and the chopped carbon fiber was 50 : 100 : 1, the non-carbon element sources were sodium source (NaCl), potassium source (KCl), nickel source (NiF₂), lithium source (LiF), platinum source (Pt(OH)₂), iron source (FeCl₃), and chromium source (Li₂CrO₄), and the weight ratio of the sodium source, the potassium source, the nickel source, the lithium source, the platinum source, the iron source and the chromium source was 55 : 35 : 20 : 15 : 15 : 20 : 3, i.e, the weight ratio of the Group IA element sources, the Group VIB element sources, and the Group VIII element sources was 105 : 3 : 55.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 18 : 1. Non-carbon nanoparticles are uniformly distributed between adjacent graphitized lamellae and between the graphitized lamellae and the carbon fiber. The carbon-carbon composite material has a diameter of 0.19 mm and a length of 3 mm.
(2) The carbon-carbon composite material is black. Independent carbon particles are also distributed on the surface of the outermost graphitized lamellae, with a particle size of 0.03 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.162 : 1, and the average value of the intensity ratio of the 2D band to the G band is 0.483 : 1.
(3) The main elements contained in the carbon-carbon composite material include: carbon content 50 wt.%; sodium content 10.3 wt.%; lithium content 6.4 wt.%; nickel content 3.4 wt.%; lithium content 2.7 wt.%; platinum content 2.5 wt.%; iron content 3.0 wt.%; chromium content 0.1 wt.%; i.e., the carbon-carbon composite material contains 50 wt.% carbon element, 19.4 wt.% Group IA metal elements, 0.1 wt.% Group VIB metal elements, and 8.9 wt.% Group VIII metal elements. It also contains elements with content below 0.001 wt.%, including: zinc, manganese, silver, barium, magnesium, lead, and strontium.

### Example 1-19

It was implemented according to the process of Example 1-1, except that the non-carbon element sources did not include chromium source, i.e., not including Group VIB element sources.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere (gas flow of 100 mL/min),
wherein the weight ratio of the non-carbon element sources, the carbonized resin powders, and the chopped carbon fiber was 50 : 100 : 1, the non-carbon element sources were sodium source (NaCl), potassium source (KCl), nickel source (NiF₂), lithium source (LiF), platinum source (Pt(OH)₂), iron source (FeCl₃), and vanadium source (V₂O₃), and the weight ratio of the sodium source, the potassium source, the nickel source, the lithium source, the platinum source, the iron source and the vanadium source was 55 : 35 : 20 : 15 : 15 : 20 : 1, i.e., the weight ratio of the Group IA element sources, the GroupVB element sources, and the Group VIII element sources was 105 : 1 : 55.

The high-temperature furnace used isostatic graphite as the heating element. The central operating temperature of the high-temperature furnace was 2200 °C. The purity of the nitrogen atmosphere was 99.99 vol%, with an oxygen content of 40 ppm.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 18 : 1. Non-carbon nanoparticles are uniformly distributed between graphitized lamellae and between the graphitized lamellae and the carbon fiber. The carbon-carbon composite material has a diameter of 0.22 mm and a length of 3 mm.
(2) The carbon-carbon composite material is black. Independent carbon particles are also distributed on the surface of the outermost graphitized lamellae, with a particle size of 0.02 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.159 : 1, and the average value of the intensity ratio of the 2D band to the G band is 0.478 : 1.
(3) The main elements contained in the carbon-carbon composite material include: carbon content 50 wt.%; sodium content 10.4 wt.%; lithium content 6.5 wt.%; nickel content 3.6 wt.%; lithium content 2.6 wt.%; platinum content 2.4 wt.%; iron content 3.1 wt.%; vanadium content 0.2 wt.%; i.e., the carbon-carbon composite material contains 50 wt.% carbon element, 19.5 wt.% Group IA metal elements, 0.2 wt.%Group VB metal elements and 9.1 wt.% Group VIII metal elements. It also contains elements with content below 0.001 wt.%, including: zinc, manganese, silver, barium, magnesium, lead, and strontium.

### Comparative Example 1-1

It was implemented according to the process of Example 1-1, except that a chopped carbon fiber was not added; a composite material was obtained.

The composite material obtained in this comparative example was lumpy. The composite material contained 99.9 wt.% carbon and did not contain sodium, potassium, nickel, lithium, platinum, iron, chromium, and vanadium elements. It also contained elements with content below 0.001 wt.%, including: zinc, manganese, silver, barium, copper, magnesium, and strontium. Due to the lack of chopped carbon fiber, the non-carbon element particles could not form attachment points for growth, and the carbon vapor could only grow on the inner wall surface of the high-temperature furnace to form a lumpy carbonaceous material with an extremely high carbon content.

In this comparative example, because a chopped carbon fiber was not used, the carbon-carbon composite material of the present invention could not be obtained.

### Comparative Example 1-2

It was implemented according to the process of Example 1-1, except that there was no inert atmosphere protection during the reaction; a composite material was obtained.

The composite material obtained in this comparative example contained 99.9 wt.% carbon and did not contain sodium, potassium, nickel, lithium, platinum, iron, chromium, and vanadium elements. It also contained elements with content below 0.001 wt.%, including: zinc, manganese, silver, barium, copper, magnesium, and strontium.

In this comparative example, because there was no inert atmosphere protection, the carbon-carbon composite material of the present invention could not be obtained.

### Comparative Example 1-3

It was implemented according to the process of Example 1-1, except that the carbonized resin powder and the non-carbon element sources were not added to the high-temperature furnace.

The carbon-carbon composite material of the present invention was not obtained in this comparative example.

### Comparative Example 1-4

It was implemented according to the process of Example 1-1, except that the central operating temperature of the high-temperature furnace was 1200 °C. At this time, the reaction temperature was too low to allow the carbon in the carbonized resin powders to volatilize and further grow on the carbon fiber surface, and the non-carbon element particles could not adhere to the carbon fiber surface.

Therefore, the carbon-carbon composite material of the present invention was not obtained in this comparative example.

### Comparative Example 1-5

It was implemented according to the process of Example 1-1, except that the gas flow was 2000 mL/min. At this time, because the gas flow was too high, the microenvironment for the stable growth of graphitized lamellae could not be maintained, and the non-carbon element particles were unable to adhere to the surface of the carbon fiber or the graphitized lamellae.

Therefore, the carbon-carbon composite material of the present invention was not obtained in this comparative example.

### Comparative Example 1-6

It was implemented according to the process of Example 1-1, except that the gas flow was 10 mL/min.

The carbon-carbon composite material prepared in this comparative example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 3:1. Non-carbon nanoparticles are distributed between adjacent graphitized lamellae and between the graphitized lamellae and the carbon fiber. The carbon-carbon composite material has a diameter of 0.03 mm, and a length of 3 mm.
(2) The carbon-carbon composite material is gray. Independent carbon particles are also distributed on the surface of the outermost graphitized lamellae, with a particle size of 0.02 mm. The carbon-carbon composite material is curved in the axial direction, and there are lumpy protrusions on part of the surface. In the Raman spectrum of the carbon-carbon composite material, the average value of the intensity ratio of the D band to the G band is 0.161:1, and the average value of the intensity ratio of the 2D band to the G band is 0.474: 1.
(3) The main elements contained in the carbon-carbon composite material include: carbon content 96 wt.%; sodium content 0.2 wt.%; potassium content 0.3 wt.%; nickel content 0.3 wt.%; lithium content 0.5 wt.%; platinum content 0.1 wt.%; iron content 0.1 wt.%; chromium content 0.1 wt.%; vanadium content 0.2 wt.%; i.e., the carbon-carbon composite material contains 96 wt.% carbon element, 1 wt.% Group IA metal elements, 0.2 wt.% Group VB metal elements, 0.1 wt.% Group VIB metal elements, and 0.5 wt.% Group VIII metal elements. It also contains elements with content below 0.001 wt.%, including: zinc, manganese, silver, barium, copper, magnesium, lead, and strontium.

### Comparative Example 1-7

It was implemented according to the process of Example 1-1, except that the non-carbon element sources were not added.

The carbon-carbon composite material prepared in this comparative example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 19:1. The carbon-carbon composite material has a diameter of 0.2 mm, and and a length of 3 mm.
(2) The carbon-carbon composite material is gray. Independent carbon particles are also distributed on the surface of the outermost graphitized lamellae, with a particle size of 0.07 mm. The carbon-carbon composite material is curved in the axial direction, and there are lumpy protrusions on part of the surface. In the Raman spectrum of the carbon-carbon composite material, the average value of the intensity ratio of the D band to the G band is 0.159:1, and the average value of the intensity ratio of the 2D band to the G band is 0.479:1.
(3) The main elements contained in the carbon-carbon composite material include: carbon content 99.9 wt.%; it also contains elements with content below 0.001 wt.%, including: zinc, manganese, silver, barium, copper, lithium, magnesium, and strontium.

### Comparative Example 1-8

It was implemented according to the process of Example 1-1, except that the carbonized resin powder was not added.

The carbon-carbon composite material of the present invention was not obtained in this comparative example.

### Test Example 1

The electrochemical performance of the carbon-carbon composite materials prepared in the examples and the composite materials and carbon-carbon composite materials obtained in the comparative examples was tested according to the following process (since Comparative Examples 1-3 to 1-5 and Comparative Example 1-8 did not yield the carbon-carbon composite material of the present invention, the corresponding electrochemical performance was not measured).

A Chenhua electrochemical workstation (CHI760E) coupled with a rotating disk electrode was used to test catalytic activity. The test was carried out in a conventional three-electrode system, including a working electrode (rotating disk electrode), a reference electrode (saturated calomel electrode, Hg/HgO), and a counter electrode (platinum wire), with the electrolyte being 0.1M KOH.

The electrode potential was converted to the potential relative to the standard hydrogen electrode. Before testing, the working electrode required strict polishing treatment, in which, alumina powders of different particle sizes (1 µm, 0.3 µm, and 0.05 µm) were successively used to polish it until it was bright, followed by cleaning with ethanol and water, and drying for later use.

First, the electrolyte was bubbled with N₂ or O₂ for at least 30 min until gas saturation, and then the prepared working electrode coated with the carbon-carbon composite material was immersed. In the potential range from 0 V to 1.2 V, the surface of the working electrode was cleaned at a rate of 100 mV s⁻¹, and then tested at a rate of 50 mV s⁻¹. Based on the integrated area of the desorption peak region, the electrochemical active surface area (ECSA) of the carbon-carbon composite material could be calculated. The above-mentioned working electrode coated with the carbon-carbon composite material was prepared as follows: 5 wt.% PTFE (polytetrafluoroethylene) and 95 wt.% carbon-carbon composite material were mixed uniformly, and then the mixture was evenly applied onto the surface of the working electrode, ensuring that the working electrode surface was uniformly coated, with a coating thickness of 1 mm. Then, the working electrode was treated in a forced air oven at 350°C for 10 minutes before use.

The calculation equation is as follows: $ECSA = \frac{{Q}_{H}}{0.21 \times m}$

wherein Q_{H} represents the quantity of electricity desorbed, in mC; 0.21 represents the quantity of electricity of adsorbed/desorbed hydrogen per unit area of Pt atoms, in mC cm⁻²; m represents the loading of Pt on the working electrode, in g.

The results are shown in Table 1:

**Table 1**

| Ex. Nos. | Electrochemical active surface area (ECSA, m²/g) |
|---|---|
| Ex. 1-1 | 54.6 |
| Ex. 1-2 | 53.2 |
| Ex. 1-3 | 52.8 |
| Ex. 1-4 | 52.5 |
| Ex. 1-5 | 50.5 |
| Ex. 1-6 | 53.4 |
| Ex. 1-7 | 54.5 |
| Ex. 1-8 | 50.4 |
| Ex. 1-9 | 52.0 |
| Ex. 1-10 | 42.7 |
| Ex. 1-11 | 43.5 |
| Ex. 1-12 | 43.8 |
| Ex. 1-13 | 44.1 |
| Ex. 1-14 | 44.5 |
| Ex. 1-15 | 45.9 |
| Ex. 1-16 | 30.2 |
| Ex. 1-17 | 32.3 |
| Ex. 1-18 | 32.9 |
| Ex. 1-19 | 33.6 |
| CE. 1-1 | 22.4 |
| CE. 1-2 | 22.4 |
| CE. 1-3 | - |
| CE. 1-4 | - |
| CE. 1-5 | - |
| CE. 1-6 | 27.3 |
| CE. 1-7 | 23.5 |
| CE. 1-8 | - |

From the above results, it can be seen that the carbon-carbon composite material according to the present invention has a higher electrochemical active surface area, thereby increasing the aggregation concentration and the migration rate of mobile charges, which is beneficial for enhancing the electrical conductivity of the electrode material.

### Example 2-1

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere,

wherein the weight ratio of the non-carbon element sources, the carbonized resin powders, and the chopped carbon fiber was 30:80:1, and the weight ratio of the non-carbon element sources CuO, Fe₂O₃, Al₂O₃, and TiF₄ was 20:8:1:15.

The high-temperature furnace used isostatic graphite as the heating element. The central temperature was 2200 °C. The purity of nitrogen was 99.99 vol%, the oxygen concentration was 40 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) As shown in Figure 2-7, the core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 9:1. Non-carbon nanoparticles are uniformly distributed between adjacent graphitized lamellae and between the graphitized lamellae and the carbon fiber. The carbon-carbon composite material has a diameter of 0.1 mm, and a length of 3 mm.
(2) The carbon-carbon composite material is gray. There are carbon particles on the surface of the carbon-carbon composite material, with a particle size of 0.15 mm. The carbon-carbon composite material is curved in the axial direction, and part of the surface is bamboo-like and protruded (as shown in Figures 2-1, 2-6). In the Raman spectrum of the carbon-carbon composite material, the average value of the intensity ratio of the D band to the G band is 0.158:1, and the average value of the intensity ratio of the 2D band to the G band is 0.477:1.
(3) The main elements contained in the carbon-carbon composite material include: carbon content 60 wt.%; copper content 8.5 wt.%; iron content 5.5 wt.%; aluminum content 2.5 wt.%; titanium content 0.5 wt.%. It also contains elements with content below 0.001 wt.%, including: zinc, manganese, silver, barium, lithium, magnesium, lead, and strontium.

The above characteristics (1) and (2) were analyzed using a ZEISS Merlin field emission scanning electron microscope and an X-ray energy dispersive spectrometer equipped with the German ZEISS Merlin field emission scanning electron microscope.

From the elemental energy dispersive spectrums in Figures 2-2 to 2-5, it can be seen that copper (Figure 2-2), iron (Figure 2-3), aluminum (Figure 2-4), and titanium (Figure 2-5) in the composite material prepared in this example are uniformly distributed and are all nanoparticles.

The graphitized lamellae structure can be clearly seen in Figures 2-9 and 2-10. In Figure 2-11, the dark particulate substances between the graphitized lamellae are non-carbon nanoparticles.

### Example 2-2

A carbon-carbon composite material was prepared according to the following process: reacting a chopped carbon fiber (specification 24 K, length 6 mm, carbon content 95 wt.%), amorphous graphite, and non-carbon element sources in a high-temperature furnace for 150 hours under a nitrogen atmosphere,
wherein the weight ratio of the non-carbon element sources, the amorphous graphite, and the chopped carbon fiber was 90 : 190 : 1, and the weight ratio of the non-carbon element sources CuCl₂, Fe₃O₄, Al(OH)₃ and TiO₂ was 18 : 5 : 1 : 12.

The high-temperature furnace used highly oriented graphite as the heating element. The central temperature was 3000 °C. The purity of nitrogen was 99.99 vol%, the oxygen concentration was 40 ppm, and the gas flow was 350 mL/min.

A valve was installed on the pipeline connecting the high-temperature furnace and the tail gas recovery system, wherein the valve was fully open, and the inner diameter of the pipeline was 5 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 48 : 1. Non-carbon nanoparticles are uniformly distributed between adjacent graphitized lamellae and between the graphitized lamellae and the carbon fiber. The carbon-carbon composite material has a diameter of 0.5 mm and a length of 6 mm.
(2) The carbon-carbon composite material is black. There are carbon particles on the surface of the carbon-carbon composite material, with a particle size of 1.5 mm. The carbon-carbon composite material is straight in the axial direction, and there are lumpy protrusions on part of the surface. In the Raman spectrum of the carbon-carbon composite material, the average value of the intensity ratio of the D band to the G band is 0.160 : 1, and the average value of the intensity ratio of the 2D band to the G band is 0.483 : 1.
(3) The main elements contained in the carbon-carbon composite material include: carbon content 71 wt.%; copper content 9.5 wt.%; iron content 6.8 wt.%; aluminum content 3.3 wt.%; titanium content 0.7 wt.%. It also contains elements with content below 0.001 wt.%, including: zinc, manganese, silver, barium, lithium, magnesium, lead, and strontium.

### Example 2-3

A carbon-carbon composite material was prepared according to the following process: reacting a chopped carbon fiber (specification 50 K, length 9 mm, carbon content 90 wt.%), amorphous graphite, and non-carbon element sources in a high-temperature furnace for 80 hours under a nitrogen atmosphere,
wherein the weight ratio of the non-carbon element sources, the amorphous graphite, and the chopped carbon fiber was 60 : 100 : 1, and the weight ratio of the non-carbon element sources CuO, Fe₂O₃, Al₂O₃ and TiF₄ was 35 : 10 : 1 : 30.

The high-temperature furnace used isostatic graphite as the heating element. The central temperature was 2800 °C. The purity of nitrogen was 99.99 vol%, the oxygen concentration was 40 ppm, and the gas flow was 400 mL/min.

A valve was installed on the pipeline connecting the high-temperature furnace and the tail gas recovery system, wherein the valve was fully open, and the inner diameter of the pipeline was 15 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 9 mm. The single carbon fiber is wrapped by graphitized lamellae with a concentric circle structure. The ratio of the total thickness of the graphitized lamellae to the diameter of the single carbon fiber is 30 : 1. Non-carbon nanoparticles are uniformly distributed between adjacent graphitized lamellae and between the graphitized lamellae and the carbon fiber. The carbon-carbon composite material has a diameter of 0.3 mm and a length of 9 mm.
(2) The carbon-carbon composite material is grey. There are carbon particles on the surface of the carbon-carbon composite material, with a particle size of 0.09 mm. The carbon-carbon composite material is straight in the axial direction, and part of the surface is bamboo-like. In the Raman spectrum of the carbon-carbon composite material, the average value of the intensity ratio of the D band to the G band is 0.180, and the average value of the intensity ratio of the 2D band to the G band is 0.549 : 1.
(3) The main elements contained in the carbon-carbon composite material include: carbon content 61 wt.%; copper content 8.9 wt.%; iron content 7.7 wt.%; aluminum content 4.1 wt.%; titanium content 0.3 wt.%. It also contains elements with content below 0.001 wt.%, including: zinc, manganese, silver, barium, lithium, magnesium, lead, and strontium.

### Example 2-4

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 150 hours under a nitrogen atmosphere,
wherein the weight ratio of the non-carbon element sources, the amorphous graphite, and the chopped carbon fiber was 40 : 120 : 1, and the weight ratio of the non-carbon element sources CuCl₂, Fe₃O₄, Al(OH)₃ and TiO₂ was 15 : 5 : 1 : 10.

The high-temperature furnace used isostatic graphite as the heating element. The central temperature was 2800 °C. The purity of nitrogen was 99.99 vol%, the oxygen concentration was 40 ppm, and the gas flow was 500 mL/min.

A valve was installed on the pipeline connecting the high-temperature furnace and the tail gas recovery system, wherein the valve was fully open, and the inner diameter of the pipeline was 20 mm. Furthermore, along the gas flow direction, a filter screen was installed in front of the valve.

The carbon-carbon composite material prepared in this example has the following characteristics:
(1) The core is a single carbon fiber, with a diameter of 7 µm and a length of 6 mm. The single carbon fiber is wrapped by graphitized lamellae with a concentric circle structure. The ratio of the total thickness of the graphitized lamellae to the diameter of the single carbon fiber is 65 : 1. Non-carbon nanoparticles are uniformly distributed between adjacent graphitized lamellae and between the graphitized lamellae and the carbon fiber. The carbon-carbon composite material has a diameter of 0.7 mm and a length of 6 mm.
(2) The carbon-carbon composite material is black. There are carbon particles on the surface of the carbon-carbon composite material, with a particle size of 1.2 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.177 : 1, and the average value of the intensity ratio of the 2D band to the G band is 0.550 : 1.
(3) The main elements contained in the carbon-carbon composite material include: carbon content 67 wt.%; copper content 7.3 wt.%; iron content 4.2 wt.%; aluminum content 2.8 wt.%; titanium content 0.6 wt.%. It also contains elements with content below 0.001 wt.%, including: zinc, manganese, silver, barium, lithium, magnesium, lead, and strontium.

### Example 2-5

A carbon-carbon composite material was prepared according to the following process: reacting a chopped carbon fiber (specification 12 K, length 9 mm, carbon content 95 wt.%), amorphous graphite, and non-carbon element sources in a high-temperature furnace for 36 hours under a nitrogen atmosphere,
wherein the weight ratio of the non-carbon element sources, the amorphous graphite, and the chopped carbon fiber was 20 : 50 : 1, and the weight ratio of the non-carbon element sources CuCl₂, Fe₃O₄, Al(OH)₃ and TiO₂ was 10 : 5 : 1 : 10.

The high-temperature furnace used isostatic graphite as the heating element. The central temperature was 2800 °C. The purity of nitrogen was 99.99 vol%, the oxygen concentration was 40 ppm, and the gas flow was 50 mL/min.

A valve was installed on the pipeline connecting the high-temperature furnace and the tail gas recovery system, wherein the valve was fully open, and the inner diameter of the pipeline was 20 mm. Furthermore, along the gas flow direction, a filter screen was installed in front of the valve.

The carbon-carbon composite material prepared in this example has the following characteristics:
(1) The core is a single carbon fiber, with a diameter of 7 µm and a length of 9 mm. The single carbon fiber is wrapped by graphitized lamellae with a concentric circle structure. The ratio of the total thickness of the graphitized lamellae to the diameter of the single carbon fiber is 58 : 1. Non-carbon nanoparticles are uniformly distributed between adjacent graphitized lamellae and between the graphitized lamellae and the carbon fiber. The carbon-carbon composite material has a diameter of 0.8 mm and a length of 9 mm.
(2) The carbon-carbon composite material is black. There are carbon particles on the surface of the carbon-carbon composite material, with a particle size of 1.3 mm. The carbon-carbon composite material is curved in the axial direction, and part of the surface is bamboo-like or protruded. In the Raman spectrum of the carbon-carbon composite material, the average value of the intensity ratio of the D band to the G band is 0.186 : 1, and the average value of the intensity ratio of the 2D band to the G band is 0.555 : 1.
(3) The main elements contained in the carbon-carbon composite material include: carbon content 69 wt.%; copper content 7.5 wt.%; iron content 4.9 wt.%; aluminum content 2.5 wt.%; titanium content 0.8 wt.%. It also contains elements with content below 0.001 wt.%, including: zinc, manganese, silver, barium, lithium, magnesium, lead, and strontium.

### Example 2-6

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 120 hours under a nitrogen atmosphere,
wherein the weight ratio of the non-carbon element sources, the amorphous graphite, and the chopped carbon fiber was 30 : 80 : 1, and the weight ratio of the non-carbon element sources CuCl₂, Fe₃O₄, Al(OH)₃ and TiO₂ was 25 : 5 : 1 : 20.

The high-temperature furnace used isostatic graphite as the heating element. The central temperature was 2800 °C. The purity of nitrogen was 99.99 vol%, the oxygen concentration was 20 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 100 : 1. Non-carbon nanoparticles are uniformly distributed between adjacent graphitized lamellae and between the graphitized lamellae and the carbon fiber. The carbon-carbon composite material has a diameter of 1.0 mm and a length of 6 mm.
(2) The carbon-carbon composite material is black. There are carbon particles on the surface of the carbon-carbon composite material, with a particle size of 1.5 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.183 : 1, and the average value of the intensity ratio of the 2D band to the G band is 0.551 : 1.
(3) The main elements contained in the carbon-carbon composite material include: carbon content 66 wt.%; copper content 7.2 wt.%; iron content 4.4 wt.%; aluminum content 2.2 wt.%; titanium content 0.5 wt.%. It also contains elements with content below 0.001 wt.%, including: zinc, manganese, silver, barium, lithium, magnesium, lead, and strontium.

### Example 2-7

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 144 hours under a nitrogen atmosphere,
wherein the weight ratio of the non-carbon element sources, the amorphous graphite, and the chopped carbon fiber was 40 : 100 : 1, and the weight ratio of the non-carbon element sources CuCl₂, Fe₃O₄, Al(OH)₃ and TiO₂ was 15 : 5 : 1 : 10.

The high-temperature furnace used isostatic graphite as the heating element. The central temperature was 2800 °C. The purity of nitrogen was 99.99 vol%, the oxygen concentration was 20 ppm, and the gas flow was 200 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 41 : 1. Non-carbon nanoparticles are uniformly distributed between adjacent graphitized lamellae and between the graphitized lamellae and the carbon fiber. The carbon-carbon composite material has a diameter of 0.4 mm and a length of 5 mm.
(2) The carbon-carbon composite material is black. There are carbon particles on the surface of the carbon-carbon composite material, with a particle size of 0.6 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.184 : 1, and the average value of the intensity ratio of the 2D band to the G band is 0.552 : 1.
(3) The main elements contained in the carbon-carbon composite material include: carbon content 65 wt.%; copper content 7.1 wt.%; iron content 4.1 wt.%; aluminum content 2.6 wt.%; titanium content 0.5 wt.%. It also contains elements with content below 0.001 wt.%, including: zinc, manganese, silver, barium, lithium, magnesium, lead, and strontium.

### Example 2-8

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 72 hours under a nitrogen atmosphere,
wherein the weight ratio of the non-carbon element sources, the amorphous graphite, and the chopped carbon fiber was 70 : 120 : 1, and the weight ratio of the non-carbon element sources CuCl₂, Fe₃O₄, Al(OH)₃ and TiO₂ was 40 : 12 : 1 : 20.

The high-temperature furnace used isostatic graphite as the heating element. The central temperature was 2800 °C. The purity of nitrogen was 99.99 vol%, the oxygen concentration was 20 ppm, and the gas flow was 300 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 49 : 1. Non-carbon nanoparticles are uniformly distributed between adjacent graphitized lamellae and between the graphitized lamellae and the carbon fiber. The carbon-carbon composite material has a diameter of 0.5 mm and a length of 6 mm.
(2) The carbon-carbon composite material is black. There are carbon particles on the surface of the carbon-carbon composite material, with a particle size of 1 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.179 : 1, and the average value of the intensity ratio of the 2D band to the G band is 0.549 : 1.
(3) The main elements contained in the carbon-carbon composite material include: carbon content 65 wt.%; copper content 7.2 wt.%; iron content 4.4 wt.%; aluminum content 2.3 wt.%; titanium content 0.2 wt.%. It also contains elements with content below 0.001 wt.%, including: zinc, manganese, silver, barium, lithium, magnesium, lead, and strontium.

### Example 2-9

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 48 hours under a nitrogen atmosphere,
wherein the weight ratio of the non-carbon element sources, the amorphous graphite, and the chopped carbon fiber was 80 : 110 : 1, and the weight ratio of the non-carbon element sources CuCl₂, Fe₃O₄, Al(OH)₃ and TiO₂ was 10 : 10 : 1 : 10.

The high-temperature furnace used isostatic graphite as the heating element. The central temperature was 2800 °C. The purity of nitrogen was 99.99 vol%, the oxygen concentration was 20 ppm, and the gas flow was 500 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 90 : 1. Non-carbon nanoparticles are uniformly distributed between adjacent graphitized lamellae and between the graphitized lamellae and the carbon fiber. The carbon-carbon composite material has a diameter of 0.9 mm and a length of 6 mm.
(2) The carbon-carbon composite material is black. There are carbon particles on the surface of the carbon-carbon composite material, with a particle size of 1.2 mm. The carbon-carbon composite material is curved in the axial direction, and there are lumpy protrusions distributed on part of the surface. In the Raman spectrum of the carbon-carbon composite material, the intensity ratio of the D band to the G band is 0.179 : 1, and the intensity ratio of the 2D band to the G band is 0.553 : 1.
(3) The main elements contained in the carbon-carbon composite material include: carbon content 68 wt.%; copper content 6.8 wt.%; iron content 4.9 wt.%; aluminum content 2.8 wt.%; titanium content 1.2 wt.%. It also contains elements with content below 0.001 wt.%, including: zinc, manganese, silver, barium, lithium, magnesium, lead, and strontium.

### Example 2-10

It was implemented according to the process of Example 2-1, except that the titanium source TiF₄ was not added_{∘}

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere,
wherein the weight ratio of the non-carbon element sources, the carbonized resin powders, and the chopped carbon fiber was 30 : 80 : 1, and the weight ratio of the non-carbon element sources CuO, Fe₂O₃ and Al₂O₃ was 20 : 8 : 1.

The high-temperature furnace used isostatic graphite as the heating element. The central temperature was 2200 °C. The purity of nitrogen was 99.99 vol%, the oxygen concentration was 40 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 8 : 1. Non-carbon nanoparticles are uniformly distributed between adjacent graphitized lamellae and between the graphitized lamellae and the carbon fiber. The carbon-carbon composite material has a diameter of 0.09 mm and a length of 3 mm.
(2) The carbon-carbon composite material is grey. There are carbon particles on the surface of the carbon-carbon composite material, with a particle size of 0.05 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.156 : 1, and the average value of the intensity ratio of the 2D band to the G band is 0.475 : 1.
(3) The main elements contained in the carbon-carbon composite material include: carbon content 60 wt.%; copper content 8.5 wt.%; iron content 5.5 wt.%; aluminum content 3 wt.%. It also contains elements with content below 0.001 wt.%, including: zinc, manganese, silver, barium, lithium, magnesium, lead, and strontium.

### Example 2-11

It was implemented according to the process of Example 2-1, except that the aluminum source Al₂O₃ and titanium source TiF₄ were not added.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere,
wherein the weight ratio of the non-carbon element sources, the carbonized resin powders, and the chopped carbon fiber was 30 : 80 : 1, and the weight ratio of the non-carbon element sources CuO and Fe₂O₃ was 20 : 8.

The high-temperature furnace used isostatic graphite as the heating element. The central temperature was 2200°C. The purity of nitrogen was 99.99 vol%, the oxygen concentration was 40 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 7.8 : 1. Non-carbon nanoparticles are uniformly distributed between adjacent graphitized lamellae and between the graphitized lamellae and the carbon fiber. The carbon-carbon composite material has a diameter of 0.087mm and a length of 3 mm.
(2) The carbon-carbon composite material is grey. There are carbon particles on the surface of the carbon-carbon composite material, with a particle size of 0.05 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.157 : 1, and the average value of the intensity ratio of the 2D band to the G band is 0.476 : 1.
(3) The main elements contained in the carbon-carbon composite material include: carbon content 60 wt.%; copper content 8.5 wt.%; iron content 8.0 wt.%. It also contains elements with content below 0.001 wt.%, including: zinc, manganese, silver, barium, lithium, magnesium, lead, and strontium.

### Example 2-12

It was implemented according to the process of Example 2-1, except that the iron source Fe₂O₃, the aluminum source Al₂O₃ and the titanium source TiF₄ were not added.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere,
wherein the weight ratio of the non-carbon element sources, the carbonized resin powders, and the chopped carbon fiber was 30 : 80 : 1. The non-carbon element sources were CuO.

The high-temperature furnace used isostatic graphite as the heating element. The central temperature was 2200 °C. The purity of nitrogen was 99.99 vol%, the oxygen concentration was 40 ppm, and the gas flow was 100 mL/min,

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 7.6 : 1. Non-carbon nanoparticles are uniformly distributed between adjacent graphitized lamellae and between the graphitized lamellae and the carbon fiber. The carbon-carbon composite material has a diameter of 0.085 mm and a length of 3 mm.
(2) The carbon-carbon composite material is grey. There are carbon particles on the surface of the carbon-carbon composite material, with a particle size of 0.05 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.159 : 1, and the average value of the intensity ratio of the 2D band to the G band is 0.490 : 1.
(3) The main elements contained in the carbon-carbon composite material include: carbon content 60 wt.%; copper content 15.5 wt.%. It also contains elements with content below 0.001 wt.%, including: zinc, manganese, silver, barium, lithium, magnesium, lead, and strontium.

### Comparative Example 2-1

It was implemented according to the process of Example 2-1, except that a chopped carbon fiber was not added to the high-temperature furnace.

In this comparative example, due to the lack of chopped carbon fiber, the non-carbon element particles could not form attachment points for growth, and the carbon vapor could only grow on the inner wall surface of the high-temperature furnace to form a lumpy carbonaceous material with an extremely high carbon content, making it impossible to obtain the carbon-carbon composite material of the present invention.

The material obtained in this comparative example was a lumpy product formed from the carbon source, containing 99.9 wt.% carbon and no Cu, Fe, Al, or Ti.

### Comparative Example 2-2

It was implemented according to the process of Example 2-1, except that there was no inert atmosphere protection during the reaction process.

Due to the lack of inert atmosphere protection, the carbonized resin powders were oxidized to carbon dioxide, and the chopped carbon fiber with better temperature resistance was shattered into a morphologically uneven, surface-oxidized and etched chopped carbon fiber. It was impossible to form a concentric circle structure with multiple graphitized lamellae wrapping a single carbon fiber and it was also impossible to fill nano-sized non-carbon element particles. Therefore, the carbon-carbon composite material of the present invention could not be obtained.

The material obtained in this comparative example contained 99.9 wt.% carbon and no Cu, Fe, Al, or Ti.

### Comparative Example 2-3

It was implemented according to the process of Example 2-1, except that the carbonized resin powder and the non-carbon element sources were not added to the high-temperature furnace.

The material obtained in this comparative example was a product formed from the chopped carbon fiber, containing 99.9 wt.% carbon and no Cu, Fe, Al, or Ti. The carbon-carbon composite material of the present invention could not be obtained.

### Comparative Example 2-4

It was implemented according to the process of Example 2-1, except that the central temperature was 1200 °C.

In this comparative example, because the temperature was too low, the carbon in the carbonized resin powders could not further grow on the surface of the single carbon fiber, and the non-carbon element particles could not adhere to the surface of the carbon fiber or the graphite lamella. The carbon-carbon composite material of the present invention could not be obtained.

The material obtained in this comparative example was a mixture formed after each independent reaction of the chopped carbon fiber, the carbonized resin powders, and the non-carbon element sources.

### Comparative Example 2-5

It was implemented according to the process of Example 2-1, except that the gas flow was 2000 mL/min.

In this comparative example, because the gas flow was too high, the microenvironment for the stable growth of graphitized lamellae could not be maintained, and the non-carbon element particles were unable to adhere to the surface of the carbon fiber or the graphite lamella. The carbon-carbon composite material of the present invention could not be obtained.

The material obtained in this comparative example was a mixture formed after each independent reaction of the chopped carbon fiber, the carbonized resin powders, and the non-carbon element sources.

### Comparative Example 2-6

It was implemented according to the process of Example 2-1, except that the non-carbon element sources CuO, Fe₂O₃, Al₂O₃, and TiF₄ were not added to the high-temperature furnace.

The carbon-carbon composite material prepared in this comparative example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 10:1. Non-carbon nanoparticles are uniformly distributed between adjacent graphitized lamellae and between the graphitized lamellae and the carbon fiber. The carbon-carbon composite material has a diameter of 0.1 mm, and a length of 3 mm.
(2) The carbon-carbon composite material is gray. There are carbon particles on the surface of the carbon-carbon composite material, with a particle size of 0.05 mm. The carbon-carbon composite material is curved in the axial direction, and there are lumpy protrusions on part of the surface. In the Raman spectrum of the carbon-carbon composite material, the average value of the intensity ratio of the D band to the G band is 0.182:1, and the average value of the intensity ratio of the 2D band to the G band is 0.545:1.
(3) The main elements contained in the carbon-carbon composite material include: carbon content 99.9 wt.%; it also contains elements with content below 0.001 wt.%, including: zinc, manganese, silver, barium, lithium, magnesium, lead, and strontium.

### Comparative Example 2-7

It was implemented according to the process of Example 2-1, except that the gas flow was 10 mL/min.

The carbon-carbon composite material prepared in this comparative example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 1.1:1. Non-carbon nanoparticles are uniformly distributed between adjacent graphitized lamellae and between the graphitized lamellae and the carbon fiber. The carbon-carbon composite material has a diameter of 0.015 mm, and a length of 3 mm.
(2) The carbon-carbon composite material is gray. There are carbon particles on the surface of the carbon-carbon composite material, with a particle size of 0.01 mm. The carbon-carbon composite material is curved in the axial direction, and there are lumpy protrusions on part of the surface. In the Raman spectrum of the carbon-carbon composite material, the average value of the intensity ratio of the D band to the G band is 0.177:1, and the average value of the intensity ratio of the 2D band to the G band is 0.530:1.
(3) The main elements contained in the carbon-carbon composite material include: carbon content 95 wt.%; copper content 0.6 wt.%; iron content 0.1 wt.%; aluminum content 0.2 wt.%; titanium content 0.05 wt.%. It also contains elements with content below 0.001 wt.%, including: zinc, manganese, silver, barium, lithium, magnesium, lead, and strontium.

### Test Example 2

The resistivity of the materials prepared in the examples and comparative examples was tested according to the national standard GB/T24525-2009 "Method for determination of resistivity of carbon materials". The results are shown in Table 2, wherein the smaller the resistivity, the better the electrical conductivity.

The corrosion resistance test method for the materials prepared in the examples and comparative examples was as follows: the material was placed in a mixed solution of a concentration of 100 wt.% hydrofluoric acid and nitric acid (weight ratio of hydrofluoric acid to nitric acid was 1:2) for testing. After corrosion for 300 **h,** the corrosion rate (c%) of the material was calculated. The corrosion rate was the ratio of the mass difference of the material before and after corrosion to the mass of the material before corrosion. The results are shown in Table 2. The smaller the corrosion rate, the better the corrosion resistance.

**Table 2**

| Ex. Nos. | Resistivity (Ω•m) | Corrosion rate (%) |
|---|---|---|
| Ex. 2-1 | 6.5×10⁻⁶ | 0.03 |
| Ex. 2-2 | 11.5×10⁻⁶ | 0.13 |
| Ex. 2-3 | 14.5×10⁻⁶ | 0.08 |
| Ex. 2-4 | 13.5×10⁻⁶ | 0.09 |
| Ex. 2-5 | 12.0×10⁻⁶ | 0.07 |
| Ex. 2-6 | 8.2×10⁻⁶ | 0.02 |
| Ex. 2-7 | 6.3×10⁻⁶ | 0.04 |
| Ex. 2-8 | 7.9×10⁻⁶ | 0.03 |
| Ex. 2-9 | 7.5×10⁻⁶ | 0.08 |
| Ex. 2-10 | 7.4×10⁻⁶ | 0.11 |
| Ex. 2-11 | 6.2×10⁻⁶ | 0.05 |
| Ex. 2-12 | 6.8×10⁻⁶ | 0.10 |
| CE. 2-1 | 16.8×10⁻⁶ | 0.38 |
| CE. 2-2 | 6.9×10⁻⁴ | 0.73 |
| CE. 2-3 | 6.7×10⁻⁴ | 0.53 |
| CE. 2-4 | 6.5×10⁻⁴ | 0.70 |
| CE. 2-5 | 8.3×10⁻⁴ | 0.62 |
| CE. 2-6 | 4.9×10⁻³ | 0.95 |
| CE. 2-7 | 6.6×10⁻⁵ | 1.10 |

From Table 2, it can be seen that the resistivity and corrosion rate of the materials in the examples were significantly lower than those in the comparative examples. It can be seen that the carbon-carbon composite material according to the present invention has excellent electrical conductivity and corrosion resistance.

### Example 3-1

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere,
wherein the weight ratio of the non-carbon element sources, the carbonized resin powders, and the chopped carbon fiber was 40:80:1, and the weight ratio of the non-carbon element sources SiO₂, ZrO₂, MgSO₄, and Ni(OH)₂ was 3:2:1:0.1.

The high-temperature furnace used isostatic graphite as the heating element. The central operating temperature of the high-temperature furnace was 2200 °C. The purity of nitrogen was 99.99 vol%, the oxygen concentration was 40 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example (macroscopic morphology image shown in Figure 3-1) has the following characteristics:
(1) As shown in Figure 3-6, the core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 19:1. Non-carbon nanoparticles are uniformly distributed between adjacent graphitized lamellae and between the graphitized lamellae and the carbon fiber. The carbon-carbon composite material has a diameter of 0.2 mm, and a length of 3 mm.
(2) The carbon-carbon composite material is gray. There are carbon particles on the surface of the carbon-carbon composite material, with a particle size of 0.06 mm. The carbon-carbon composite material is curved in the axial direction, and there are lumpy protrusions on part of the surface. In the Raman spectrum of the carbon-carbon composite material, the average value of the intensity ratio of the D band to the G band is 0.163:1, and the average value of the intensity ratio of the 2D band to the G band is 0.482:1.
(3) The main elements contained in the carbon-carbon composite material include: C content 56 wt.%; Si content 8.2 wt.%; Zr content 5.8 wt.%; Mg content 2.7 wt.%; Ni content 0.3 wt.%; it also contains elements with content below 0.001 wt.%, including: zinc, manganese, silver, barium, copper, lithium, lead, and strontium.

The above characteristics (1) and (2) were analyzed using a ZEISS Merlin field emission scanning electron microscope and an X-ray energy dispersive spectrometer equipped with the German ZEISS Merlin field emission scanning electron microscope.

From the elemental energy dispersive spectrums in Figures 3-2 to 3-5, it can be seen that Si (Figure 3-2), Zr (Figure 3-3), Mg (Figure 3-4), and Ni (Figure 3-5) in the composite material prepared in this example are uniformly distributed and are all nanoparticles.

### Example 3-2

A carbon-carbon composite material was prepared according to the following process: reacting a chopped carbon fiber (specification 24 K, length 6 mm, carbon content 95 wt.%), amorphous graphite, and non-carbon element sources in a high-temperature furnace for 100 hours under a nitrogen atmosphere,
wherein the weight ratio of the non-carbon element sources, the amorphous graphite, and the chopped carbon fiber was 80 : 150 : 1, and the weight ratio of the non-carbon element sources SiF₄, Na₂ZrF₆, MgCl₂ and NiF₂ was 3 : 2 : 1 : 0.17.

The high-temperature furnace used highly oriented graphite as the heating element. The central operating temperature of the high-temperature furnace was 2200 °C. The purity of nitrogen was 99.99 vol%, the oxygen concentration was 40 ppm, and the gas flow was 200 mL/min.

A valve was installed on the pipeline connecting the high-temperature furnace and the tail gas recovery system, wherein the valve was fully open, and the inner diameter of the pipeline was 5 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 58 : 1. Non-carbon nanoparticles are uniformly distributed between adjacent graphitized lamellae and between the graphitized lamellae and the carbon fiber. The carbon-carbon composite material has a diameter of 0.6 mm and a length of 6 mm.
(2) The carbon-carbon composite material is black. There are carbon particles on the surface of the carbon-carbon composite material, with a particle size of 1.8 mm. The carbon-carbon composite material is straight in the axial direction, and part of the surface is bamboo-like, on which lumpy protrusions were distributed. In the Raman spectrum of the carbon-carbon composite material, the average value of the intensity ratio of the D band to the G band is 0.162 : 1, and the average value of the intensity ratio of the 2D band to the G band is 0.475 : 1.
(3) The main elements contained in the carbon-carbon composite material include: C content 65 wt.%; Si content 9.3 wt.%; Zr content 6.3 wt.%; Mg content 3 wt.%; Ni content 0.6 wt.%; It also contains elements with content below 0.001 wt.%, including: zinc, manganese, silver, barium, copper, lithium, lead, and strontium.

### Example 3-3

A carbon-carbon composite material was prepared according to the following process: reacting a chopped carbon fiber (specification 50 K, length 9 mm, carbon content 90 wt.%), carbonized resin powders, and non-carbon element sources in a high-temperature furnace for 80 hours under a nitrogen atmosphere,
wherein the weight ratio of the non-carbon element sources, the carbonized resin powders, and the chopped carbon fiber was 60 : 110 : 1, and the weight ratio of the non-carbon element sources SiO₂, ZrO₂, MgSO₄ and Ni(OH)₂ was 2.1 : 1.6 : 1 : 0.14.

The high-temperature furnace used isostatic graphite as the heating element. The central operating temperature of the high-temperature furnace was 2800 °C. The purity of nitrogen was 99.99 vol%, the oxygen concentration was 40 ppm, and the gas flow was 400 mL/min.

A valve was installed on the pipeline connecting the high-temperature furnace and the tail gas recovery system, wherein the valve was fully open, and the inner diameter of the pipeline was 15 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 9 mm. The single carbon fiber is wrapped by graphitized lamellae with a concentric circle structure. The ratio of the total thickness of the graphitized lamellae to the diameter of the single carbon fiber is 49 : 1. Non-carbon nanoparticles are uniformly distributed between adjacent graphitized lamellae and between the graphitized lamellae and the carbon fiber. The carbon-carbon composite material has a diameter of 0.5 mm and a length of 9 mm.
(2) The carbon-carbon composite material is grey. There are carbon particles on the surface of the carbon-carbon composite material, with a particle size of 0.08 mm. The carbon-carbon composite material is straight in the axial direction, and part of the surface is bamboo-like. In the Raman spectrum of the carbon-carbon composite material, the average value of the intensity ratio of the D band to the G band is 0.182, and the average value of the intensity ratio of the 2D band to the G band is 0.553 : 1.
(3) The main elements contained in the carbon-carbon composite material include: C content 64 wt.%; Si content 8.6 wt.%; Zr content 7.2 wt.%; Mg content 4.5 wt.%; Ni content 0.7 wt.%; It also contains elements with content below 0.001 wt.%, including: zinc, manganese, silver, barium, copper, lithium, lead, and strontium.

### Example 3-4

A carbon-carbon composite material was prepared according to the following process: reacting a chopped carbon fiber (specification 12 K, length 6 mm, carbon content 95 wt.%), amorphous graphite, and non-carbon element sources in a high-temperature furnace for 150 hours under a nitrogen atmosphere,
wherein the weight ratio of the non-carbon element sources, the amorphous graphite, and the chopped carbon fiber was 40 : 100 : 1, and the weight ratio of the non-carbon element sources non-carbon element sources SiF₄, Na₂ZrF₆, MgCl₂ and NiF₂ was 2.1 : 1.4 : 1: 0.14.

The high-temperature furnace used isostatic graphite as the heating element. The central operating temperature of the high-temperature furnace was 2800 °C. The purity of nitrogen was 99.99 vol%, the oxygen concentration was 40 ppm, and the gas flow was 500 mL/min.

A valve was installed on the pipeline connecting the high-temperature furnace and the tail gas recovery system, wherein the valve was fully open, and the inner diameter of the pipeline was 20 mm. Furthermore, along the gas flow direction, a filter screen was installed in front of the valve.

The carbon-carbon composite material prepared in this example has the following characteristics:
(1) The core is a single carbon fiber, with a diameter of 7 µm and a length of 6 mm. The single carbon fiber is wrapped by graphitized lamellae with a concentric circle structure. The ratio of the total thickness of the graphitized lamellae to the diameter of the single carbon fiber is 58 : 1. Non-carbon nanoparticles are uniformly distributed between adjacent graphitized lamellae and between the graphitized lamellae and the carbon fiber. The carbon-carbon composite material has a diameter of 0.6 mm and a length of 6 mm.
(2) The carbon-carbon composite material is black. There are carbon particles on the surface of the carbon-carbon composite material, with a particle size of 1.3 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.178 : 1, and the average value of the intensity ratio of the 2D band to the G band is 0.552 : 1.
(3) The main elements contained in the carbon-carbon composite material include: C content 70 wt.%; Si content 7.0 wt.%; Zr content 3.8 wt.%; Mg content 2.9 wt.%; Ni content 0.5 wt.%; It also contains elements with content below 0.001 wt.%, including: zinc, manganese, silver, barium, copper, lithium, lead, and strontium.

### Example 3-5

A carbon-carbon composite material was prepared according to the following process: reacting a chopped carbon fiber (specification 12 K, length 9 mm, carbon content 95 wt.%), carbonized resin powders, and non-carbon element sources in a high-temperature furnace for 36 hours under a nitrogen atmosphere,
wherein the weight ratio of the non-carbon element sources, the carbonized resin powders, and the chopped carbon fiber was 25 : 60 : 1, and the weight ratio of the non-carbon element sources SiO₂, ZrO₂, MgSO₄ and Ni(OH)₂ was 2 : 1.5 : 1 : 0.1.

The high-temperature furnace used isostatic graphite as the heating element. The central operating temperature of the high-temperature furnace was 2800 °C. The purity of nitrogen was 99.99 vol%, the oxygen concentration was 40 ppm, and the gas flow was 50 mL/min,

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 7 µm and a length of 9 mm. The single carbon fiber is wrapped by graphitized lamellae with a concentric circle structure. The ratio of the total thickness of the graphitized lamellae to the diameter of the single carbon fiber is 15 : 1. Non-carbon nanoparticles are uniformly distributed between adjacent graphitized lamellae and between the graphitized lamellae and the carbon fiber. The carbon-carbon composite material has a diameter of 0.2 mm and a length of 9 mm.
(2) The carbon-carbon composite material is black. There are carbon particles on the surface of the carbon-carbon composite material, with a particle size of 0.5 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.187 : 1, and the average value of the intensity ratio of the 2D band to the G band is 0.558 : 1.
(3) The main elements contained in the carbon-carbon composite material include: C content 83 wt.%; Si content 3.0 wt.%; Zr content 2.8 wt.%; Mg content 3.1 wt.%; Ni content 0.2 wt.%; It also contains elements with content below 0.001 wt.%, including: zinc, manganese, silver, barium, copper, lithium, lead, and strontium.

### Example 3-6

A carbon-carbon composite material was prepared according to the following process: reacting a chopped carbon fiber (specification 12 K, length 6 mm, carbon content 95 wt.%), carbonized resin powders, and non-carbon element sources in a high-temperature furnace for 120 hours under a nitrogen atmosphere,
wherein the weight ratio of the non-carbon element sources, the carbonized resin powders, and the chopped carbon fiber was 90 : 190 : 1, and the weight ratio of the non-carbon element sources SiO₂, ZrO₂, MgSO₄ and Ni(OH)₂ was 3.6 : 3 : 1 : 0.2.

The high-temperature furnace used isostatic graphite as the heating element. The central operating temperature of the high-temperature furnace was 2800 °C. The purity of nitrogen was 99.99 vol%, the oxygen concentration was 20 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 60 : 1. Non-carbon nanoparticles are uniformly distributed between adjacent graphitized lamellae and between the graphitized lamellae and the carbon fiber. The carbon-carbon composite material has a diameter of 0.6 mm and a length of 6 mm.
(2) The carbon-carbon composite material is black. There are carbon particles on the surface of the carbon-carbon composite material, with a particle size of 0.2 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.187 : 1, and the average value of the intensity ratio of the 2D band to the G band is 0.555 : 1.
(3) The main elements contained in the carbon-carbon composite material include: C content 75 wt.%; Si content 5 wt.%; Zr content 6.2 wt.%; Mg content 1.3 wt.%; Ni content 0.4 wt.%; It also contains elements with content below 0.001 wt.%, including: zinc, manganese, silver, barium, copper, lithium, lead, and strontium.

### Example 3-7

A carbon-carbon composite material was prepared according to the following process: reacting a chopped carbon fiber (specification 12 K, length 6 mm, carbon content 95 wt.%), carbonized resin powders, and non-carbon element sources in a high-temperature furnace for 144 hours under a nitrogen atmosphere,
wherein the weight ratio of the non-carbon element sources, the carbonized resin powders, and the chopped carbon fiber was 29 : 60 : 1, and the weight ratio of the non-carbon element sources SiO₂, ZrO₂, MgSO₄ and Ni(OH)₂ was 2.6 : 1.6 : 1 : 0.2.

The high-temperature furnace used isostatic graphite as the heating element. The central operating temperature of the high-temperature furnace was 2800 °C. The purity of nitrogen was 99.99 vol%, the oxygen concentration was 20 ppm, and the gas flow was 200 mL/min,

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 32 : 1. Non-carbon nanoparticles are uniformly distributed between adjacent graphitized lamellae and between the graphitized lamellae and the carbon fiber. The carbon-carbon composite material has a diameter of 0.3 mm and a length of 6 mm.
(2) The carbon-carbon composite material is black. There are carbon particles on the surface of the carbon-carbon composite material, with a particle size of 0.3 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.185 : 1, and the average value of the intensity ratio of the 2D band to the G band is 0.554 : 1.
(3) The main elements contained in the carbon-carbon composite material include: C content 64 wt.%; Si content 7.1 wt.%; Zr content 4.2 wt.%; Mg content 2.3 wt.%; Ni content 0.6 wt.%; It also contains elements with content below 0.001 wt.%, including: zinc, manganese, silver, barium, copper, lithium, lead, and strontium.

### Example 3-8

A carbon-carbon composite material was prepared according to the following process: reacting a chopped carbon fiber (specification 12 K, length 6 mm, carbon content 95 wt.%), carbonized resin powders, and non-carbon element sources in a high-temperature furnace for 72 hours under a nitrogen atmosphere,
wherein the weight ratio of the non-carbon element sources, the carbonized resin powders, and the chopped carbon fiber was 50 : 90 : 1, and the weight ratio of the non-carbon element sources SiO₂, ZrO₂, MgSO₄ and Ni(OH)₂ was 2.4 : 1.8 : 1 : 0.2.

The high-temperature furnace used isostatic graphite as the heating element. The central operating temperature of the high-temperature furnace was 2800 °C. The purity of nitrogen was 99.99 vol%, the oxygen concentration was 20 ppm, and the gas flow was 300 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 38 : 1. Non-carbon nanoparticles are uniformly distributed between adjacent graphitized lamellae and between the graphitized lamellae and the carbon fiber. The carbon-carbon composite material has a diameter of 0.4 mm and a length of 6 mm.
(2) The carbon-carbon composite material is black. There are carbon particles on the surface of the carbon-carbon composite material, with a particle size of 1.1 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.181 : 1, and the average value of the intensity ratio of the 2D band to the G band is 0.553 : 1.
(3) The main elements contained in the carbon-carbon composite material include: C content 55 wt.%; Si content 9.0 wt.%; Zr content 7.1 wt.%; Mg content 3 wt.%; Ni content 0.8 wt.%; It also contains elements with content below 0.001 wt.%, including: zinc, manganese, silver, barium, copper, lithium, lead, and strontium.

### Example 3-9

A carbon-carbon composite material was prepared according to the following process: reacting a chopped carbon fiber (specification 12 K, length 6 mm, carbon content 95 wt.%), carbonized resin powders, and non-carbon element sources in a high-temperature furnace for 48 hours under a nitrogen atmosphere,
wherein the weight ratio of the non-carbon element sources, the carbonized resin powders, and the chopped carbon fiber was 65 : 130 : 1, and the weight ratio of the non-carbon element sources SiO₂, ZrO₂, MgSO₄ and Ni(OH)₂ was 2 : 1 : 1 : 0.2.

The high-temperature furnace used isostatic graphite as the heating element. The central operating temperature of the high-temperature furnace was 2800 °C. The purity of nitrogen was 99.99 vol%, the oxygen concentration was 20 ppm, and the gas flow was 500 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 80 : 1. Non-carbon nanoparticles are uniformly distributed between adjacent graphitized lamellae and between the graphitized lamellae and the carbon fiber. The carbon-carbon composite material has a diameter of 0.8 mm and a length of 6 mm.
(2) The carbon-carbon composite material is black. There are carbon particles on the surface of the carbon-carbon composite material, with a particle size of 1.4 mm. The carbon-carbon composite material is curved in the axial direction, and there are lumpy protrusions distributed on part of the surface. In the Raman spectrum of the carbon-carbon composite material, the intensity ratio of the D band to the G band is 0.178 : 1, and the intensity ratio of the 2D band to the G band is 0.552 : 1.
(3) The main elements contained in the carbon-carbon composite material include: C content 69 wt.%; Si content 8.0 wt.%; Zr content 2.2 wt.%; Mg content 2.7 wt.%; Ni content 0.8 wt.%; It also contains elements with content below 0.001 wt.%, including: zinc, manganese, silver, barium, copper, lithium, lead, and strontium.

### Example 3-10

It was implemented according to the process of Example 2-1, except that the nickel source Ni(OH)₂ was not added.

A carbon-carbon composite material was prepared according to the following process: reacting a chopped carbon fiber (specification 12 K, length 3 mm, carbon content 90 wt.%), carbonized resin powders, and non-carbon element sources in a high-temperature furnace for 48 hours under a nitrogen atmosphere,
wherein the weight ratio of the non-carbon element sources, the carbonized resin powders, and the chopped carbon fiber was 40 : 80 : 1, and the weight ratio of the non-carbon element sources SiO₂, ZrO₂ and MgSO₄ was 3 : 2 : 1.

The high-temperature furnace used isostatic graphite as the heating element. The central operating temperature of the high-temperature furnace was 2200 °C. The purity of nitrogen was 99.99 vol%, the oxygen concentration was 40 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 21 : 1. Non-carbon nanoparticles are uniformly distributed between adjacent graphitized lamellae and between the graphitized lamellae and the carbon fiber. The carbon-carbon composite material has a diameter of 0.22 mm and a length of 3 mm.
(2) The carbon-carbon composite material is grey. There are carbon particles on the surface of the carbon-carbon composite material, with a particle size of 0.05 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.162 : 1, and the average value of the intensity ratio of the 2D band to the G band is 0.480 : 1.
(3) The main elements contained in the carbon-carbon composite material include: C content 56 wt.%; Si content 8.2 wt.%; Zr content 5.9 wt.%; Mg content 2.8 wt.%; It also contains elements with content below 0.001 wt.%, including: zinc, manganese, silver, barium, copper, lithium, lead, and strontium.

### Comparative Example 3-1

It was implemented according to the process of Example 3-1, except that a chopped carbon fiber was not added to the high-temperature furnace.

In this comparative example, due to the lack of chopped carbon fiber, the non-carbon element particles could not form attachment points for growth, and the carbon vapor could only grow on the inner wall surface of the high-temperature furnace to form a lumpy carbonaceous material with an extremely high carbon content, making it impossible to obtain the carbon-carbon composite material of the present invention.

The material obtained in this comparative example was a lumpy product formed from the carbon source, containing 99.9 wt.% carbon and no Si, Zr, Mg, or Ni.

### Comparative Example 3-2

It was implemented according to the process of Example 3-1, except that there was no nitrogen protection during the reaction process.

Due to the lack of inert atmosphere protection, the carbonized resin powders were oxidized to carbon dioxide, and the chopped carbon fiber with better temperature resistance was shattered into a morphologically uneven, surface-oxidized and etched chopped carbon fiber. It was impossible to form a concentric circle structure with multiple graphitized lamellae wrapping a single carbon fiber and it was also impossible to fill non-carbon element particles. Therefore, the carbon-carbon composite material of the present invention could not be obtained.

The material obtained in this comparative example contained 99.9 wt.% carbon and no Si, Zr, Mg, or Ni.

### Comparative Example 3-3

It was implemented according to the process of Example 3-1, except that the carbonized resin powder and the non-carbon element sources were not added to the high-temperature furnace.

The material obtained in this comparative example was a product formed from the chopped carbon fiber, containing 99.9 wt.% carbon and no Si, Zr, Mg, or Ni. The carbon-carbon composite material of the present invention could not be obtained.

### Comparative Example 3-4

It was implemented according to the process of Example 3-1, except that the central temperature was 1200 °C.

In this comparative example, because the temperature was too low, the carbon in the carbonized resin powders could not further grow on the surface of the single carbon fiber, and the non-carbon element particles could not adhere to the surface of the carbon fiber or the graphite lamella. The carbon-carbon composite material of the present invention could not be obtained.

The material obtained in this comparative example was a mixture formed after each independent reaction of the chopped carbon fiber, the carbonized resin powders, and the non-carbon element sources.

### Comparative Example 3-5

It was implemented according to the process of Example 3-1, except that the gas flow was 2000 mL/min.

In this comparative example, because the gas flow was too high, the microenvironment for the stable growth of graphitized lamellae could not be maintained, and the non-carbon element particles were unable to adhere to the surface of the carbon fiber or the graphite lamella. The carbon-carbon composite material of the present invention could not be obtained.

The material obtained in this comparative example was a mixture formed after each independent reaction of the chopped carbon fiber, the carbonized resin powders, and the non-carbon element sources.

### Comparative Example 3-6

It was implemented according to the process of Example 3-1, except that the non-carbon element sources SiO₂, ZrO₂, MgSO₄, and Ni(OH)₂ were not added to the high-temperature furnace.

The carbon-carbon composite material was prepared according to the following process: reacting a chopped carbon fiber (specification 12K, length 3 mm, carbon content 90 wt.%) and carbonized resin powders in a high-temperature furnace for 48 hours under a nitrogen atmosphere.

The high-temperature furnace used isostatic graphite as the heating element. The central operating temperature of the high-temperature furnace was 2200 °C. The purity of nitrogen was 99.99 vol%, the oxygen concentration was 40 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this comparative example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 10:1. The carbon-carbon composite material has a diameter of 0.1 mm, and alength of 3 mm.
(2) The carbon-carbon composite material is gray. There are carbon particles on the surface of the carbon-carbon composite material, with a particle size of 0.05 mm. The carbon-carbon composite material is curved in the axial direction, and there are lumpy protrusions on part of the surface. In the Raman spectrum of the carbon-carbon composite material, the average value of the intensity ratio of the D band to the G band is 0.182:1, and the average value of the intensity ratio of the 2D band to the G band is 0.545:1.
(3) The main elements contained in the carbon-carbon composite material include: carbon content 99.9 wt.%; it also contains elements with content below 0.001 wt.%, including: zinc, manganese, silver, barium, lithium, magnesium, lead, and strontium.

### Comparative Example 3-7

It was implemented according to the process of Example 3-1, except that the gas flow was 10 mL/min.

The carbon-carbon composite material prepared in this comparative example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 1.1:1. Non-carbon nanoparticles are uniformly distributed between adjacent graphitized lamellae and between the graphitized lamellae and the carbon fiber. The carbon-carbon composite material has a diameter of 0.017 mm, and a length of 3 mm.
(2) The carbon-carbon composite material is gray. There are carbon particles on the surface of the carbon-carbon composite material, with a particle size of 0.01 mm. The carbon-carbon composite material is curved in the axial direction, and there are lumpy protrusions on part of the surface. In the Raman spectrum of the carbon-carbon composite material, the average value of the intensity ratio of the D band to the G band is 1.176:1, and the average value of the intensity ratio of the 2D band to the G band is 0.527:1.
(3) The main elements contained in the carbon-carbon composite material include: C content 93 wt.%; Si content 0.5 wt.%; Zr content 0.2 wt.%; Mg content 0.1 wt.%; Ni content 0.02 wt.%; it also contains elements with content below 0.001 wt.%, including: zinc, manganese, silver, barium, copper, lithium, lead, and strontium.

### Test Example 3

The ablation resistance of the materials prepared in the examples and comparative examples was tested according to the following method.

About 3 g of the material was weighed in a high-temperature crucible, the mass of the material was recorded as m1, and then the following steps were performed: (1) placing the composite material in a high-temperature vacuum induction furnace for heat treatment (with nitrogen protection, the same below), treatment temperature 1000 °C for 2 h, naturally cooling; (2) treatment temperature 1500 °C for 2 h, naturally cooling; (3) treatment temperature 2000 °C for 2 h, naturally cooling; (4) treatment temperature 3000 °C for 2 h, naturally cooling; (5) removing and weighing the material, and recording its mass as m2. The thermal weight loss (w, expressed as a percentage) of the material is used to represent its ablation resistance. The smaller the thermal weight loss, the better the ablation resistance. The results are shown in Table 3.

The thermal weight loss of the material is calculated according to the following equation: $w \left(%\right) = \frac{m 1 - m 2}{m 1} \times 100 {%}_{∘}$

**Table 3**

| Ex. Nos. | Thermal weight loss (%) |
|---|---|
| Ex. 3-1 | 0.3 |
| Ex. 3-2 | 0.2 |
| Ex. 3-3 | 0.5 |
| Ex. 3-4 | 0.7 |
| Ex. 3-5 | 1.4 |
| Ex. 3-6 | 1.2 |
| Ex. 3-7 | 1.1 |
| Ex. 3-8 | 0.1 |
| Ex. 3-9 | 0.6 |
| Ex. 3-10 | 1.9 |
| CE. 3-1 | 12.5 |
| CE. 3-2 | 19.5 |
| CE. 3-3 | 8.9 |
| CE. 3-4 | 9.2 |
| CE. 3-5 | 9.5 |
| CE. 3-6 | 9.7 |
| CE. 3-7 | 7.5 |

From the results in Table 3, it can be seen that the thermal weight loss of the carbon-carbon composite material in the examples was significantly lower than that in the comparative examples. It can be seen that the carbon-carbon composite materials according to the present invention have excellent ablation resistance.

### Example 4-1

A carbon-carbon composite material was prepared according to the following process: reacting a chopped carbon fiber (specification 12 K, length 3 mm, carbon content 90 wt.%), carbonized resin powders, and metal sources and a phosphorus source (AlPO₄) as non-carbon element sources in a high-temperature furnace for 48 hours under a nitrogen atmosphere,
wherein the weight ratio of the metal sources, the phosphorus source, the carbonized resin powders, and the chopped carbon fiber was 50:7:100:1, and the weight ratio of the metal sources Fe₂O₃, Al₂O₃, Pb₃O₄, Co(OH)₂, CaF₂, and In₂O₃ was 1.7:1.3:1:1:0.2:0.1.

The high-temperature furnace used isostatic graphite as the heating element. The central operating temperature of the high-temperature furnace was 2200 °C. The purity of nitrogen was 99.99 vol%, the oxygen concentration was 40 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example (macroscopic morphology image shown in Figure 4-1) has the following characteristics:
(1) As shown in Figure 4-9, the core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 19:1. Non-carbon nanoparticles are uniformly distributed between adjacent graphitized lamellae and between the graphitized lamellae and the carbon fiber. The carbon-carbon composite material has a diameter of 0.2 mm, and a length of 3 mm.
(2) The carbon-carbon composite material is gray. There are carbon particles on the surface of the carbon-carbon composite material, with a particle size of 0.07 mm. The carbon-carbon composite material is curved in the axial direction, and there are lumpy protrusions on part of the surface. In the Raman spectrum of the carbon-carbon composite material, the average value of the intensity ratio of the D band to the G band is 0.161:1, and the average value of the intensity ratio of the 2D band to the G band is 0.484:1.
(3) The main elements contained in the carbon-carbon composite material include: C content 59 wt.%; Fe content 5.0 wt.%; Al content 4.0 wt.%; P content 2.1 wt.%; Pb content 2.6 wt.%; Co content 2.8 wt.%; Ca content 0.5 wt.%; In content 0.3 wt.%; it also contains elements with content below 0.001 wt.%, including: zinc, manganese, silver, barium, copper, lithium, magnesium, and strontium.

The above characteristics (1) and (2) were analyzed using a ZEISS Merlin field emission scanning electron microscope and an X-ray energy dispersive spectrometer equipped with the German ZEISS Merlin field emission scanning electron microscope.

From the elemental energy dispersive spectrums in Figures 4-2 to 4-8, it can be seen that Fe (Figure 4-2), Al (Figure 4-3), P (Figure 4-4), Pb (Figure 4-5), Co (Figure 4-6), Ca (Figure 4-7), and In (Figure 4-8) in the composite material prepared in this example are uniformly distributed and are all nanoparticles.

### Example 4-2

A carbon-carbon composite material was prepared according to the following process: reacting a chopped carbon fiber (specification 24 K, length 6 mm, carbon content 95 wt.%), amorphous graphite, and metal sources and a phosphorus source (Al(PO₃)₃) as non-carbon element sources in a high-temperature furnace for 100 hours under a nitrogen atmosphere,
wherein the weight ratio of the metal sources, the phosphorus source, the amorphous graphite and the chopped carbon fiber was 33 : 5 : 70 : 1, and the weight ratio of the metal sources FeCl₃, AlCl₃, Pb₂O₃, CoCl₂, CaCl₂ and InCl₃ was 2.4 : 2 : 1 : 1 : 0.2 : 0.2.

The high-temperature furnace used highly oriented graphite as the heating element. The central operating temperature of the high-temperature furnace was 2200 °C. The purity of nitrogen was 99.99 vol%, the oxygen concentration was 40 ppm, and the gas flow was 200 mL/min.

A valve was installed on the pipeline connecting the high-temperature furnace and the tail gas recovery system, wherein the valve was fully open, and the inner diameter of the pipeline was 5 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 38 : 1. Non-carbon nanoparticles are uniformly distributed between adjacent graphitized lamellae and between the graphitized lamellae and the carbon fiber. The carbon-carbon composite material has a diameter of 0.4 mm and a length of 6 mm.
(2) The carbon-carbon composite material is black. There are carbon particles on the surface of the carbon-carbon composite material, with a particle size of 1.3 mm. The carbon-carbon composite material is straight in the axial direction, and there are lumpy protrusions on part of the surface. In the Raman spectrum of the carbon-carbon composite material, the average value of the intensity ratio of the D band to the G band is 0.163 : 1, and the average value of the intensity ratio of the 2D band to the G band is 0.477 : 1.
(3) The main elements contained in the carbon-carbon composite material include: C content 63 wt.%; Fe content 6.7 wt.%; Al content 5.5 wt.%; P content 3.1 wt.%; Pb content 3.3 wt.%; Co content 3.2 wt.%; Ca content 0.7 wt.%; In content 0.6 wt.%; it also contains elements with content below 0.001 wt.%, including: zinc, manganese, silver, barium, copper, lithium, magnesium, and strontium.

### Example 4-3

A carbon-carbon composite material was prepared according to the following process: reacting a chopped carbon fiber (specification 50 K, length 9 mm, carbon content 90 wt.%), carbonized resin powders, and metal sources and a phosphorus source (AlPO₄) as non-carbon element sources in a high-temperature furnace for 80 hours under a nitrogen atmosphere,
wherein the weight ratio of the metal sources, the phosphorus source, the carbonized resin powders and the chopped carbon fiber was 25 : 4 : 50 : 1, and the weight ratio of the metal sources Fe₂O₃, Al₂O₃, Pb₃O₄, Co(OH)₂, CaF₂ and In₂O₃ was 2.75 : 1.25 : 1 : 1 : 0.25 : 0.25.

The high-temperature furnace used isostatic graphite as the heating element. The central operating temperature of the high-temperature furnace was 2800 °C. The purity of nitrogen was 99.99 vol%, the oxygen concentration was 40 ppm, and the gas flow was 400 mL/min,

A valve was installed on the pipeline connecting the high-temperature furnace and the tail gas recovery system, wherein the valve was fully open, and the inner diameter of the pipeline was 15 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 9 mm. The single carbon fiber is wrapped by graphitized lamellae with a concentric circle structure. The ratio of the total thickness of the graphitized lamellae to the diameter of the single carbon fiber is 39 : 1. Non-carbon nanoparticles are uniformly distributed between adjacent graphitized lamellae and between the graphitized lamellae and the carbon fiber. The carbon-carbon composite material has a diameter of 0.4 mm and a length of 9 mm.
(2) The carbon-carbon composite material is grey. There are carbon particles on the surface of the carbon-carbon composite material, with a particle size of 0.08 mmThe carbon-carbon composite material is straight in the axial direction, and part of the surface is bamboo-like. In the Raman spectrum of the carbon-carbon composite material, the average value of the intensity ratio of the D band to the G band is 0.183 : 1, and the average value of the intensity ratio of the 2D band to the G band is 0.554 : 1.
(3) The main elements contained in the carbon-carbon composite material include: C content 55 wt.%; Fe content 8.2 wt.%; Al content 4.0 wt.%; P content 3.1 wt.%; Pb content 2.9 wt.%; Co content 3.0 wt.%; Ca content 0.4 wt.%; In content 0.8 wt.%; it also contains elements with content below 0.001 wt.%, including: zinc, manganese, silver, barium, copper, lithium, magnesium, and strontium.

### Example 4-4

A carbon-carbon composite material was prepared according to the following process: reacting a chopped carbon fiber (specification 12 K, length 6 mm, carbon content 95 wt.%), amorphous graphite, and metal sources and a phosphorus source (Al(PO₃)₃) as non-carbon element sources in a high-temperature furnace for 150 hours under a nitrogen atmosphere,
wherein the weight ratio of the metal sources, the phosphorus source, the amorphous graphite and the chopped carbon fiber was 32 : 4 : 65 : 1, and the weight ratio of the metal sources FeCl₃, AlCl₃, Pb₂O₃, CoCl₂, CaCl₂ and InCl₃ was 2.5 : 2 : 1.5 : 1 : 0.25 : 0.25.

The high-temperature furnace used isostatic graphite as the heating element. The central operating temperature of the high-temperature furnace was 2800 °C. The purity of nitrogen was 99.99 vol%, the oxygen concentration was 40 ppm, and the gas flow was 500 mL/min.

A valve was installed on the pipeline connecting the high-temperature furnace and the tail gas recovery system, wherein the valve was fully open, and the inner diameter of the pipeline was 20 mm. Furthermore, along the gas flow direction, a filter screen was installed in front of the valve.

The carbon-carbon composite material prepared in this example has the following characteristics:
(1) The core is a single carbon fiber, with a diameter of 7 µm and a length of 6 mm. The single carbon fiber is wrapped by graphitized lamellae with a concentric circle structure. The ratio of the total thickness of the graphitized lamellae to the diameter of the single carbon fiber is 43 : 1. Non-carbon nanoparticles are uniformly distributed between adjacent graphitized lamellae and between the graphitized lamellae and the carbon fiber. The carbon-carbon composite material has a diameter of 0.6 mm and a length of 6 mm.
(2) The carbon-carbon composite material is black. There are carbon particles on the surface of the carbon-carbon composite material, with a particle size of 1.1 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.179 : 1, and the average value of the intensity ratio of the 2D band to the G band is 0.553 : 1.
(3) The main elements contained in the carbon-carbon composite material include: C content 68 wt.%; Fe content 7.5 wt.%; Al content 6.3 wt.%; P content 2.9 wt.%; Pb content 4.2 wt.%; Co content 3.1 wt.%; Ca content 0.6 wt.%; In content 0.8 wt.%; it also contains elements with content below 0.001 wt.%, including: zinc, manganese, silver, barium, copper, lithium, magnesium, and strontium.

### Example 4-5

A carbon-carbon composite material was prepared according to the following process: reacting a chopped carbon fiber (specification 12 K, length 6 mm, carbon content 95 wt.%), amorphous graphite, and metal sources and a phosphorus source (Al(PO₃)₃) as non-carbon element sources in a high-temperature furnace for 36 hours under a nitrogen atmosphere,
wherein the weight ratio of the metal sources, the phosphorus source, the amorphous graphite and the chopped carbon fiber was 23 : 3 : 45 : 1, and the weight ratio of the metal sources FeCl₃, AlCl₃, Pb₂O₃, CoCl₂, CaCl₂ and InCl₃ was 2 : 2 : 1 : 1 : 0.33 : 0.33.

The high-temperature furnace used isostatic graphite as the heating element. The central operating temperature of the high-temperature furnace was 2800 °C. The purity of nitrogen was 99.99 vol%, the oxygen concentration was 40 ppm, and the gas flow was 50 mL/min,

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 7 µm and a length of 6 mm. The single carbon fiber is wrapped by graphitized lamellae with a concentric circle structure. The ratio of the total thickness of the graphitized lamellae to the diameter of the single carbon fiber is 65 : 1. Non-carbon nanoparticles are uniformly distributed between adjacent graphitized lamellae and between the graphitized lamellae and the carbon fiber. The carbon-carbon composite material has a diameter of 0.9 mm and a length of 6 mm.
(2) The carbon-carbon composite material is black. There are carbon particles on the surface of the carbon-carbon composite material, with a particle size of 1.2 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.188 : 1, and the average value of the intensity ratio of the 2D band to the G band is 0.556 : 1.
(3) The main elements contained in the carbon-carbon composite material include: C content 80 wt.%; Fe content 3.3 wt.%; Al content 3.2 wt.%; P content 1.5 wt.%; Pb content 1.7 wt.%; Co content 1.9 wt.%; Ca content 0.5 wt.%; In content 0.6 wt.%; it also contains elements with content below 0.001 wt.%, including: zinc, manganese, silver, barium, copper, lithium, magnesium, and strontium.

### Example 4-6

A carbon-carbon composite material was prepared according to the following process: reacting a chopped carbon fiber (specification 12 K, length 6 mm, carbon content 95 wt.%), amorphous graphite, and metal sources and a phosphorus source (Al(PO₃)₃) as non-carbon element sources in a high-temperature furnace for 120 hours under a nitrogen atmosphere,
wherein the weight ratio of the metal sources, the phosphorus source, the amorphous graphite and the chopped carbon fiber was 31 : 6 : 65 : 1, and the weight ratio of the metal sources FeCl₃, AlCl₃, Pb₂O₃, CoCl₂, CaCl₂ and InCl₃ was 0.8 : 1.43 : 1 : 1 : 0.14 : 0.14.

The high-temperature furnace used isostatic graphite as the heating element. The central operating temperature of the high-temperature furnace was 2800 °C. The purity of nitrogen was 99.99 vol%, the oxygen concentration was 20 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 95 : 1. Non-carbon nanoparticles are uniformly distributed between adjacent graphitized lamellae and between the graphitized lamellae and the carbon fiber. The carbon-carbon composite material has a diameter of 1 mm and a length of 6 mm.
(2) The carbon-carbon composite material is black. There are carbon particles on the surface of the carbon-carbon composite material, with a particle size of 1.5 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.186 : 1, and the average value of the intensity ratio of the 2D band to the G band is 0.554 : 1.
(3) The main elements contained in the carbon-carbon composite material include: C content 74 wt.%; Fe content 4.0 wt.%; Al content 7.2 wt.%; P content 4.2 wt.%; Pb content 4.4 wt.%; Co content 4.6 wt.%; Ca content 0.3 wt.%; In content 0.7 wt.%; it also contains elements with content below 0.001 wt.%, including: zinc, manganese, silver, barium, copper, lithium, magnesium, and strontium.

### Example 4-7

A carbon-carbon composite material was prepared according to the following process: reacting a chopped carbon fiber (specification 12 K, length 6 mm, carbon content 95 wt.%), amorphous graphite, and metal sources and a phosphorus source (Al(PO₃)₃) as non-carbon element sources in a high-temperature furnace for 144 hours under a nitrogen atmosphere,
wherein the weight ratio of the metal sources, the phosphorus source, the amorphous graphite and the chopped carbon fiber was 29 : 6 : 60 : 1, and the weight ratio of the metal sources FeCl₃, AlCl₃, Pb₂O₃, CoCl₂, CaCl₂ and InCl₃ was 1.6 : 1.4 : 1 : 1 : 0.2 : 0.2.

The high-temperature furnace used isostatic graphite as the heating element. The central operating temperature of the high-temperature furnace was 2800 °C. The purity of nitrogen was 99.99 vol%, the oxygen concentration was 20 ppm, and the gas flow was 200 mL/min,

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 38 : 1. Non-carbon nanoparticles are uniformly distributed between adjacent graphitized lamellae and between the graphitized lamellae and the carbon fiber. The carbon-carbon composite material has a diameter of 0.4 mm and a length of 6 mm.
(2) The carbon-carbon composite material is black. There are carbon particles on the surface of the carbon-carbon composite material, with a particle size of 0.6 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.184 : 1, and the average value of the intensity ratio of the 2D band to the G band is 0.555 : 1.
(3) The main elements contained in the carbon-carbon composite material include: C content 63 wt.%; Fe content 7.0 wt.%; Al content 5.9 wt.%; P content 4.7 wt.%; Pb content 4.3 wt.%; Co content 4.0 wt.%; Ca content 0.4 wt.%; In content 0.9 wt.%; it also contains elements with content below 0.001 wt.%, including: zinc, manganese, silver, barium, copper, lithium, magnesium, and strontium.

### Example 4-8

A carbon-carbon composite material was prepared according to the following process: reacting a chopped carbon fiber (specification 12 K, length 6 mm, carbon content 95 wt.%), amorphous graphite, and metal sources and a phosphorus source (Al(PO₃)₃) as non-carbon element sources in a high-temperature furnace for 72 hours under a nitrogen atmosphere,
wherein the weight ratio of the metal sources, the phosphorus source, the amorphous graphite and the chopped carbon fiber was 53 : 8 : 110 : 1, and the weight ratio of the metal sources FeCl₃, AlCl₃, Pb₂O₃, CoCl₂, CaCl₂ and InCl₃ was 2.85 : 1.43 : 1.14 : 1 : 0.14 : 0.14.

The high-temperature furnace used isostatic graphite as the heating element. The central operating temperature of the high-temperature furnace was 2800 °C. The purity of nitrogen was 99.99 vol%, the oxygen concentration was 20 ppm, and the gas flow was 400 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 49 : 1. Non-carbon nanoparticles are uniformly distributed between adjacent graphitized lamellae and between the graphitized lamellae and the carbon fiber. The carbon-carbon composite material has a diameter of 0.5 mm and a length of 6 mm.
(2) The carbon-carbon composite material is black. There are carbon particles on the surface of the carbon-carbon composite material, with a particle size of 1 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.183 : 1, and the average value of the intensity ratio of the 2D band to the G band is 0.555 : 1.
(3) The main elements contained in the carbon-carbon composite material include: C content 52 wt.%; Fe content 9.0 wt.%; Al content 3.9 wt.%; P content 2.9 wt.%; Pb content 3.1 wt.%; Co content 2.5 wt.%; Ca content 0.1 wt.%; In content 0.4 wt.%; it also contains elements with content below 0.001 wt.%, including: zinc, manganese, silver, barium, copper, lithium, magnesium, and strontium.

### Example 4-9

A carbon-carbon composite material was prepared according to the following process: reacting a chopped carbon fiber (specification 12 K, length 6 mm, carbon content 95 wt.%), amorphous graphite, and metal sources and a phosphorus source (Al(PO₃)₃) as non-carbon element sources in a high-temperature furnace for 48 hours under a nitrogen atmosphere,
wherein the weight ratio of the metal sources, the phosphorus source, the amorphous graphite and the chopped carbon fiber was 79 : 4 : 160 : 1, and the weight ratio of the metal sources FeCl₃, AlCl₃, Pb₂O₃, CoCl₂, CaCl₂ and InCl₃ was 4:4 : 0.4 : 1 : 0.8 : 0.2.

The high-temperature furnace used isostatic graphite as the heating element. The central operating temperature of the high-temperature furnace was 2800 °C. The purity of nitrogen was 99.99 vol%, the oxygen concentration was 20 ppm, and the gas flow was 500 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 6 mm. The single carbon fiber is wrapped by graphitized lamellae with a concentric circle structure. The ratio of the total thickness of the graphitized lamellae to the diameter of the single carbon fiber is 89 : 1. Non-carbon nanoparticles are uniformly distributed between adjacent graphitized lamellae and between the graphitized lamellae and the carbon fiber. The carbon-carbon composite material has a diameter of 0.9 mm and a length of 6 mm.
(2) The carbon-carbon composite material is black. There are carbon particles on the surface of the carbon-carbon composite material, with a particle size of 1.2 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.179 : 1, and the average value of the intensity ratio of the 2D band to the G band is 0.554 : 1.
(3) The main elements contained in the carbon-carbon composite material include: C content 72 wt.%; Fe content 8.0 wt.%; Al content 5.9 wt.%; P content 0.8 wt.%; Pb content 0.2 wt.%; Co content 0.6 wt.%; Ca content 0.7 wt.%; In content 0.2 wt.%; it also contains elements with content below 0.001 wt.%, including: zinc, manganese, silver, barium, copper, lithium, magnesium, and strontium.

### Example 4-10

It was implemented according to the process of Example 2-1, except that the metal sources were iron source, aluminum source, lead source, cobalt source and indium source, not including calcium source.

A carbon-carbon composite material was prepared according to the following process: reacting a chopped carbon fiber (specification 12 K, length 3 mm, carbon content 90 wt.%), carbonized resin powders, and metal sources and a phosphorus source (AlPO₄) as non-carbon element sources in a high-temperature furnace for 48 hours under a nitrogen atmosphere,
wherein the weight ratio of the metal sources, the phosphorus source, the carbonized resin powders and the chopped carbon fiber was 50 : 7 : 100 : 1, and the weight ratio of the metal sourcesFe₂O₃, Al₂O₃, Pb₃O₄, Co(OH)₂ 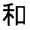 In₂O₃ was 1.75 : 1.38 : 1 : 1 : 0.13.

The high-temperature furnace used isostatic graphite as the heating element. The central operating temperature of the high-temperature furnace was 2200 °C. The purity of nitrogen was 99.99 vol%, the oxygen concentration was 40 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 19 : 1. Non-carbon nanoparticles are uniformly distributed between adjacent graphitized lamellae and between the graphitized lamellae and the carbon fiber. The carbon-carbon composite material has a diameter of 0.2 mm and a length of 3 mm.
(2) The carbon-carbon composite material is grey. There are carbon particles on the surface of the carbon-carbon composite material, with a particle size of 0.07 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.182 : 1, and the average value of the intensity ratio of the 2D band to the G band is 0.553 : 1.
(3) The main elements contained in the carbon-carbon composite material include: C content 58 wt.%; Fe content 5.2 wt.%; Al content 4.4 wt.%; P content 2.3 wt.%; Pb content 2.8 wt.%; Co content 2.9 wt.%; In content 0.4 wt.%; it also contains elements with content below 0.001 wt.%, including: zinc, manganese, silver, barium, copper, lithium, magnesium, and strontium.

### Example 4-11

It was implemented according to the process of Example 2-1, except that the metal sources were iron source, aluminum source, lead source, cobalt source and calcium source, not including indium source.

A carbon-carbon composite material was prepared according to the following process: reacting a chopped carbon fiber (specification 12 K, length 3 mm, carbon content 90 wt.%), carbonized resin powders, and metal sources and a phosphorus source (AlPO₄) as non-carbon element sources in a high-temperature furnace for 48 hours under a nitrogen atmosphere,
wherein the weight ratio of the metal sources, the phosphorus source, the carbonized resin powders and the chopped carbon fiber was 50 : 7 : 100 : 1, and the weight ratio of the metal sources Fe₂O₃, Al₂O₃, Pb₃O₄, Co(OH)₂ and CaF₂ was 1.75 : 1.25 : 1 : 1 : 0.25.

The high-temperature furnace used isostatic graphite as the heating element. The central operating temperature of the high-temperature furnace was 2200 °C. The purity of nitrogen was 99.99 vol%, the oxygen concentration was 40 ppm, and the gas flow was 100 mL/min.

A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon-carbon composite material prepared in this example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 19 : 1. Non-carbon nanoparticles are uniformly distributed between adjacent graphitized lamellae and between the graphitized lamellae and the carbon fiber. The carbon-carbon composite material has a diameter of 0.2 mm and a length of 3 mm.
(2) The carbon-carbon composite material is grey. There are carbon particles on the surface of the carbon-carbon composite material, with a particle size of 0.07 mm. The carbon-carbon composite material is curved in the axial direction, and there are lumpy protrusions distributed on part of the surface. In the Raman spectrum of the carbon-carbon composite material, the average value of the intensity ratio of the D band to the G band is 0.180 : 1, and the average value of the intensity ratio of the 2D band to the G band is 0.550 : 1.
(3) The main elements contained in the carbon-carbon composite material include: C content 57 wt.%; Fe content 5.2 wt.%; Al content 4.1 wt.%; P content 2.1 wt.%; Pb content 2.8 wt.%; Co content 3.2 wt.%; Ca content 0.8 wt.%; it also contains elements with content below 0.001 wt.%, including: zinc, manganese, silver, barium, copper, lithium, magnesium, and strontium.

### Comparative Example 4-1

It was implemented according to the process of Example 4-1, except that a chopped carbon fiber was not added to the high-temperature furnace.

In this comparative example, due to the lack of chopped carbon fiber, the non-carbon element particles could not form attachment points for growth, and the carbon vapor could only grow on the inner wall surface of the high-temperature furnace to form a lumpy carbonaceous material with an extremely high carbon content, making it impossible to obtain the carbon-carbon composite material of the present invention.

The material obtained in this comparative example was a lumpy product formed from the carbon source, containing 99.9 wt.% carbon and no iron, aluminum, phosphorus, lead, cobalt, calcium, or indium elements.

### Comparative Example 4-2

It was implemented according to the process of Example 4-1, except that there was no inert atmosphere protection during the reaction process.

Due to the lack of inert atmosphere protection, the carbonized resin powders were oxidized to carbon dioxide, and the chopped carbon fiber with better temperature resistance was shattered into a morphologically uneven, surface-oxidized and etched chopped carbon fiber. It was impossible to form a concentric circle structure with multiple graphitized lamellae wrapping a single carbon fiber and it was also impossible to fill non-carbon element particles. Therefore, the carbon-carbon composite material of the present invention could not be obtained.

The material obtained in this comparative example contained 99.9 wt.% carbon and no iron, aluminum, phosphorus, lead, cobalt, calcium, or indium elements.

### Comparative Example 4-3

It was implemented according to the process of Example 4-1, except that the carbonized resin powder and the non-carbon element sources were not added to the high-temperature furnace.

The material obtained in this comparative example was a product formed from the chopped carbon fiber, containing 99.9 wt.% carbon and no iron, aluminum, phosphorus, lead, cobalt, calcium, or indium elements. The carbon-carbon composite material of the present invention could not be obtained.

### Comparative Example 4-4

It was implemented according to the process of Example 4-1, except that the central temperature was 1200 °C.

In this comparative example, because the temperature was too low, the carbon in the carbonized resin powders could not further grow on the surface of the single carbon fiber, and the non-carbon element particles could not adhere to the surface of the carbon fiber or the graphite lamella. The carbon-carbon composite material of the present invention could not be obtained.

The material obtained in this comparative example was a mixture formed after each independent reaction of the chopped carbon fiber, the carbonized resin powders, and the metal sources.

### Comparative Example 4-5

It was implemented according to the process of Example 4-1, except that the gas flow was 2000 mL/min.

In this comparative example, because the gas flow was too high, the microenvironment for the stable growth of graphitized lamellae could not be maintained, and the non-carbon element particles were unable to adhere to the surface of the carbon fiber or the graphite lamella. The carbon-carbon composite material of the present invention could not be obtained.

The material obtained in this comparative example was a mixture formed after each independent reaction of the chopped carbon fiber, the carbonized resin powders, and the metal sources.

### Comparative Example 4-6

It was implemented according to the process of Example 4-1, except that the gas flow was 10 mL/min.

The carbon-carbon composite material prepared in this comparative example has the following characteristics:
(1) The core is a single carbon fiber, with a diameter of 5 µm and a length of 3 mm. The single carbon fiber is wrapped by graphitized lamellae with a concentric circle structure. The ratio of the total thickness of the graphitized lamellae to the diameter of the single carbon fiber is 3:1. Non-carbon nanoparticles are uniformly distributed between adjacent graphitized lamellae and between the graphitized lamellae and the carbon fiber. The carbon-carbon composite material has a diameter of 0.03 mm, and a length of 3 mm.
(2) The carbon-carbon composite material is gray. There are carbon particles on the surface of the carbon-carbon composite material, with a particle size of 0.02 mm. The carbon-carbon composite material is curved in the axial direction, and there are lumpy protrusions on part of the surface. In the Raman spectrum of the carbon-carbon composite material, the average value of the intensity ratio of the D band to the G band is 0.161:1, and the average value of the intensity ratio of the 2D band to the G band is 0.474:1.
(3) The main elements contained in the carbon-carbon composite material include: C content 94 wt.%; Fe content 0.4 wt.%; Al content 0.1 wt.%; P content 0.1 wt.%; Pb content 0.05 wt.%; Co content 0.02 wt.%; Ca content 0.03 wt.%; In content 0.02 wt.%; it also contains elements with content below 0.001 wt.%, including: zinc, manganese, silver, barium, copper, lithium, magnesium, and strontium.

### Test Example 4

1. The temperature resistance performance of the materials prepared in the examples and comparative examples was tested according to the following method. The results are shown in Table 4.

About 3 g of the material was weighed in a high-temperature crucible, and the mass of the material was recorded as m1. (1) It was placed in a muffle furnace for heat treatment (in air atmosphere, the same below) at a treatment temperature of 500 °C for 2h, and then naturally cooled; (2) at a treatment temperature of 800 °C for 2h, and then naturally cooled, removed, and weighed, with the mass of the material recorded as m2. The thermal weight loss (w, expressed as a percentage) of the material was used to represent its temperature resistance. The smaller the thermal weight loss, the better the temperature resistance.

The thermal weight loss of the material is expressed by the following equation: $w \left(%\right) = \frac{m 1 - m 2}{m 1} \times 100 %$

2. The sealing performance of the materials prepared in the examples and comparative examples was tested according to the following method. The results are shown in Table 4.

The material was pressed into a sample piece with a diameter of 25 mm and a thickness of 15 mm, then finely processed and ground on each surface. On a device for testing sealing performance as shown in Figure 4-10, the refined sample piece 7 was fixed between a first container 2 and a second container 3. Nitrogen gas at 2.0 MPa was introduced from the gas inlet 6. The second container 3 was connected to one end of a pipeline 5 with an inner diameter of 8 mm. The other end of the pipeline 5 was placed in a gas-collecting bottle 4 filled with pure water (the height difference Δh between the end of the pipeline 5 and the liquid level of the gas-collecting bottle 4 was 20 mm). In this test, the degree of leakage of the sample piece was analyzed by the number of bubbles per minute in the gas-collecting bottle 4.

**Table 4**

| Ex. Nos. | Thermal weight loss (%) | Sealing performace (number of bubbles/min) |
|---|---|---|
| Ex. 4-1 | 3.8 | 8 |
| Ex. 4-2 | 4.5 | 9 |
| Ex. 4-3 | 4.7 | 11 |
| Ex. 4-4 | 5.1 | 10 |
| Ex. 4-5 | 6.8 | 15 |
| Ex. 4-6 | 4.3 | 11 |
| Ex. 4-7 | 4.2 | 10 |
| Ex. 4-8 | 5.2 | 11 |
| Ex. 4-9 | 6.3 | 12 |
| Ex. 4-10 | 5.3 | 16 |
| Ex. 4-11 | 5.8 | 17 |
| CE. 4-1 | 17.6 | 75 |
| CE. 4-2 | 17.6 | 76 |
| CE. 4-3 | 17.6 | 78 |
| CE. 4-4 | 18.4 | 82 |
| CE. 4-5 | 17.5 | 79 |
| CE. 4-6 | 19.5 | 90 |

From Table 4, it can be seen that the thermal weight loss of the carbon-carbon composite material according to the present invention is relatively small, thus exhibiting better high-temperature resistance; and the number of bubbles collected per minute is relatively small, thus exhibiting better sealing performance.

### Comparative Example 5-1

The experiments of comparative tests were carried out using T800HB-12000 type carbon fiber from Toray Industries, Inc., Japan.
E51 bisphenol A epoxy resin, Sinopec Baling Petrochemical Company, brand 128;
Acetone, chemically pure, Sinopharm Chemical Reagent Co., Ltd.;
Bisphenol A-D16, Sinopharm Chemical Reagent Co., Ltd.;
Triphenylphosphine, content 99.9%, Aladdin Reagent (Shanghai) Co., Ltd.;
Zinc chloride, chemically pure, Sinopharm Chemical Reagent Co., Ltd.

Formula: E51 bisphenol A epoxy resin: 100 parts by weight; Acetone: 100 parts by weight; Bisphenol A-D16: 60 parts by weight; Triphenylphosphine: 0.6 parts by weight; Zinc chloride: 15 parts by weight.

Resin pre-reaction steps: mixing and stirring E51 bisphenol A epoxy resin and bisphenol A-D16, heating it to 110°C to dissolve for 2 min, adding triphenylphosphine, pre-reacting at 125°C for 15 min, adding acetone and zinc chloride, mixing and stirring for 5 min to obtain epoxy resin A. Stirring speeds were all 2500 rpm.

About 20 cm of T800HB-12000 carbon fiber was cut and soaked in epoxy resin A for 5 minutes, and removed. The carbon fiber tow was placed on a piece of filter paper and was covered with another piece of filter paper, and the upper filter paper was pressed with a 500g weight for 30 seconds to ensure that all parts of the carbon fiber tow were pressed; the carbon fiber was soaked in epoxy resin A again for 5 minutes, then removed, and the aforementioned pressing operation was repeated. The soaking-pressing cycle was performed a total of 3 times. A carbon fiber tow wrapped with pre-reacted epoxy resin A was obtained.

The above-mentioned carbon fiber tow wrapped with epoxy resin A was straightened, laid flat on the surface of a glass plate of a size of 25 cm * 5 cm, and placed in a forced air oven for curing and drying. The process conditions: 140°C, 2 hours. After curing and drying, carbon fiber tow A was obtained.

The surface morphology of carbon fiber tow A is shown in Figures 5-1 and 5-2, wherein the magnification in Figure 5-1 is 4000x, and the magnification in Figure 5-2 is 10000x. It can be seen from Figures 5-1 and 5-2 that the surface of the carbon fiber monofilaments in carbon fiber tow A is coated with resin. The surface of the resin appears generally smooth, with grooves on the carbon fiber surface faintly visible; it can be observed that some monofilaments are adhered together by the resin, and protruded particles exist in some areas.

The carbon fiber tow A was reacted in a high-temperature furnace for 48 hours under a nitrogen atmosphere (gas flow of 100 mL/min) to obtain graphitized carbon fiber tow B. The high-temperature furnace used isostatic graphite as the heating element. The central operating temperature of the high-temperature furnace was 2200 °C. The purity of the nitrogen atmosphere was 99.99 vol%, with an oxygen content of 40 ppm. A valve was installed on the pipeline connecting the high-temperature furnace and the tail gas recovery system, wherein the valve was fully open, and the inner diameter of the pipeline was 10 mm. Furthermore, along the gas flow direction, a filter screen was installed in front of the valve.

The carbon fiber tow B prepared in this comparative example has the following characteristics: The main elements contained in carbon fiber tow B include: C content 85 wt.%; Zn content 5.6 wt.%.

The surface morphology of carbon fiber tow B is shown in Figures 5-3 and 5-4, wherein the magnification in Figure 5-3 is 4000x, and the magnification in Figure 5-4 is 10000x. It can be seen from Figures 5-3 and 5-4that there are groove structures on the surface of the carbon fiber monofilaments in carbon fiber tow B, but the parallelism and collimation of the grooves are poor, and the surface adsorbs scattered particles with different morphologies and sizes which are distributed in local areas.

Figure 5-5 is the elemental energy dispersive spectrum of Zn on the surface of carbon fiber tow A; Figure 5-6 is the elemental energy dispersive spectrum of Zn on the surface of carbon fiber tow B. It can be seen from Figures 5-5 and 5-6 that after high-temperature calcination in an inert atmosphere, the Zn on the surface of the carbon fiber/resin carbon-carbon composite material migrated to local areas, and the uniformity of Zn distribution on the surface deteriorated. It can be seen that the surface of the carbon fiber tow is coated with a resin containing non-carbon elements, and the non-carbon elements uniformly distributed in the matrix resin phase become unevenly distributed after high-temperature carbonization and high-temperature graphitization treatments. This indicates that coating the carbon fiber surface with a resin containing non-carbon elements followed by graphitization treatment cannot yield a carbon-carbon composite material with uniformly distributed non-carbon elements.

### Comparative Example 5-2

In the formula composition, except that the acetone content was 10 parts by weight, other components and their contents were the same as in Comparative Example 5-1.

The carbon-carbon composite material was prepared as described in Comparative Example 5-1.

The carbon-carbon composite material prepared in this comparative example has the following characteristics:
The cross-sectional morphology of the carbon-carbon composite material is shown as Figure 5-7, wherein the magnification in Figure 5-7 is 400x.

It can be seen from Figure 5-7 that the core is a single T800HB-12000 type carbon fiber, with a diameter between 5 µm and 6 µm. The carbon fiber is wrapped by particulate carbon aggregates, and the carbon particle aggregates cannot be distinguished into obvious layered structures. The overall cross-section of the carbon-carbon composite material is circular, with a diameter between 165 µm and 170 µm. The cross-section is relatively rough, with no significant layered distribution, and the ratio of the thickness of the carbon aggregate to the diameter of the carbon fiber ranges from 13 to 17.

The carbon-carbon composite material is black. There are carbon particles on the surface of the carbon-carbon composite material, with a particle size of 0.06 mm. The carbon-carbon composite material is curved in the axial direction, and there are lumpy protrusions on part of the surface. In the Raman spectrum of the carbon-carbon composite material, the average value of the intensity ratio of the D band to the G band is 0.174:1, and the average value of the intensity ratio of the 2D band to the G band is 0.543: 1.

The main elements contained in the carbon-carbon composite material include: C content 78 wt.%; Zn content 9.3 wt.%.

The elemental energy dispersive spectrum of Zn in the outermost part of the cross-section of the carbon-carbon composite material is shown as Figure 5-8.

It can be seen from Figure 5-8 that the outermost part of the carbon-carbon composite material is enriched with a relatively large amount of Zn element, while the amount of Zn element inside is relatively small. This indicates that the Zn element in the carbon-carbon composite material is unevenly distributed, with more on the surface and less inside.

This comparative example used the process route of Comparative Example 5-1 to prepare the carbon-carbon composite material. By reducing the amount of acetone used to increase the solid content of the resin, more and thicker epoxy resin could be coated on the surface of the carbon fiber. However, after calcination at the high temperature of 2200°C in a nitrogen atmosphere, the non-carbon element (Zn element) in the carbon-carbon composite material migrated and agglomerated, resulting in Zn enrichment on the surface and reduction of Zn content inside, indicating that the distribution of non-carbon elements became uneven.

The preferred embodiments of the present invention have been described in detail above. hHowever, the present invention is not limited thereto. Within the scope of the technical concept of the present invention, various simple modifications can be made to the technical solutions of the present invention, including combining various technical features in any other suitable manner. These simple modifications and combinations should also be regarded as the content disclosed in the present invention and fall within the protection scope of the present invention.

## Claims

1. A carbon-carbon composite material, **characterized in that** the carbon-carbon composite material comprises a carbon fiber, a plurality of graphitized lamellae wrapping the carbon fiber, and non-carbon nanoparticles dispersed between the graphitized lamellae, wherein the non-carbon nanoparticles comprise one or more non-carbon elements selected from elements of Group IA, Group IIA, Group IIIA, Group IVA, Group VA, Group IVB, Group VB, Group VIB, Group VIII, Group IB and Group IIB of the periodic table, and the total content of the non-carbon elements of Group IA, Group IIA, Group IIIA, Group IVA, Group VA, Group IVB, Group VB, Group VIB, Group VIII, Group IB and Group IIB ranges from 5 wt.% to 60 wt.%, preferably from 5 wt.% to 55 wt.%, and more preferably from 8 wt.% to 50 wt.%, based on the carbon-carbon composite material.

2. The carbon-carbon composite material according to claim 1, **characterized in that** the non-carbon nanoparticle has a particle size ranging from 1 nm to 1000 nm, preferably from 10 nm to 500 nm, more preferably from 30 nm to 250 nm, and even more preferably from 50 nm to 150 nm; and/or the graphitized lamella has a thickness ranging from 1 nm to 1000 nm, preferably from 10 nm to 500 nm, more preferably from 30 nm to 250 nm, and even more preferably from 50 nm to 150 nm.

3. The carbon-carbon composite material according to claim 1 or 2, **characterized in that** the non-carbon nanoparticles comprise elements from at least two groups, preferably at least three groups, and more preferably four groups of Group IA, Group VB, Group VIB and Group VIII.

4. The carbon-carbon composite material according to claim 3, **characterized in that** the carbon-carbon composite material comprises 40-95 wt.%, preferably 45-92 wt.%, and more preferably 50-87 wt.% of carbon element; 1.6-52 wt.%, preferably 3-45 wt.%, and more preferably 5.2-30.6 wt.% of a Group IA element; 0.05-5 wt.%, preferably 0.1-1 wt.%, and more preferably 0.1-0.4 wt.% of a Group VB element; 0.05-5 wt.%, preferably 0.05-3 wt.%, and more preferably 0.1-0.7 wt.% of a Group VIB element; and 1-33 wt.%, preferably 2.2-25 wt.%, and more preferably 3.9-14.1 wt.% of a Group VIII element.

5. The carbon-carbon composite material according to claim 3, **characterized in that** the carbon-carbon composite material, in addition to carbon element, further comprises at least one of sodium element, potassium element and lithium element; at least one of nickel element, platinum element and iron element; chromium element; and vanadium element; preferably, in addition to carbon element, further comprises sodium element, potassium element, lithium element, nickel element, platinum element, iron element, chromium element and vanadium element;
preferably, the carbon-carbon composite material comprises 40-95 wt.%, preferably 45-92 wt.%, and more preferably 50-87 wt.% of carbon element; 0.7-18 wt.%, preferably 1-15 wt.%, and more preferably 2.2-12.2 wt.% of sodium element; 0.5-18 wt.%, 1-15 wt.%, and more preferably 1.5-10.7 wt.% of potassium element; 0.5-15 wt.%, preferably 1-10 wt.%, and more preferably 1.2-6.3 wt.% of nickel element; 0.4-13 wt.%, preferably 1-10 wt.%, and more preferably 1.5-8.1 wt.% of lithium element; 1-10 wt.%, preferably 1-5 wt.%, and more preferably 1-4.7 wt.% of platinum element; 0.7-8 wt.%, preferably 1-5 wt.%, and more preferably 1.1-4.2 wt.% of iron element; 0.05-3 wt.%, preferably 0.1-1 wt.%, and more preferably 0.1-0.7 wt.% of chromium element; and 0.1-1 wt.%, preferably 0.1-0.5 wt.%, and more preferably 0.1-0.4 wt.% of vanadium element.

6. The carbon-carbon composite material according to claim 1 or 2, **characterized in that** the non-carbon nanoparticles comprise elements from at least two groups, preferably at least three groups, and more preferably four groups of Group IIIA, Group IVB, Group VIII and Group IB; preferably, the non-carbon nanoparticles comprise elements of Group IIIA, Group VIII and Group IB and optionally Group IVB.

7. The carbon-carbon composite material according to claim 6, **characterized in that** the carbon-carbon composite material, in addition to carbon element, further comprises copper element, iron element, aluminum element and optionally a Group IVB element, wherein the Group IVB element is preferably titanium and/or zirconium;
preferably, the carbon-carbon composite material comprises 40-95 wt.%, preferably 50-90 wt.%, and more preferably 60-71 wt.% of carbon element; 1-15 wt.%, preferably 5-9.5 wt.%, and more preferably 6.8-9 wt.% of copper element; 0.5-10 wt.%, preferably 1-7.7 wt.%, and more preferably 4.1-6 wt.% of iron element; 0.1-5 wt.%, preferably 0.1-2.5 wt.%, and more preferably 2.2-4.1 wt.% of aluminum element; and 0-1 wt.%, preferably 0.05-0.5 wt.%, and more preferably 0.2-1.2 wt.% of a Group IVB metal element.

8. The carbon-carbon composite material according to claim 1 or 2, **characterized in that** the non-carbon nanoparticles comprise elements from at least two groups, preferably at least three groups, and more preferably four groups of Group IIA, Group IVA, Group IIB, Group IVB, and Group VIII;
preferably, the non-carbon nanoparticles comprise elements of Group IIA, Group IVA, Group IVB, optionally Group VIII and optionally Group IIB.

9. The carbon-carbon composite material according to claim 8, **characterized in that** the carbon-carbon composite material, in addition to carbon element, further comprises silicon element, zirconium element, magnesium element, optionally a Group VIII element and optionally a Group IIB element, wherein the Group VIII element is preferably nickel and/or cobalt, more preferably nickel, and the Group IIB element is preferably zinc;
preferably, the carbon-carbon composite material comprises 40-90 wt.%, preferably 50-83 wt.%, and more preferably 55-74 wt.% of carbon element; 1-10 wt.%, preferably 3-10 wt.%, and more preferably 6-9.3 wt.% of silicon element; 1-10 wt.%, preferably 2.2-8 wt.%, and more preferably 5-7.2 wt.% of zirconium element; 0.5-5 wt.%, preferably 1-4.5 wt.%, and more preferably 1.3-3 wt.% of magnesium element; and 0-1 wt.%, preferably 0.2-1 wt.%, and more preferably 0.3-0.8 wt.% of a Group VIII element.

10. The carbon-carbon composite material according to claim 1 or 2, **characterized in that** the non-carbon nanoparticles comprise elements from at least two groups, preferably at least three groups, more preferably at least four groups, and even more preferably five groups of Group IIA, Group IIIA, Group IVA, Group VA and Group VIII;
preferably, the non-carbon nanoparticles comprise elements of Group IIIA, Group IVA, Group VA, Group VIII and optionally Group IIA.

11. The carbon-carbon composite material according to claim 10, **characterized in that** the carbon-carbon composite material, in addition to carbon element, further comprises iron element, aluminum element, phosphorus element, lead element, cobalt element, optionally a Group IIA element and optionally indium element, wherein the Group IIA element is selected from one or more of calcium, strontium and barium, preferably calcium;
preferably, the carbon-carbon composite material comprises 40-95 wt.%, preferably 50-90 wt.%, and more preferably 56-80 wt.% of carbon element; 0.5-10 wt.%, preferably 3-9 wt.%, and more preferably 5-8 wt.% of iron element; 0.5-10 wt.%, preferably 3.2-8 wt.%, and more preferably 4-7.2 wt.% of aluminum element; 0.2-5 wt.%, preferably 0.8-4.7 wt.%, and more preferably 1-3.5 wt.% of phosphorus element; 0.1-5 wt.%, preferably 0.2-4.4 wt.%, and more preferably 1-3.5 wt.% of lead element; 0.2-5 wt.%, preferably 0.5-3.5 wt.%, and more preferably 0.6-4.6 wt.% of cobalt element; 0-1 wt.%, preferably 0.1-0.9 wt.%, and more preferably 0.2-0.8 wt.% of a Group IIA element; and 0-1 wt.%, preferably 0.1-0.9 wt.%, and more preferably 0.2-0.8 wt.% of indium element.

12. The carbon-carbon composite material according to any one of claims 1 to 11, **characterized in that** in the Raman spectrum of the carbon-carbon composite material, the intensity ratio of the D band at 1350±2 cm⁻¹ to the G band at 1580±2 cm⁻¹ is (0.07-0.3) : 1; preferably, in the Raman spectrum of the carbon-carbon composite material, the intensity ratio of the 2D band at 2699±2 cm⁻¹ to the G band at 1580±2 cm⁻¹ is (0.2-1) : 1, preferably (0.2-0.9) : 1.

13. The carbon-carbon composite material according to any one of claims 1-12, **characterized in that** the carbon fiber has a diameter ranging from 4 µm to 8 µm, preferably from 4.5 µm to 7.5 µm; and/or
the carbon fiber has a length ranging from 2 mm to 10 mm, preferably from 3 mm to 9 mm; and/or
the ratio of the total thickness of the plurality of graphitized lamellae to the diameter of the carbon fiber is in a range of (1-100) : 1, preferably (5-100) : 1, and more preferably (9-100) : 1; and/or
the carbon-carbon composite material has a diameter ranging from 0.02 mm to 1 mm, preferably from 0.05 mm to 1 mm, and more preferably from 0.1 mm to 0.3 mm; and/or the carbon-carbon composite material has a length ranging from 2 mm to 10 mm, preferably from 3 mm to 9 mm; and/or
the carbon-carbon composite material further comprises carbon particles; preferably, the carbon particles are present on the surface of the outermost graphitized lamella; more preferably, the carbon particle has a particle size ranging from 0.02 mm to 2.00 mm; and/or the carbon-carbon composite material is in a straight shape and/or a curved shape; preferably, at least a portion of the surface of the carbon-carbon composite material has a bamboo-like shape and/or a protruding shape.

14. A process for preparing a carbon-carbon composite material, **characterized in that** the process comprises: reacting a carbon fiber, a carbon source, and a non-carbon element source at a temperature ranging from 1500°C to 3500°C, preferably from 1500°C to 3000°C, and more preferably from 1500°C to 2800°C, under an inert atmosphere,
preferably, the volumetric flow of the inert atmosphere ranges from 20 to 1800 mL/min, preferably from 50 to 500 mL/min, and more preferably from 100 to 300 mL/min; and/or preferably, the flow rate of the inert atmosphere (i.e., the ratio of the volumetric flow to the internal volume of the reactor) ranges from 0.35 to 32 h⁻¹, preferably from 0.89 to 8.9 h⁻¹, and more preferably from 1.78 to 5.3 h⁻¹; and/or
preferably, the ratio of the volumetric flow of the inert atmosphere to the total weight of the carbon fiber, the carbon source and the non-carbon element source ranges from 0.04 to 3.6 L/(g·h), preferably from 0.1 to 1 L/(g·h), and more preferably from 0.2 to 0.6 L/(g·h); and/or preferably, the reaction time ranges from 12 to 720 hours, preferably from 24 to 120 hours; and/or
preferably, the carbon fiber is a chopped carbon fiber; and/or
preferably, the process is used for preparing the carbon-carbon composite material according to any one of claims 1-13.

15. The process according to claim 14, **characterized in that** the carbon source is a carbonized resin and/or graphite, wherein the graphite is preferably amorphous graphite; and/or
the carbon fiber has a diameter ranging from 4 µm to 8 µm, preferably from 4.5 µm to 7.5 µm; and/or
the carbon fiber has a length ranging from 2 mm to 10 mm, preferably from 3 mm to 9 mm; and/or
the carbon fiber has a carbon content ranging from 85 wt.% to 95 wt.%; and/or
the carbon fiber has a specification ranging from 12 K to 320 K, preferably from 12 K to 48 K.

16. The process according to claim 14 or 15, **characterized in that** the weight ratio of the non-carbon element source, the carbon source, and the carbon fiber is in a range of (20-100) : (30-200) : 1, preferably (30-70) : (50-150) : 1;
preferably, the non-carbon element source comprises a Group IA element source, a Group VB element source, a Group VIB element source, and a Group VIII element source, preferably wherein the weight ratio of the Group IA element source, the Group VB element source, the Group VIB element source, and the Group VIII element source is in a range of (50-500) : 1 : (3-10) : (30-350);
more preferably, the non-carbon element source comprises a sodium source, a potassium source, a nickel source, a lithium source, a platinum source, an iron source, a chromium source, and a vanadium source, preferably wherein the weight ratio of the sodium source, the potassium source, the nickel source, the lithium source, the platinum source, the iron source, the chromium source, and the vanadium source is in a range of (20-180) : (20-180) : (20-150) : (10-100) : (10-100) : (5-80) : (3-10) : 1;
even more preferably, the sodium source is selected from one or more of Na₂CO₃, NaHCO₃, NaNO₃, NaCl and NaF, and/or
the potassium source is selected from one or more of KCl, K₂CO₃, KF and KOH, and/or
the nickel source is selected from one or more of NiO, Ni(OH)₂, NiF₂ and NiCl₂, and/or
the lithium source is selected from one or more of LiF, Li₂O, LiOH and LiCl, and/or
the platinum source is selected from one or more of PtO, PtO₂ and Pt(OH)₂, and/or
the iron source is selected from one or more of FeO, Fe₂O₃, Fe₃O₄, Fe(OH)₂, Fe(OH)₃, FeCl₂, FeCl₃ and FePO₄, and/or
the chromium source is selected from one or more of CrO₃, Li₂CrO₄, K₂CrO₄ and BaCrO₄, and/or
the vanadium source is selected from one or more of VO, V₂O₃, VO₂ and V₂O₅.

17. The process according to claim 14 or 15, **characterized in that** the weight ratio of the non-carbon element source, the carbon source, and the carbon fiber is in a range of (20-100) : (30-200) : 1, preferably (30-70) : (50-150) : 1;
preferably, the non-carbon element source comprises a copper source, an iron source, an aluminum source, and optionally a Group IVB element source, wherein the Group IVB element source is a titanium source and/or a zirconium source;
more preferably, the weight ratio of the copper source, the iron source, the aluminum source, and the Group IVB element source is in a range of (10-100) : (5-10) : 1 : (0-50);
even more preferably, the copper source is selected from one or more of CuSO₄, CuO, CuCl₂ and Cu(OH)₂, and/or
the iron source is selected from one or more of FeO, Fe₂O₃, Fe₃O₄, Fe(OH)₂, Fe(OH)₃, FeCl₂, FeCl₃ and FePO₄, and/or
the aluminum source is selected from one or more of Al₂O₃, AlCl₃, Al₂(SO₄)₃, Al(OH)₃ and AlPO₄, and/or
the titanium source is selected from one or more of TiF₄, TiF₃, TiCl₄, TiSO₄ and TiO₂.

18. The process according to claim 14 or 15, **characterized in that** the weight ratio of the non-carbon element source, the carbon source, and the carbon fiber is in a range of (20-100) : (40-200) : 1, preferably (30-70) : (50-150) : 1;
preferably, the non-carbon element source comprises a silicon source, a zirconium source, a magnesium source, optionally a Group VIII element and optionally a Group IIB element, wherein the Group VIII element is preferably nickel and/or cobalt, and more preferably nickel, and the Group IIB element is zinc;
more preferably, the weight ratio of the silicon source, the zirconium source, the magnesium source, the Group VIII element source, and the zinc source is in a range of (2-20) : (1-10) : 1 : (0-0.5) : (0-0.5);
even more preferably, the silicon source is selected from one or more of SiO₂, Na₂SiO₃, SiF₄ and SiCl₄, and/or
the zirconium source is selected from one or more of Na₂ZrF₆, K₂ZrF₆ and ZrO₂, and/or the magnesium source is selected from one or more of MgSO₄, Mg(OH)₂ and MgCl₂, and/or the nickel source is selected from one or more of NiO, Ni(OH)₂, NiF₂ and NiCl₂.

19. The process according to claim 14 or 15, **characterized in that**, wherein the non-carbon element source comprises a phosphorus source and metal sources comprising an iron source, an aluminum source, a lead source, a cobalt source, optionally a Group IIA element source and optionally an indium source, wherein the Group IIA element is selected from one or more of calcium, strontium and barium, preferably calcium;
preferably, the weight ratio of the metal sources, the phosphorus source, the carbon source, and the carbon fiber is in a range of (20-100) : (3-20) : (30-200) : 1, preferably (30-70) : (5-15) : (50-150) : 1;
more preferably, the weight ratio of the iron source, the aluminum source, the lead source, the cobalt source, the Group IIA element source, and the indium source is in a range of (0.8-4) : (1-4) : (0.3-1.5) : 1 : (0-1) : (0-0.5);
even more preferably, the iron source is selected from one or more of FeO, Fe₂O₃, Fe₃O₄, Fe(OH)₂, Fe(OH)₃, FeCl₂, FeCl₃ and FePO₄, and/or
the aluminum source is selected from one or more of Al₂O₃, AlCl₃, Al₂(SO₄)₃, Al(OH)₃ and AlPO₄, and/or
the lead source is selected from one or more of PbO, Pb₃O₄, PbO₂ and Pb₂O₃, and/or
the cobalt source is selected from one or more of CoO, Co(OH)₂, CoCl₂ and CoSO₄, and/or
the calcium source is selected from one or more of CaCl₂, CaO, Ca(OH)₂ and CaF₂, and/or
the indium source is selected from one or more of In₂O₃, In(OH)₃ and InCl₃, and/or
the phosphorus source is selected from one or more of FePO₄, AlPO₄, Al(PO₃)₃ and Ca₃(PO₄)₂.

20. A carbon-carbon composite material prepared by the process according to any one of claims 14-19.

21. Use of the carbon-carbon composite material according to any one of claims 1-13 or the carbon-carbon composite material according to claim 20 as an electrically conductive corrosion-resistant material and/or an ablation-resistant material and/or a temperature-resistant and sealing material and/or a graphite electrode material.
